# EUROPEAN PATENT APPLICATION

(11) **EP 3 884 805 A1**
(43) Date of publication of application: **29.09.2021**
(21) Application number: 19887073.5
(22) Date of filing: 19.11.2019
(51) Int. Cl.: A45C 5/14, A45C 13/26

(54) **ROD ROTATION APPARATUS**

(30) Priority: 20.11.2018 KR 20180143064; 10.09.2019 KR 20190111827
(71) Applicant: Cho, Wonsang, Asan-si Chungcheongnam-do 31566 (KR)
(72) Inventor: Cho, Wonsang, Asan-si Chungcheongnam-do 31566 (KR)
(74) Representative: Cabinet Chaillot
(86) International application number: PCT/KR2019/015799
(87) International publication number: WO 2020/105999

(57) **Abstract**

An exemplary embodiment of the present invention provides a rod rotation apparatus, comprising: a rod having at least one first helix or at least one second helix coupling portion; a movable member having at least one first helix coupling portion or at least one second helix coupled with the at least one first helix or the at least one second helix coupling portion; a handle extender having a structure of one or more stages, including a first-stage extender; a handle coupled to the top of the handle extender; and a traction member connected between the movable member and the handle or between the movable member and the handle extender.

## Description

### [Technical Field]

The present invention relates to a rod rotation apparatus, and more particularly, to a rod rotation apparatus that can be applied to folding or unfolding a wheel and to a carrier including the apparatus.

### [Background Art]

'WHEELED BAG'(English title of the invention: 'WHEELED LUGGAGE', Republic of Korea Patent Publication No. 10-2015-0084422) and 'WHEEL FOLDING CARRIER' (English title of the invention: 'LUGGAGE WITH FOLDING WHEELS', Republic of Korea Patent Publication No. 10-2017-0035182) were filed by the applicant of the present application. Their pair of rather large wheels can be unfolded or folded as their handles are pulled up or down, respectively, and they are convenient to use even on the ground where the unevenness is rather severe, and they are also convenient for storage as the wheels can be simply folded when not in use.

The "WHEELED LUGGAGE" disclosed in the Republic of Korea Patent Publication No. 10-2015-0084422, however, has the inconvenience that its weight is increased and the rods can be more easily deformed from external impacts because the distance between the vertical sections of the helixes formed on the rods is longer than the vertical movement distance of the handle; therefore, the length of the rods is bound to be long.

Regarding the 'LUGGAGE WITH FOLDING WHEELS' disclosed in the Republic of Korea Patent Publication No. 10-2017-0035182, it is only possible to unfold the pair of wheels forward by pulling the handle up or to fold the pair of wheels by pushing the handle down, but it is not possible to have the pair of wheels folded while the handle is moved upward by a predetermined distance.

Therefore the 'LUGGAGE WITH FOLDING WHEELS' disclosed in the Republic of Korea Patent Publication No. 10-2017-0035182 has the inconvenience that the pair of wheels spread out forward may interfere with walking by being struck by the foot when pushing the carrier while it is upright by holding the handle pulled up and by using the caster wheels attached to the bottom of the carrier body.

### [Disclosure]

### [Technical Problem]

Various embodiments of the present invention provide a rod rotation apparatus and a carrier including the apparatus which not only make it possible for a wheel to unfold when the handle is moved up or to fold when the handle is moved downward but also makes it possible for the wheel to be folded even when the handle is lifted up to a predetermined height in the upward direction.

The objects of the present invention are not limited to the above-mentioned object, and other objects that are not mentioned will be clearly understood by those skilled in the art from the following description.

### [Technical Solution]

A rod rotation apparatus according to the first aspect of the present invention comprises: a rod having at least one first helix or at least one second helix coupling portion; a movable member having at least one first helix coupling portion or at least one second helix coupled with the at least one first helix or the at least one second helix coupling portion; a body to which rod is rotatably coupled by a predetermined angle about its longitudinal direction; a guide member coupled to the body; a handle extender comprising one or more stages, including a first-stage extender movable up and down a predetermined distance along the guide member or along the inside of the guide member; a handle coupled to the top of the handle extender; a traction member connected between the movable member and the handle or between the movable member and the handle extender; and a restoration member coupled to or installed on the body; wherein the distance between the movable member and the first-stage extender may be increased as the first-stage extender is moved upward; the distance between the movable member and the first-stage extender may be decreased as the first-stage extender is moved downward from the upwardly moved state; when the handle is moved upward by a predetermined distance or more, the movable member is moved a predetermined distance by being pulled in the upward or downward direction by the traction member such that the rod is rotated a predetermined angle in one direction about its longitudinal direction; when the handle is moved downward from the upwardly moved state, the movable member is returned downward or upward by the return force of the restoration member or, by gravity and the return force of the restoration member such that the rod is rotated by a predetermined angle about its longitudinal direction in the opposite direction of the one direction.

A first direction-changing member is coupled to or installed on the body; the traction member may be moved a predetermined distance via the first direction-changing member when the movable member is moved by being pulled a predetermined distance downward by the traction member or when the movable member is returned upward by the return force of the restoration member.

The restoration member may be an elastic member or a material positioned inside a cylinder to which a piston is coupled.

A rod rotation apparatus according to the second aspect of the present invention comprises: a rod having at least one first helix or at least one second helix coupling portion; a movable member having at least one first helix coupling portion or at least one second helix coupled with the at least one first helix or the at least one second helix coupling portion; a body to which the rod is rotatably coupled by a predetermined angle about its longitudinal direction; a guide member coupled to the body; a handle extender comprising one or more stages, including a first-stage extender movable up and down a predetermined distance along the guide member or along the inside of the guide member; a handle coupled to the top of the handle extender; and a traction member connected between the movable member and the handle or between the movable member and the handle extender; wherein the rod rotates by a predetermined angle in one direction or in the opposite direction of the one direction about the longitudinal direction of the rod as the movable member is moved upward or downward; the distance between the movable member and the first-stage extender may be increased as the first-stage extender is moved upward; the distance between the movable member and the first-stage extender may be decreased as the first-stage extender is moved downward from the upwardly moved state; when the handle is moved a predetermined distance or more in the upward direction, the movable member is pulled upward or downward by a predetermined distance by the traction member; when the handle is moved downward from the upwardly moved state, the distance between the top of the traction member and the movable member may be decreased or the distance between the top of the traction member and the bottom of the first-stage extender may be increased.

A traction member housing is attached to the movable member; the top of the traction member is connected to the handle or the handle extender; when the handle is moved downward from the upwardly moved state, the distance between the top of the traction member and the movable member may be decreased, and the lower part of the traction member can be rewound a predetermined length within the traction member housing.

An upper structure is coupled to the movable member; a traction member retracting spring is coupled to or installed on the body; the top of the traction member is connected to the handle or the handle extender; when the handle is moved downward from the upwardly moved state, the distance between the top of the traction member and the movable member is decreased, and a part or one side of the traction member may be moved a predetermined distance by the traction member retracting spring via the upper structure.

The bottom of the traction member is connected to the movable member, and the top of the traction member is connected to the handle; when the handle is moved downward from the upwardly moved state, the distance between the top of the traction member and the bottom of the traction member may be decreased.

(The movable member and the first-stage extender may be formed separately from each other.)

(The traction member may be folded in two or more stages including a first-stage member and a second-stage member.)

The handle extender is formed in one stage including the first-stage extender; a height adjustment protrusion housing with a height adjustment protrusion housing passage is attached to the first-stage extender; the traction member is provided with a traction member upper protrusion; when the handle is moved downward from the upwardly moved state, the inside of the height adjustment protrusion housing passage is moved downward along the traction member, and the distance between the top of the traction member and the bottom of the first-stage extender may increase such that the distance between the traction member upper protrusion and the height adjustment protrusion housing may be increased.

(A height adjustment protrusion may be coupled to the height adjustment protrusion housing attached to the first-stage extender.)

(A height adjustment protrusion moving button may be further coupled to the height adjustment protrusion housing attached to the first-stage extender.)

A restoration member is coupled to or installed on the body; when the handle is moved upward a predetermined distance or more, the movable member is moved by being pulled a predetermined distance upward by the traction member such that the rod is rotated by a predetermined angle in one direction about its longitudinal direction; when the handle is moved downward from the upwardly moved state, the movable member is returned downward by the return force of the restoration member or by gravity and the return force of the restoration member such that the rod may be rotated a predetermined angle in the direction opposite to the one direction about its longitudinal direction.

(The restoration member may be an elastic member or a material positioned inside a cylinder to which a piston is coupled.)

A restoration member and a first direction-changing member are coupled to or installed on the body;
when the handle is moved upward a predetermined distance or more, the movable member is moved by being pulled a predetermined distance downward via the first direction-changing member by the traction member such that the rod is rotated a predetermined angle in one direction about its longitudinal direction; when the handle is moved downward from the upwardly moved state, the movable member is returned upward via the first direction-changing member by the return force of the restoration member such that the rod is rotated a predetermined angle in the direction opposite to the one direction about its longitudinal direction. (The restoration member may be an elastic member or a material positioned inside a cylinder to which a piston is coupled.)

A rod rotation apparatus according to the third aspect of the present invention comprises: a rod having at least one first helix or at least one second helix coupling portion; a movable member having at least one first helix coupling portion or at least one second helix coupled with the at least one first helix or the at least one second helix coupling portion; a handle extender comprising one or more stages, including a first-stage extender to which a height adjustment protrusion housing with a height adjustment protrusion housing passage is attached; and a traction member that can pull the movable member a predetermined distance in a predetermined direction; wherein the traction member may be connected between the movable member and the handle extender through the height adjustment protrusion housing passage.

The traction member may move a predetermined distance through the height adjustment protrusion housing passage, or the inside of the height adjustment protrusion housing passage may move a predetermined distance along the traction member.

The handle extender includes a second-stage extender, and the second-stage extender is positioned on the first-stage extender such that the first-stage extender and the second-stage extender are telescopically connected and thus the handle extender is foldable in two stages; the traction member may be connected between the movable member and the second-stage extender through the height adjustment protrusion housing passageway formed in the height adjustment protrusion housing attached to the first-stage extender and through the inside of the first-stage extender.

The handle extender includes a second-stage extender to which a height adjustment protrusion housing with a height adjustment protrusion housing passage is attached; the second-stage extender is positioned on the first-stage extender, and the first-stage extender and the second-stage extender are telescopically connected such that the handle extender is foldable in two stages; the traction member is connected between the movable member and the second-stage extender through the height adjustment protrusion housing passageway formed in the height adjustment protrusion housing attached to the first-stage extender and through the height adjustment protrusion housing passageway formed in the height adjustment protrusion housing attached to the second-stage extender.

A height adjustment protrusion may be coupled to the height adjustment protrusion housing attached to the first-stage extender.

A height adjustment protrusion and a height adjustment protrusion moving button is further coupled to the height adjustment protrusion housing attached to the first-stage extender.

A rod rotation apparatus according to the fourth aspect of the present invention comprises: a rod having at least one first helix or at least one second helix coupling portion; a movable member having at least one first helix coupling portion or at least one second helix coupled with the at least one first helix or the at least one second helix coupling portion; a handle extender comprising first-stage extender and second-stage extender; and a traction member connected between the movable member and the handle extender to pull the movable member by a predetermined distance in a predetermined direction; wherein the second-stage extender is positioned on the first-stage extender such that the first-stage extender and the second-stage extender are telescopically connected such that the handle extender is foldable in two stages; and the traction member may be connected between the movable member and the second-stage extender through the inside of the first-stage extender.

The rod rotation apparatus according to the first aspect, the second aspect, the third aspect, or the fourth aspect of the present invention, wherein when the rod is rotated by a predetermined angle in one direction about its longitudinal direction or when rotated by a predetermined angle in the opposite direction of the one direction as the movable member is moved upward or downward, each rotation angle may be 80 to 100 degrees.

The rod rotation apparatus according to the first aspect, the second aspect, the third aspect, or the fourth aspect of the present invention, wherein at least one wheel may be connected to the rod.

The rod rotation apparatus according to the first aspect or the second aspect of the present invention, wherein the body may be any one of a bag, a suitcase, a trunk, a piece of luggage, and a golf bag, or a ledge is coupled to the body so that the body and the ledge may form an uppercase L shape of the English alphabet as a whole.

(A plurality of caster wheels may be attached to the bottom surface of the body.)

The rod rotation apparatus according to the first aspect or the second aspect of the present invention, wherein another rod having at least one first helix or at least one second helix coupling portion is further coupled to the body so as to be rotatable by a predetermined angle about its longitudinal direction, and the other side of the movable member has at least one first helix coupling portion or at least one second helix coupled with the at least one first helix or the at least one second helix formed on the other rod, and the rod and the other rod are connected to each other by the movable member, and the rod and the other rod may each be rotated by a predetermined angle about their longitudinal directions as the movable member is moved upward or downward.

The rod rotation apparatus according to the third aspect or the fourth aspect of the present invention further comprises a body, and the rod may be coupled to the body so as to be able to rotate a predetermined angle about its longitudinal direction.

The rod rotation apparatus according to the third aspect or the fourth aspect of the present invention further comprises a body, and the rod is coupled to the body so as to be able to rotate a predetermined angle about its longitudinal direction; and further comprises a guide member coupled to the body, and the first-stage extender is movable up and down a predetermined distance along the guide member or along the inside of the guide member.

The rod rotation apparatus according to the third aspect or the fourth aspect of the present invention further comprises a body, and the rod is coupled to the body so as to be able to rotate a predetermined angle about its longitudinal direction; and further comprises a guide member coupled to the body, and the first-stage extender is movable up and down a predetermined distance along the guide member or along the inside of the guide member.

The body may be any one of a bag, a suitcase, a trunk, a piece of luggage, and a golf bag, or a ledge is coupled to the body so that the body and the ledge may form an uppercase L shape of the English alphabet as a whole. (A plurality of caster wheels may be attached to the bottom surface of the body.)

The rod rotation apparatus according to the third aspect or the fourth aspect of the present invention further comprises a body, and the rod is coupled to the body so as to be able to rotate a predetermined angle about its longitudinal direction; and further comprises a guide member coupled to the body, and the first-stage extender is movable up and down a predetermined distance along the guide member or along the inside of the guide member. Another rod having at least one first helix or at least one second helix coupling portion is further coupled to the body so as to be rotatable by a predetermined angle about its longitudinal direction, and the other side of the movable member has at least one first helix coupling portion or at least one second helix coupled with the at least one first helix or the at least one second helix formed on the other rod, and the rod and the other rod are connected to each other by the movable member, and the rod and the other rod may each be rotated by a predetermined angle about their longitudinal directions as the movable member is moved upward or downward.

The rod rotation apparatus according to the first aspect, the second aspect, the third aspect, or the fourth aspect of the present invention, wherein the first helix and the second helix are formed as grooves or slits or embossed.

### [Advantageous Effects]

According to the present invention, it is possible not only to cause a pair of wheels to be unfolded by moving the handle of a carrier up or to cause the pair of wheels to be folded by moving the handle down, but also to cause the pair of wheels to be folded even when the handle is lifted up to a predetermined height above the upper part of the body.

Therefore, not only may the carrier be pulled by using a pair of wheels that are spread out forward by lifting the handle up high, but also it is possible to effectively prevent the phenomenon that the foot hits the pair of wheels when the carrier is pushed and moved by using a plurality of the caster wheels attached to the bottom of the body while holding the handle by hand with it lifted up to a predetermined height and with the pair of wheels folded and with the carrier upright.

The effects of the present invention are not limited to those mentioned above, and other effects not mentioned can be clearly understood by those skilled in the art from the following description and the accompanying drawings.

### [Description of Drawings]

FIG. 1 is a perspective view of a carrier according to the first embodiment of the present invention.
FIGS. 2 and 3 show operational state diagrams of the carrier of FIG. 1.
FIGS. 4 to 6 are illustrations showing actual uses of the carrier of FIG. 1.
FIG. 7 is a perspective view of a rod rotation apparatus according to the second embodiment of the present invention and a carrier including the apparatus.
FIG. 8 is a perspective view exemplarily showing shapes of movable members that may be included in the carrier of FIG. 7.
FIG. 9 is a perspective view showing a pair of handle extenders included in the carrier of FIG. 7 and a handle coupled thereto.
FIGS. 10 and 11 show operational state diagrams of the carrier of FIG. 7.
FIG. 12 is a perspective view of a rod rotation apparatus according to the third embodiment of the present invention and a carrier including the apparatus.
FIGS. 13 and 14 are operational state diagrams of the carrier of FIG. 12.
FIG. 15 is a view showing the structure of the movable member included in the carrier of FIG. 12.
FIG. 16 is a perspective view showing the structure of a traction member connecting the handle and the movable member included in the carrier shown in FIG. 13.
FIG. 17 is a perspective view of a rod rotation apparatus according to the fourth embodiment of the present invention and a carrier including the apparatus.
FIG. 18 is a perspective view showing the structure of a traction member connecting the movable member and the handle included in the carrier of FIG. 17.
FIGS. 19 and 20 are operational state diagrams of the carrier of FIG. 17.
FIG. 21 is a perspective view of a rod rotation apparatus according to the fifth embodiment of the present invention and a carrier including the apparatus.
FIGS. 22 and 23 are operational state diagrams of the carrier of FIG. 21.
FIG. 24 is a perspective view showing the structure of a traction member connecting the movable member and the handle included in the carrier of FIG. 21.
FIG. 25 is a perspective view of a rod rotation apparatus according to the sixth embodiment of the present invention and a carrier including the apparatus.
FIG. 26 (A) is a perspective view separately showing the traction member housing included in the carrier of FIG. 25 in a somewhat enlarged manner.
FIG. 26 (B) is a perspective view showing a state in which the traction member is pulled out from the traction member housing of FIG. 26A upward by a predetermined length.
FIG. 27 is a partially enlarged view of a state in which the traction member is pulled out of the traction member housing by a length in the carrier of FIG. 30.
FIG. 28 is a view exemplarily showing a state in which a traction member movement preventing portion is formed on the traction member of FIG. 27 and the traction member movement preventing portion is positioned inside the traction member housing.
FIG. 29 is a partially enlarged view of a state in which the lower part of traction member is rewound a predetermined length inside the traction member housing in the carrier of FIG. 31.
FIG. 30 is a perspective view showing the carrier in a state in which a part of the traction member housing is cut and removed from the carrier of FIG. 25.
FIGS. 31 and 32 are operational state diagrams of the carrier of FIG. 30.
FIG. 33 is a perspective view of a rod rotation apparatus according to the seventh embodiment of the present invention and a carrier including the apparatus.
FIG. 34 is a perspective view showing a state in which a pair of guide members are removed and parts of a pair of traction member housings are cut and removed from the carrier of FIG. 33,
FIG. 35 is an operational state diagram of the carrier of FIG. 34
FIG. 36 is a view exemplarily showing a state in which the upper portions of the traction members are connected to the handle extenders, respectively, and the lower parts thereof come out of the bottoms of the guide members through the inside of the guide members by a predetermined length.
FIG. 37 and 38 are operational state diagrams of the carrier of FIG. 33.
FIG. 39 is a perspective view of a rod rotation apparatus according to the eighth embodiment of the present invention and a carrier including the apparatus.
FIG. 40 is a view exemplarily showing a state in which the upper portions of the traction members included in the carrier of FIG. 39 are connected to the second-stage extenders, while the lower parts thereof come out of the first-stage extenders and the guide members downwardly through the inside of the first-stage extenders and the guide members by a predetermined distance.
FIGS. 41 and 42 are operational state diagrams of the carrier of FIG. 39.
FIG. 43 (A) is a somewhat enlarged perspective view of the restoration member housing included in the carrier of FIG. 39 and a plunger protruding downward from the bottom of the restoration member housing by a predetermined length.
FIG. 43 (B) is a view showing a state in which a part of the restoration member housing is cut and removed in FIG. 43 (A), and the restoration member is compressed to a predetermined length within the restoration member housing.
FIG. 43 (C) is a view showing a state in which the plunger is pushed to a predetermined length below the bottom of the restoration member housing as the restoration member is extended in FIG. 43 (B).
FIG. 44 is a perspective view of a rod rotation apparatus according to the ninth embodiment of the present invention and a carrier including the apparatus.
FIG. 45 is a perspective view exemplarily showing height adjustment protrusion housings that may be attached to the handle extenders of the carrier of FIG. 44.
FIG. 46 is a perspective view exemplarily showing the shapes of the traction members included in the carrier of FIG. 44.
FIG. 47 is a perspective view exemplarily showing the state of the height adjustment protrusion housings and the traction members when the handle is moved up as in the case of the carrier of FIG. 44.
FIG. 48 is an operational state diagram of the carrier of FIG. 44.
FIG. 49 is a perspective view exemplarily showing the state of the height adjustment protrusion housings and the traction members when the handle is moved down as in the case of the carrier of FIG. 48.
FIG. 50 is an operational state diagram of the carrier of FIG. 44.
FIG. 51 is a perspective view of a rod rotation apparatus according to the tenth embodiment of the present invention and a carrier including the apparatus.
FIG. 52 is a perspective view of a state in which a pair of guide members are removed from the carrier of FIG. 51.
FIGS. 53 and 54 are operational state diagrams of the carrier of FIG. 51.
FIG. 55 is a perspective view of a rod rotation apparatus according to the eleventh embodiment of the present invention and a carrier including the apparatus.
FIG. 56 is a perspective view exemplarily showing the shape and structure of the traction members included in the carrier of FIG. 55.
FIG. 57 is a perspective view exemplarily showing a state in which the traction members of FIG. 56 are folded a predetermined length.
FIG. 58 shows the upper portions of the traction members in the carrier of FIG. 55 being connected to the second-stage extenders through the insides of the guide members and the first-stage extenders and also shows a somewhat enlarged view of the height adjustment protrusion housings attached to the first-stage extenders and the second-stage extenders.
FIG. 59 is a perspective view exemplarily showing the state of the traction members and the height adjustment protrusion housings when the handle is moved up as in the case of the carrier of FIG. 55.
FIGS. 60 and 61 are operational state diagrams of the carrier of FIG. 55.
FIG. 62 is a perspective view exemplarily showing the state of the traction members and the height adjustment protrusion housings when the handle is moved down as in the case of the carrier of FIG. 61.
FIG. 63 is a perspective view exemplarily showing the appearance of the traction members of different shapes and structures that may be applied instead of the traction members of FIG. 56 in the carrier 2100 of FIG. 55.
FIG. 64 is a perspective view exemplarily showing the traction members of FIG. 63 folded.
FIG. 65 is a perspective view of a rod rotation apparatus according to the twelfth embodiment of the present invention and a carrier including the apparatus.
FIG. 66 is a perspective view exemplarily showing the handle extenders included in the carrier of FIG. 65, and the traction members and the restoration members connected thereto.
FIG. 67 is a perspective view exemplarily showing the shape and the structure of the height adjustment protrusion housings attached to the first-stage extenders of FIG. 66.
FIG. 68 is a perspective view exemplarily showing the traction members included in the carrier of FIG. 65 and the movable members and the restoration members connected to the bottom portion thereof.
FIG. 69 is a perspective view showing a state in which the helix coupling portion guide rails are attached to the body of the carrier of FIG. 65.
FIGS. 70 and 71 are operational state diagrams of the carrier of FIG. 69.
FIG. 72 is a perspective view of a rod rotation apparatus according to the thirteenth embodiment of the present invention and a carrier including the apparatus.
FIGS. 73 and 74 are operational state diagrams of the carrier of FIG. 72.
FIG. 75 is a perspective view of a rod rotation apparatus according to the fourteenth embodiment of the present invention and a carrier including the apparatus.
FIG. 76 is a perspective view illustrating a state in which a pair of wheels are folded toward the center from the carrier of FIG. 75.
FIG. 77 is a perspective view illustrating a handle, handle extenders, guide members, traction members, a movable member, and a restoration member further included in the carrier of FIG. 75.
FIG. 78 is a perspective view illustrating the shape of the movable member included in the carrier of FIG. 77 separately.
FIGS. 79 and FIG. 80 are operational state diagrams of the carrier of FIG. 77.
FIG. 81 is a perspective view of a rod rotation apparatus according to the fifteenth embodiment of the present invention and a carrier including the apparatus.
FIG. 82 is a perspective view illustrating a state in which a pair of wheels are folded toward the center from the carrier of FIG. 81.
FIG. 83 is a perspective view showing separately the appearance of the helix coupling portion tubes included in the rods of the carrier of FIG. 81.
FIG. 84 is a partial cross-sectional view of the helix coupling portion tubes of FIG. 83.
FIG. 85 is a perspective view showing a state in which a movable member is included in the carrier of FIG. 81.
FIG. 86 is a perspective view showing a state in which a handle, handle extenders, guide members, traction members, a movable member, and restoration member are included in the carrier of FIG. 81.
FIGS. 87 and 88 are operational state diagrams of the carrier of FIG. 86.
FIG. 89 is a perspective view of a rod rotation apparatus according to the sixteenth embodiment of the present invention and a carrier including the apparatus.
FIG. 90 and FIG. 91 are operational state diagrams of the carrier of FIG. 89.
FIG. 92 is a perspective view of a rod rotation apparatus according to the seventeenth embodiment of the present invention and a carrier including the apparatus.
FIG. 93 and FIG. 94 are operational state diagrams of the carrier of FIG. 92.
FIG. 95 is a perspective view of a rod rotation apparatus according to the eighteenth embodiment of the present invention and a carrier including the apparatus.
FIG. 96 (A) is a perspective view illustrating the shape and structure of the cylinder included in the carrier of FIG. 95 separately.
FIG. 96 (B) shows a state in which the piston rod protrudes a predetermined length over the top of the cylinder of FIG. 96 (A).
FIG. 96 (C) illustrates a state in which a part of the cylinder of FIG. 96B is cut and removed, and the piston and a part of the piston rod are positioned inside thereof, and the restoration member is positioned under the piston inside the cylinder.
FIG. 97 is an operational state diagram of the carrier of FIG. 95.
FIG. 98 (A) separately shows a state in which the piston rod comes out over the top of the cylinder by a predetermined length in the carrier of FIG. 97.
FIG. 98 (B) shows a state in which a portion of the cylinder is cut off and removed in FIG. 98 (A).
FIG. 99 is an operational state diagram of the carrier of FIG. 95.
FIG. 100 is a perspective view of a rod rotation apparatus according to the nineteenth embodiment of the present invention and a carrier including the apparatus.
FIG. 101 and FIG. 102 are operational state diagrams of the carrier of FIG. 100.
FIG. 103 is a perspective view of a rod rotation apparatus according to the twentieth embodiment of the present invention and a carrier including the apparatus.
FIG. 104 and FIG. 105 are operational state diagrams of the carrier of FIG. 103.
FIG. 106 is a perspective view of a rod rotation apparatus according to the twentyfirst embodiment of the present invention and a carrier including the apparatus.
FIG. 107 and FIG. 108 are operational state diagrams of the carrier of FIG. 106.
FIG. 109 is a perspective view of a rod rotation apparatus according to the twentysecond embodiment of the present invention and a carrier including the apparatus.
FIG. 110 is a perspective view exemplarily showing the shape and structure of the traction members connecting the movable member and the handle included in the carrier of FIG. 109.
FIG. 111 and FIG. 112 are operational state diagrams of the carrier of FIG. 109.
FIG. 113 is a perspective view of a rod rotation apparatus according to the twentythird embodiment of the present invention and a carrier including the apparatus.
FIG. 114 and FIG. 115 are operational state diagrams of the carrier of FIG. 113.
FIG. 116 is a perspective view of a rod rotation apparatus according to the twentyfourth embodiment of the present invention and a carrier including the apparatus.
FIG. 117 and FIG. 118 are operational state diagrams of the carrier of FIG. 116.
FIG. 119 is a perspective view of a rod rotation apparatus according to the twenty fifth embodiment of the present invention and a carrier including the apparatus.
FIG. 120 is a perspective view exemplarily showing the shape and structure of the frame included in the carrier of FIG. 119.
FIG. 121 shows a state in which the rods are coupled to the frame separately.
FIG. 122 (A) shows the shape of a sleeve bracket included in the carrier of FIG. 113 separately, and FIG. 122 (B) shows the shape of a rod included in the carrier of FIG. 119 and a wheel bracket attached thereto separately.
FIG. 123 and FIG. 124 are operational state diagrams of the carrier of FIG.119.
FIGS. 125 to 127 illustrate a state in which the rods, the guide members, and the frame, etc. included in the carrier of FIGS. 119, 123, and 124 are covered by the front of the body.
FIG. 128 is a perspective view of a rod rotation apparatus according to the twenty sixth embodiment of the present invention and a carrier including the apparatus.
FIG. 129 and FIG. 130 are operational state diagrams of the carrier of FIG. 128.
FIGS. 131 to 133 illustrate a state in which the rods, the guide members, and the frame, etc. included in the carrier of FIGS. 128 to 130 are covered by the front of the body.

### [Modes of the Invention]

Various embodiments of the present invention will now be described with reference to the accompanying drawings.

The accompanying drawings are included to provide a further understanding of the invention and are not to be construed as limiting the scope of the invention.

The terminology used herein is for the purpose of describing a particular embodiment or particular embodiments only, and is not intended to limit the invention.

As used herein, the singular forms "a", "an", and "the" are intended to include the plural forms as well, unless the context clearly indicates otherwise.

It will be further understood that the terms "comprises" and/or "comprising," or "includes" and/or "including" or "has" and/or "having" and the like when used herein, specify the presence of stated features, regions, integers, steps, operations, elements, and/or components, but do not preclude the presence or addition of one or more other features, regions, integers, steps, operations, elements, components, and/or groups thereof.

Throughout the specification, "connected" or "coupled" means not only the case where the A member and the B member are directly connected or directly coupled, but also the case where the C member is interposed between the A member and the B member so that the A member and the B member are indirectly connected or indirectly coupled.

Some portions of the drawings are exaggerated rather than normal in order to emphasize or help understand.

The invention is not limited by the relative size or spacing depicted in the accompanying drawings.

Well-known features may be omitted or simplified in order not to obscure the embodiment being described.

Throughout the specification, "a carrier" may refer to any one of, for example, a bag, a piece of luggage, a suitcase, a trunk, a trolley bag, a hand truck, a hand cart, and a golf bag, but the present invention is not limited thereto.

Throughout the specification, the terms "forward", "backward", "upward", "downward", "up", "down", "left", "right", "front", "rear", "top", "bottom" and the like are used more clearly with reference to the drawings. They should not be construed as limiting the scope of the invention.

This invention may, however, be embodied in many different forms and should not be construed as limited to the embodiments set forth herein.

In the description with reference to the accompanying drawings, the same or similar elements are denoted by the same reference numerals and duplicate descriptions thereof may be omitted.

The present invention relates to a rod rotation apparatus, and more particularly, to a rod rotation apparatus that may be applied to folding or unfolding a wheel and to a carrier including the apparatus.

### <First Embodiment

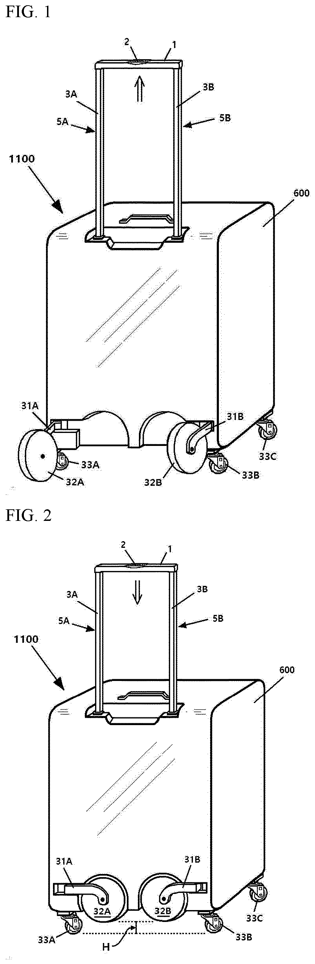

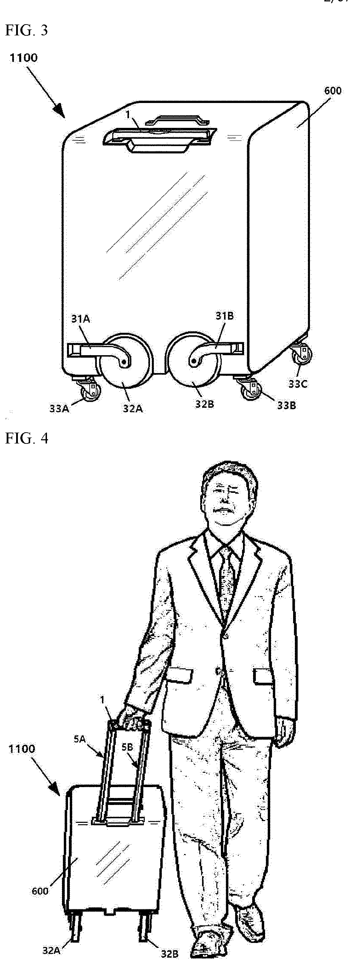

FIG. 1 is a perspective view showing carrier 1100 according to the first embodiment of the present invention, and FIGS. 2 and 3 are operational state diagrams of carrier 1100 of FIG. 1.

FIGS. 4 to 6 are exemplary views illustrating actual use methods of carrier 1100 of FIG. 1.

Carrier 1100 of FIG. 1 shows a state in which handle 1 is moved upward high and a pair of wheel brackets 31A and 31B and a pair of wheels 32A and 32B attached thereto are spread forward from body 600.

The shape of body 600 is illustrative and does not limit the present embodiment. Body 600 may have a storage space.

Body 600 may be, for example, any of a bag, a suitcase, a piece of luggage, a trunk, and a golf bag, but the present invention is not limited thereto.

Handle extender 5A has a single-stage structure including first-stage extender 3A, and similarly, handle extender 5B has single-stage structure including first-stage extender 3B.

A plurality of caster wheels 33A, 33B and 33C may be attached to the bottom of body 600.

Referring to carrier 1100, while holding handle 1 by hand and tilting carrier 1100 forward at an angle so that the pair of wheels 32A and 32B touch the ground, carrier 1100 may be pulled and moved using the pair of wheels 32A and 32B .

The pair of wheels 32A and 32B may have a somewhat large diameter so that wheels 32A and 32B may roll more smoothly even on the ground where bumpiness is rather severe.

FIG. 2 shows a state in which the pair of wheels 32A and 32B are folded toward the center or near body 600 as handle 1 is slightly moved downward from carrier 1100 of FIG.1.

As shown in FIG. 2, there is a predetermined distance H between the bottom of caster wheels 33A and 33B and the bottom of the pair of wheels 32A and 32B and therefore the bottom of the pair of wheels 32A and 32B may not contact the ground when the pair of wheels 32A and 32B are spread forward as shown in FIG. 1 or folded toward the center as shown in FIGS. 2 and 3 and thus the pair of wheels 32A and 32B may be more easily spread forward or folded toward the center.

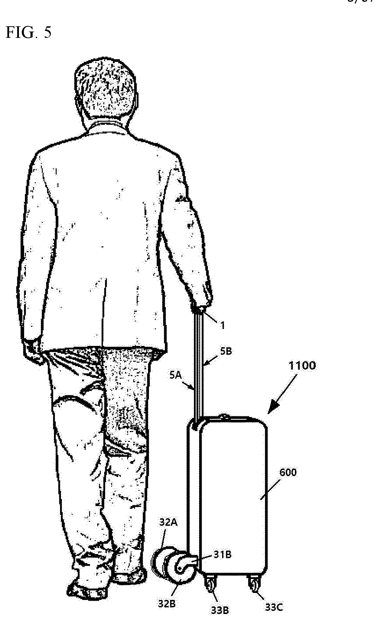

There is an inconvenience that the pair of wheels spread out forward may interfere with walking by being struck by the foot when pushing carrier 1100 by using the plurality of caster wheels 33A, 33B, 33C attached to the bottom of body 600 by holding handle 1 by hand as shown in FIG. 5 with handle 1 moved upward and with the pair of wheels 32A and 32B opened and spread forward and with carrier 1100 upright as shown in FIG. 1.

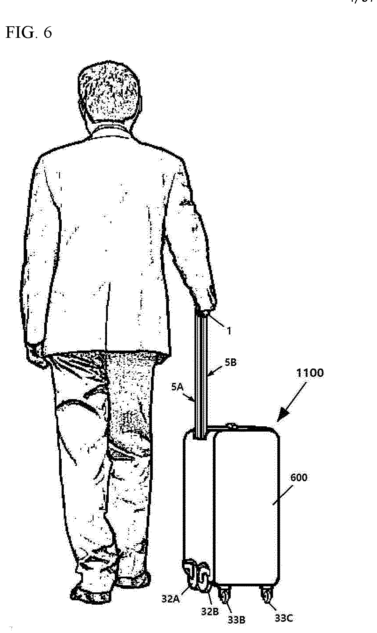

It is convenient that the foot is less likely to hit or be caught by the pair of wheels 32A and 32B when pushing carrier 1100 by holding handle 1 by hand and by using the plurality of caster wheels 33A, 33B, 33C as in FIG. 6 with handle 1 moved to a predetermined height above the upper surface of body 600 and with a pair of wheels 32A, 32B folded toward the center and with carrier 1100 in the upright position as shown in FIG. 2.

FIG.3 shows a state in which handle 1 is in contact with the upper surface of body 600 or is positioned near the upper surface of body 600 as handle 1 is moved downward from carrier 1100 of FIG. 2.

When handle 1 is moved down and the pair of wheels 32A and 32B are folded toward the center as shown in FIG. 3, it is convenient to carry or store carrier 1100.

When handle 1 is moved upward high as shown in FIG. 1 from the state in which handle 1 is moved downward and the pair of wheels 32A and 32B are folded toward the center as shown in FIG. 3, the pair of wheels 32A and 32B are opened and spread forward.

Carrier 1100 includes one or more rods 26A and 26B, a movable member 20, one or more traction members 16A and 16B, and restoration member 30, etc., although not shown in the drawing, like carrier 1200 described below.

### <Second embodiment

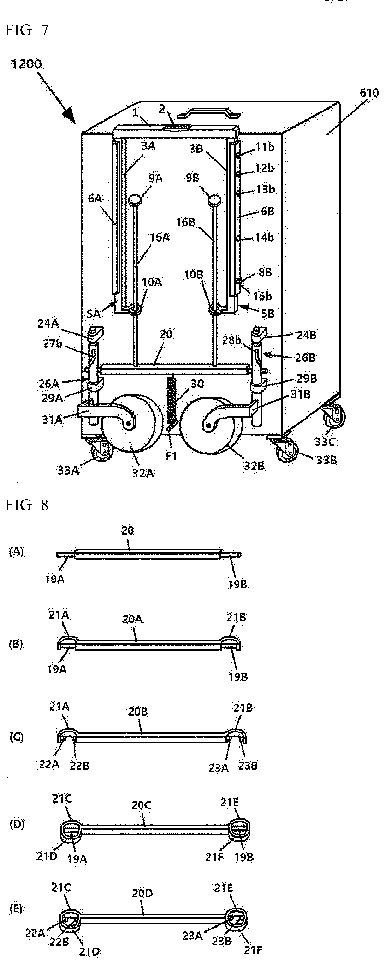

FIG. 7 is a perspective view showing a rod rotation apparatus according to the second embodiment of the present invention and carrier 1200 including the apparatus.

Hereinafter, redundant descriptions of the same matters as those of the carrier 1100 according to the first embodiment of the present invention may be omitted.

As shown in FIGS. 7 to 11, a rod rotation apparatus according to the second embodiment of the present invention includes a rod 26B having at least one first helix 28a, 28b; a movable member 20 having at least one first helix coupling portion 19B coupled with at least one first helix 28a, 28b; a handle extender 5B including first-stage extender 3B; traction member 16B connected between movable member 20 and handle extender 5B, but the above configuration is illustrative only and is not intended to limit the present invention.

As shown in FIG. 7, one or more rods 26A and 26B may be coupled to body 610 to be rotatable by a predetermined angle with their longitudinal directions as the axes of rotation.

Body 610 may be, for example, any one of a bag, a suitcase, a piece of luggage, a trunk, and a golf bag, but the present invention is not limited thereto.

Rod 26A is coupled to body 610 by sleeve bracket 24A and sleeve bracket 29A such that rod 26A may be rotated with its longitudinal direction as the axis of rotation.

Similarly, rod 26B is coupled to body 610 by sleeve bracket 24B and sleeve bracket 29B such that rod 26B may be rotated with its longitudinal direction as the axis of rotation.

Sleeve brackets 24A, 24B, 29A, 29B may include bearings or bushings to facilitate rotation of rods 26A and rods 26B, but the present invention is not limited thereto.

The manner in which rod 26A is coupled to body 610 by sleeve brackets 24A, 29A to be rotatable with its longitudinal direction as the axis of rotation, and similarly, rod 26B is coupled to body 610 by sleeve brackets 24B, 29B to be rotatable with its longitudinal direction as the axis of rotation is merely exemplary, and the present invention is not limited thereto.

When the pair of rods 26A, 26B are coupled to body 610 to be rotatable with their longitudinal directions as the axes of rotation, rods 26A and 26B may be coupled to body 610 in parallel, or substantially parallel to each other with a predetermined distance therebetween, but the present invention is not limited thereto.

When the pair of rods 26A, 26B are coupled to body 610 to be rotatable with their longitudinal directions as the axes of rotation, rod 26A and rod 26B may be coupled to body 610 such that their longitudinal directions are vertical with a predetermined distance left and right, but the present invention is not limited thereto.

Rod 26A is provided with one or more first helixes 27a, 27b of a predetermined length, and similarly rod 26B is also provided with one or more first helixes 28a and 28b of a predetermined length.

One or more first helixes 27a, 27b, 28a, 28b may be formed, for example, as a groove or a slit.

Each of rods 26A and 26B may be, for example, hollowed like a tube, or the entirety or a portion of the remaining part except for the groove of the helix or the slit of the helix may be filled, but the present invention is not limited thereto.

The shapes of rods 26A and 26B are merely exemplary, and the present invention is not limited thereto.

Wheel bracket 31A may be attached to rod 26A, and similarly, wheel bracket 31B may be attached to rod 26B.

Wheel 32A may be connected to rod 26A, and wheel 32B may be connected to rod 26B.

Wheel 32A is rotatably coupled to wheel bracket 31A attached to rod 26A, and thus wheel 32A may be indirectly connected to rod 26A, and similarly, wheel 32B is rotatably coupled to wheel bracket 31B attached to rod 26B, and thus wheel 32B may be indirectly connected to rod 26B.

Although not shown in the drawing, a plurality of wheels may be connected to rod 26A, and similarly, a plurality of wheels may be connected to rod 26B.

(A), (B), (C), (D), and (E) of FIG. 8 exemplarily show movable members 20, 20A, 20B, 20C, 20D; each of them may be coupled to one or more rods 26A, 26B.

The pair of rods 26A and 26B included in carrier 1200 of FIG. 7 are connected by movable member 20 as shown in FIG. 8 (A).

Movable member 20 includes at least one first helix coupling portion 19A, 19B.

In the drawing, first helix coupling portion 19A is formed on the left side of movable member 20, and first helix coupling portion 19B is formed on the right side.

First helix coupling portion 19A and first helix coupling portion 19B are each formed in the shape of a pin having a predetermined length, but this is exemplary and the present invention is not limited thereto.

First helix coupling portion 19A is inserted through first helix 27a and first helix 27b such that first helix coupling portion 19A is slidably coupled with first helixes 27a and 27b.

(Therefore, first helix coupling portion 19A is slidable along first helixes 27a, 27b.)

Similarly, first helix coupling portion 19B is inserted through first helix 28a and first helix 28b such that first helix coupling portion 19B is slidably coupled with first helixes 28a and 28b.

(Therefore, first helix coupling portion 19B is slidable along first helix 28a, 28b.)

The pair of rods 26A and 26B may be connected by movable member 20A of FIG. 8(B), or movable member 20B of FIG. 8(C), or movable member 20C of FIG. 8(D), or movable member 20D of FIG. 8(E), instead of movable member 20 of FIG. 8(A).

Movable member 20A of FIG. 8(B) has first helix coupling portion 19A formed on one side thereof and first helix coupling portion 19B formed on the other side thereof like movable member 20 of FIG. 8(A), but the both ends of first helix coupling portion 19A are connected by support-portion 21A, and similarly, the both ends of first helix coupling portion 19B are connected by support-portion 21B.

Movable member 20B of FIG. 8 (C) includes one or more first helix coupling portions 22A, 22B, 23A, and 23B. One or more first helix coupling portions 22A and 22B are formed on one side of movable member 20 and one or more first helix coupling portions 23A and 23B are formed on the other side.

The pair of first helix coupling portions 22A and 22B are spaced apart from each other by a predetermined distance, and similarly, the pair of first helix coupling portions 23A and 23B are spaced apart from each other by a predetermined distance.

First helix coupling portion 22A and first helix coupling portion 22B are connected by support-portion 21A, and similarly, first helix coupling portion 23A and first helix coupling portion 23B are connected by support-portion 21B.

Referring to movable member 20C of FIG. 8(D), first helix coupling portion 19A is connected by support-portion 21C and support-portion 21D, and similarly, first helix coupling portion 19B is connected by support-portion 21E and support-portion 21F.

Referring to movable member 20D of FIG. 8(E), first helix coupling portion 22A and first helix coupling portion 22B are connected by support-portion 21C and support-portion 21D, and similarly, first helix coupling portion 23A and first helix coupling portion 23B are connected by support-portion 21E and support-portion 21F.

First helix coupling portions 22A, 22B, 23A, and 23B are each formed in a protrusion shape with a short length, but this is exemplary and the present invention is not limited thereto.

First helix coupling portion 22A is inserted into first helix 27b such that first helix coupling portion 22A and first helix 27b are slidably coupled, and similarly, first helix coupling portion 22B is inserted into first helix 27a such that first helix coupling portion 22B and first helix 27a are slidably coupled. (Therefore, first helix coupling portions 22A, 22B may slide along first helix 27b, 27a.)

Similarly, first helix coupling portion 23A is inserted into first helix 28a such that first helix coupling portion 23A and first helix 28a are slidably coupled, and similarly, first helix coupling portion 23B is inserted into first helix 28b such that first helix coupling portion 23B and first helix 28b are slidably engaged. (Therefore, first helix coupling portion 23A, 23B may slide along first helix 28a, 28b.)

First helix coupling portions 19A and 19B move upward and downward or move straight up and down as movable member 20 moves up and down,

Therefore, when movable member 20 moves from top to bottom, rod 26A rotates by a predetermined angle in one direction (counterclockwise in the drawing) with its longitudinal direction as the axis of rotation; on the contrary, when movable member 20 moves from the bottom up, rod 26A is rotated by a predetermined angle in the opposite direction of the one direction (clockwise in the drawing) with its longitudinal direction as the axis of rotation.

Similarly, when movable member 20 moves from top to bottom, rod 26B rotates by a predetermined angle in one direction (clockwise in the drawing) with its longitudinal direction as the axis of rotation; on the contrary, when movable member 20 moves from the bottom up, rod 26B is rotated by a predetermined angle in the opposite direction (counterclockwise in the drawing) with its longitudinal direction as the axis of rotation.

First helix 27a and first helix 28a are formed in opposite directions to each other, and similarly, first helix 27b and first helix 28b are formed in opposite directions to each other, and therefore the pair of rods 26A and 26B rotate in opposite directions to each other by a predetermined angle with their longitudinal directions as the axes of rotation as movable member 20 is moved up and down.

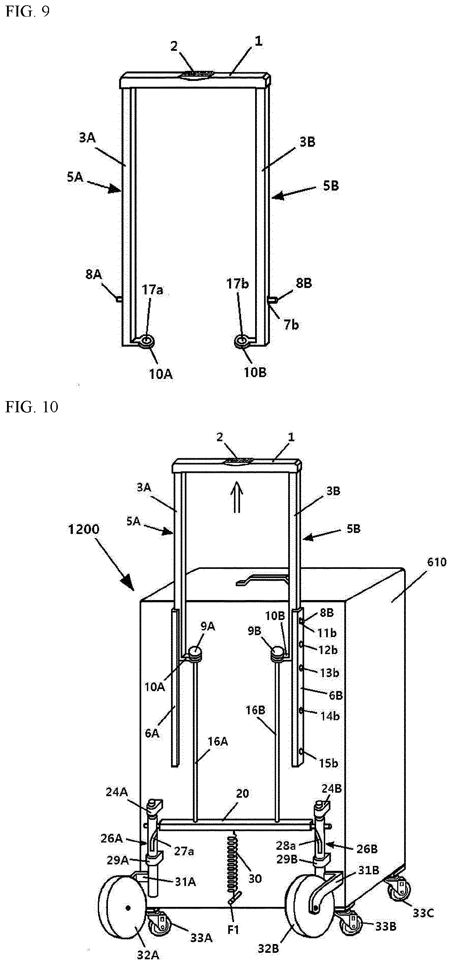

When movable member 20 is moved upward as shown in FIG. 10 from the state in which movable member 20 is moved downward as in carrier 1200 of FIG. 7, the pair of wheels 32A and 32B are opened and spread forward as rod 26A and rod 26B are each rotated by a predetermined angle with their longitudinal directions as the axes of rotation.

When movable member 20 is moved downward as shown in FIG. 7 from the state in which movable member 20 is moved upward as shown in FIG. 10, wheel 32A and wheel 32B are folded toward the center as rods 26A and 26B are rotated by a predetermined angle, so that wheels 32A and 32B are in contact with body 610 or are positioned near body 610.

When the pair of wheels 32A, 32B are opened to spread forward as movable member 20 is moved upward as shown in FIG. 10, or when the pair of wheels 32A, 32B are folded toward the center as movable member 20 is moved downward as shown in FIG. 7, the angle by which the pair of rods 26A and 26B each rotates with its longitudinal direction as the axis of rotation is 90 degrees, or 85 degrees to 95 degrees, or 80 degrees to 100 degrees, but the present invention is not limited thereto.

Instead of wheel bracket 31A and wheel bracket 31B being spread forward or folded toward the center, wheel bracket 31A and wheel bracket 31B may be spread forward or turned backward, although not shown in the drawing.

As described above, when wheel bracket 31A and wheel bracket 31B are spread forward or turned backward, the rotation angle of rod 26A and rod 26B may be 180 degrees, or 175 to 185 degrees, or 170 to 190 degrees, but the present invention is not limited thereto.

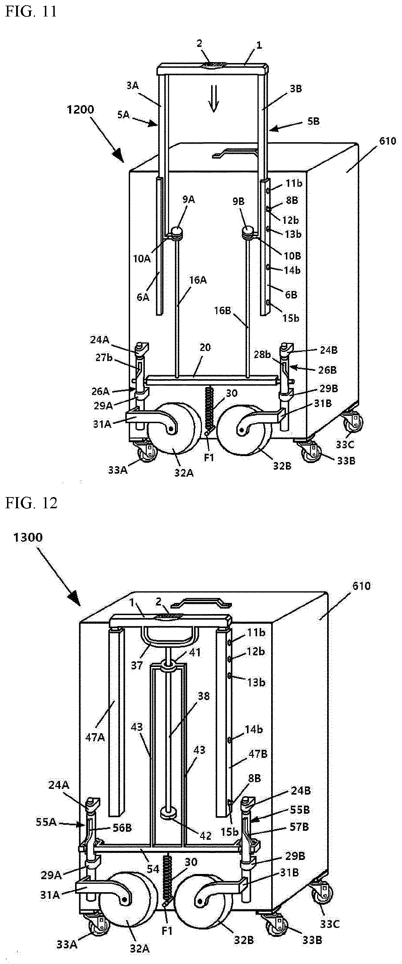

The upper and lower portions of first helixes 27a, 27b, 28a and 28b may be each formed in a straight line of a predetermined length in the vertical direction or in the longitudinal direction of rod 26A and rod 26B, in order to fix rods 26A and 26B so as not to rotate any longer while the pair of wheels 32A and 32B are opened to spread forward as shown in FIG. 10, or the pair of wheels 32A and 32B are folded toward the center as shown in FIGS. 7 and 11, but the present invention is not limited thereto.

(When the upper and lower portions of first helixes 27a, 27b, 28a, 28b are each formed in a straight line by a predetermined length in the vertical direction or in the longitudinal direction of rod 26A and rod 26B, the length of the straight line is preferably 0.5 cm to 3 cm, but the present invention is not limited thereto.)

One or more traction members 16A and 16B are formed extending upward from movable member 20 by a predetermined length, and traction members 16A and 16B include traction member connecting portions 9A and 9B, respectively. Traction member 16A and traction member 16B are each in the shape of a straight, thin, elongated rod of a predetermined length, but this is exemplary and the present invention is not limited thereto.

One or more guide members 6A, 6B may be coupled to body 610.

When the pair of guide members 6A and 6B are coupled to body 610, it is preferable that guide member 6A and guide member 6B are attached and fixed to body 610 in parallel to each other or substantially parallel to each other with a predetermined distance between left and right, but the present invention is not limited thereto.

When the pair of guide members 6A and 6B are coupled to body 610, it is preferable that guide member 6A and guide member 6B are attached and fixed to body 610 in such a way that their lengthwise directions are vertical with a predetermined distance between left and right, but the present invention is not limited thereto.

FIG. 9 shows handle extender 5A, 5B coupled to body 610 of carrier 1200 and handle 1.

Handle extender 5A has a single-stage structure including first-stage extender 3A, and similarly, handle extender 5B has a single-stage structure including first-stage extender 3B.

First-stage extender 3A and first-stage extender 3B may be coupled to body 610. (First-stage extender 3A and first-stage extender 3B may be coupled to body 610 so as to be able to move up and down with a predetermined distance left and right.)

First-stage extenders 3A and 3B are movable up and down by a predetermined distance along guide members 6A and 6B.

Handle 1 may be coupled to one or more handle extender 5A, 5B.

(Preferably, handle 1 is coupled to the top of handle extenders 5A and 5B, but the present invention is not limited thereto.)

Guide member 6B may be provided with one or more height adjustment holes 11b, 12b, 13b, 14b, 15b.

Height adjustment protrusion 8B may be positioned inside one of the plurality of height adjustment holes 11b, 12b, 13b, 14b, and 15b, but the present invention is not limited thereto.

Although not shown in the drawing, guide member 6A may also be provided with one or more height adjustment holes.

As shown in FIG. 9, first-stage extender 3A has first-stage extender connecting portion 10A, and similarly, first-stage extender 3B has first-stage extender connecting portion 10B.

First-stage extender connecting portion 10A is provided with first-stage extender connecting portion hole 17a, and first-stage extender connecting portion 10B is also provided with first-stage extender connecting portion hole 17b.

Height adjustment protrusion 8A may be coupled to first-stage extender 3A, and height adjustment protrusion 8B may also be coupled to first-stage extender 3B.

Handle button 2 may be coupled to handle 1.

By pressing or releasing handle button 2, height adjustment protrusion 8B can be moved a predetermined distance toward the inside and outside of height adjustment protrusion moving hole 7b formed on first-stage extender 3B.

Although not shown in the drawing, first-stage extender 3A also has a height adjustment protrusion moving hole and thus height adjustment protrusion 8A can be moved a predetermined distance toward the inside and outside of height adjustment protrusion moving hole by pressing or releasing handle button 2.

The shape of height adjustment protrusions 8A and 8B is exemplary, and the present invention is not limited thereto.

The manner of operation of height adjustment protrusions 8A and 8B is exemplary, and the present invention is not limited thereto.

The manner in which handle button 2 and height adjustment protrusions 8A and 8B are interlocked is merely an example and not intended to limit the present embodiment.

As shown in FIG. 10, movable member 20 and handle extender 5A may be connected by traction member 16A, and similarly, movable member 20 and handle extender 5B may be connected by traction member 16B.

(Movable member 20 and first-stage extender 3A may be connected by traction member 16A, and similarly, movable member 20 and first-stage extender 3B may be connected by traction member 16B.)

Movable member 20 can be moved or pulled by a predetermined distance in a predetermined direction by one or more traction members 16A and 16B.

(Movable member 20 can be pulled upward by a predetermined distance by one or more traction members 16A, 16B.)

Traction member 16A is positioned in first-stage extender connecting portion hole 17a and thus first-stage extender connecting portion 10A is movable up and down along traction member 16A.

(The inside of connection hole 17a is movable up and down along traction member 16A.)

Similarly, traction member 16B is positioned in first-stage extender connecting portion hole 17b and thus first-stage extender connecting portion 10B is movable up and down along traction member 16B.

(The inside of connection hole 17b is movable up and down along traction member 16b.)

When handle 1 is moved upward as shown in FIG. 10 from the state in which handle 1 is moved downward as in carrier 1200 of FIG.7, traction member 16A and first-stage extender 3A are extended or stretched in the vertical direction or the longitudinal direction thereof, and similarly, traction member 16A and first-stage extender 3A are extended or stretched in the vertical direction or the longitudinal direction thereof, and therefore the distance between the bottom of first-stage extender 3A and the top of traction member 16A gets close, and similarly, the distance between the bottom of first-stage extender 3B and the top of traction member 16B gets close.

When handle 1 is moved upward by a predetermined distance or more as shown in FIG. 10 from the state in which handle 1 is moved downward as in carrier 1200 of FIG. 7, first-stage extender connecting portion 10A and traction member connecting portion 9A are in contact with each other, and similarly, first-stage extender connecting portion 10B and traction member connecting portion 9B are in contact with each other, and movable member 20 is moved upward by a predetermined distance as traction members 16A and 16B are moved a predetermined distance upward.

Restoration member 30 may be coupled to or installed on body 610.

Movable member 20 which is moved by being pulled upward by a predetermined distance by one or more of traction members 16A and 16B may be pulled downward by restoration member 30.

(Movable member 20 which is moved by being pulled upward by a predetermined distance by one or more traction members 16A and 16B may be returned downward by restoration member 30.)

Restoration member 30 may be, for example, an elastic member or a tension spring, but the present invention is not limited thereto.

One side of restoration member 30 may be connected to movable member 20, and the other side may be connected to body 610.

(One side of restoration member 30 is connected to movable member 20 and the other side is connected to connecting protrusion F1, and thus one side of restoration member 30 may be connected to body 610 with connection protrusion F1 interposed therebetween.)

The manner in which the return force of restoration member 30 is applied to movable member 20 is merely exemplary, and the present invention is not limited thereto.

When movable member 20 is moved upward as shown in FIG. 10, restoration member 30, which is a tension spring, is stretched by a predetermined length; but when movable member 20 is moved downward as shown in FIGS. 7 and 11, restoration member 30 is contracted to a predetermined length by its own restoring force.

When handle 1 is moved up as shown in FIG. 10 from the state in which handle 1 is moved downward and the pair of wheels 32A, 32B are folded toward the center and thus wheels 32A and 32B are positioned near or in contact with body 610 as shown in FIG. 7, traction member 16A and handle extender 5A are extended or stretched, and similarly, traction member 16B and handle extender 5B are extended or stretched, and height adjustment protrusion 8B is positioned inside height adjustment hole 11b, and movable member 20 is moved by being pulled upward by a predetermined distance by traction members 16A and 16B, and the pair of wheels 32A and 32B are opened and spread forward as rod 26A and rod 26B are each rotated by a predetermined angle with their longitudinal directions as the axes of rotation.

Carrier 1200 of FIG. 10 can be pulled using the pair of wheels 32A and 32B by holding handle 1 by hand and tilting carrier 1200 slightly forward as shown in FIG. 4.

FIG. 11 exemplarily shows a state in which handle 1 is slightly moved downward from carrier 1200 of FIG. 10, and thus height adjustment protrusion 8B is positioned inside height adjustment hole 12b, and movable member 20 is moved downward by the return force of restoration member 30 or by gravity and the return force of restoration member 30, and the pair of wheels 32A and 32B are folded toward the center as rod 26A and rod 26B are each rotated by a predetermined angle with their longitudinal directions as the axes of rotation.

When movable member 20 can be moved downward as handle 1 is slightly moved downward as in FIG. 11 from the state in which handle 1 is moved upward as in FIG. 10, the distance by which handle 1 is moved downward is preferably 2 to 12 cm, more preferably 4 to 7 cm, but the present invention is not limited thereto.

When height adjustment protrusion 8B is positioned inside second height adjustment hole 12b from above and movable member 20 can be moved downward as in FIG. 11 from the state in which height adjustment protrusion 8B is positioned inside first height adjustment hole 11b from above and movable member 20 is moved upward as shown in FIG. 10, the distance between first height adjustment hole 11b from above and second height adjustment hole 12b from above may preferably be 2 to 12 cm, more preferably 4 to 7 cm, but the present invention is not limited thereto.

When handle 1 is slightly moved downward and movable member 20 is moved downward as in the case of carrier 1200 in FIG. 11, first-stage extender connecting portion 10A and traction member connecting portion 9A come into contact with each other, and similarly, first-stage extender connecting portion 10B and traction member connecting portion 9B come into contact with each other, or although not shown in the drawing, first-stage extender connecting portion 10A and traction member connecting portion 9A may be somewhat separated from each other, and similarly, first-stage extender connecting portion 10B and traction member connecting portion 9B may be somewhat separated from each other.

When handle 1 is moved upward from the upper surface of body 610 to a predetermined height and the pair of wheels 32A and 32B are folded toward the center as shown in FIG. 11, carrier 1200 may be pushed and moved by holding handle 1 and using the plurality of caster wheels 33A, 33B, and 33C in a state where carrier 1200 is standing as shown in FIG. 6.

When handle 1 is moved downward as in FIG. 7 from the state in which handle 1 is moved upward as in carrier 1200 of FIG. 10, the inside of connection hole 17a is moved downward along traction member 16A and thus first-stage extender 3A collapses, and similarly, the inside of connection hole 17b is moved downward along traction member 16B and thus first-stage extender 3B collapses, and height adjustment protrusion 8B is positioned inside height adjustment hole 15b.

(First-stage extender 3A and traction member 16A may be contracted in the longitudinal direction thereof, and similarly, first-stage extender 3B and traction member 16B may be contracted in the longitudinal direction thereof.)

When handle 1 is moved downward as in FIG. 7 from the state in which handle 1 is moved upward as in carrier 1200 of FIG. 10, the inside of connection hole 17a is moved downward along traction member 16A, and the distance between the bottom of first-stage extender 3A and the top of traction member 16A is increased and thus first-stage extender connecting portion 10A and traction member connecting portion 9A are separated, and the distance between first-stage extender connecting portion 10A and traction member connecting portion 9A is increased; and similarly, the inside of connection hole 17b is moved downward along traction member 16B, and the distance between the bottom of first-stage extender 3B and the top of traction member 16B is increased and thus first-stage extender connecting portion 10B and traction member connecting portion 9B are separated, and the distance between first-stage extender connecting portion 10B and traction member connecting portion 9B is increased.

When handle 1 is moved downward as in FIG. 7 from the state in which handle 1 is moved upward as in carrier 1200 of FIG. 10, height adjustment protrusion 8B is positioned inside height adjustment hole 15b, and the distance between the bottom of first-stage extender 3A and the top of traction member 16A is increased and thus first-stage extender connecting portion 10A and traction member connecting portion 9A are separated, and the distance between first-stage extender connecting portion 10A and traction member connecting portion 9A is increased; and similarly, the distance between the bottom of first-stage extender 3B and the top of traction member 16B is increased and thus first-stage extender connecting portion 10B and traction member connecting portion 9B are separated, and the distance between first-stage extender connecting portion 10B and traction member connecting portion 9B is increased.

When handle 1 is moved downward as in FIG. 7 from the state in which handle 1 is moved upward as in FIG. 10, the distance from which first-stage extender connecting portion 10A and traction member connecting portion 9A are separated may be 10 cm or more, 15 cm or more, or 20 cm or more, but the present invention is not limited thereto.

Similarly, when handle 1 is moved downward as in FIG. 7 from the state in which handle 1 is moved upward as in FIG. 10, the distance from which first-stage extender connecting portion 10B and traction member connecting portion 9B are separated may be 10 cm or more, 15 cm or more, or 20 cm or more, but the present invention is not limited thereto.

When handle 1 is moved upward as in FIG. 10 from the state in which handle 1 is moved downward as in carrier 1200 of FIG. 7, the distance between the top of traction member 16A and the bottom of first-stage extender 3A gets close and thus first-stage extender connecting portion 10A and traction member connecting portion 9A come into contact; and similarly, the distance between the top of traction member 16B and the bottom of first-stage extender 3B gets close and thus first-stage extender connecting portion 10B and traction member connecting portion 9B come into contact.

When movable member 20 is moved upward as in FIG. 10 or movable member 20 is moved downward as in FIG. 11, the vertical movement distance of movable member 20 may be preferably 2 to 14 cm, more preferably 4 to 10 cm, but the present invention is not limited thereto.

### <Third embodiment

FIG. 12 is a perspective view showing a rod rotation apparatus according to the third embodiment of the present invention and carrier 1300 including the apparatus.

Hereinafter, description of the content overlapping with the above-described embodiments will be omitted.

As shown in FIGS. 12 to 16, the rod rotation apparatus according to the third embodiment of the present invention includes rod 55B having at least one first helix 57A, 57B; movable member 54 having at least one first helix coupling portion 60A, 60B coupled with at least one first helix 57A, 57B; handle extender 46B including first-stage extender 40B; handle 1 coupled with handle extender 46B; and traction member 45 connected between movable member 54 and handle 1, but the above configuration is illustrative only and is not intended to limit the present invention.

Referring to carrier 1300 of FIG. 12, one or more rods 55A and 55B may be coupled to body 610 to be rotated by a predetermined angle with their longitudinal directions as the axes of rotation.

Rod 55A may be coupled to body 610 by sleeve bracket 24A and sleeve bracket 29A to be rotatable with its longitudinal direction as the axis of rotation.

Similarly, rod 55B may be coupled to body 610 by sleeve bracket 24B and sleeve bracket 29B to be rotatable with its longitudinal direction as the axis of rotation.

The manner in which rod 55A is coupled to body 610 by means of sleeve brackets 24A and 29A, and similarly, rod 55B is coupled to body 610 by means of sleeve brackets 24B and 29B is exemplary, and the present invention is not limited thereto.

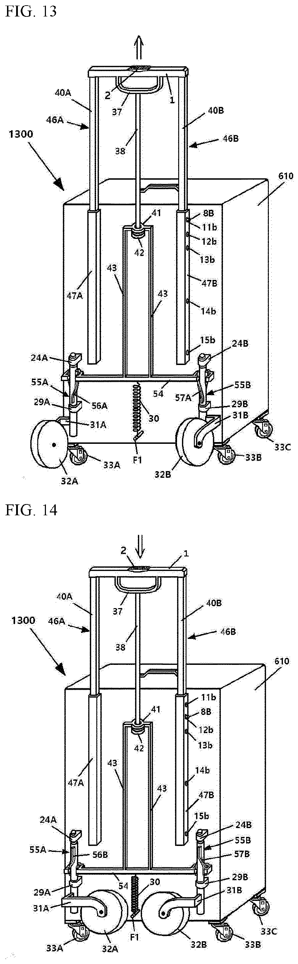

As shown in FIGS. 12 and 13, rod 55A is provided with one or more first helixes 56A, 56B of a predetermined length, and similarly, rod 55B is also provided with one or more first helixes 57A, 57B of a predetermined length.

First helixes 56A, 56B, 57A and 57B are each protruded to form convex portions, or formed in relief.

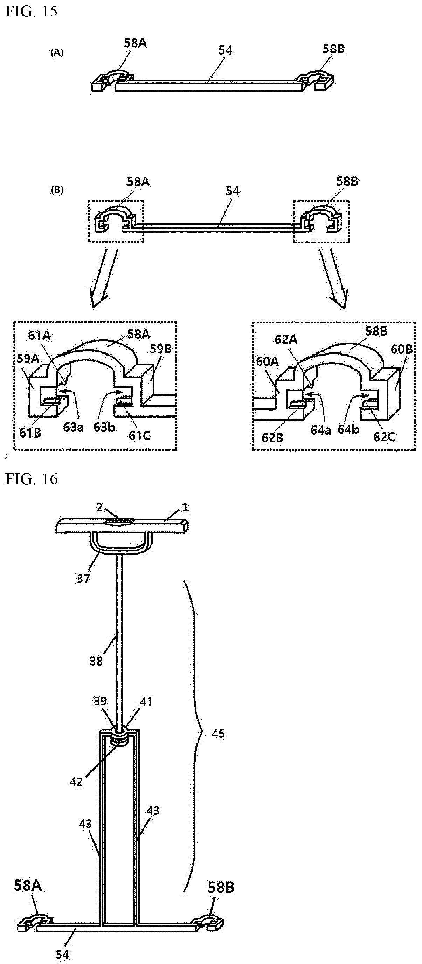

FIG. 15 (A) shows the shape of movable member 54 separately, coupled to one or more rods 55A and 55B in carrier 1300 of FIG. 12.

FIG. 15 (B) shows a state in which movable member 54 is slightly rotated with its longitudinal direction as the axis of rotation and thus support-portions 58A and 58B of movable member 54 of FIG. 15 (A) are directed upward, and also shows a partially enlarged view of the left and right sides of movable member 54.

Movable member 54 includes one or more first helix coupling portions 59A, 59B, 60A, and 60B.

As shown in FIG. 15 (B), one or more first helix coupling portions 59A and 59B are formed on one side (left side in the drawing) of movable member 54, and one or more first helix coupling portions 60A and 60B are formed on the other side (right side in the drawing).

First helix coupling portion 59A is formed with concave portion 63a recessed to the left, and first helix coupling portion 59B is formed with concave portion 63b recessed to the right.

Similarly, first helix coupling portion 60A is formed with concave portion 64a recessed to the left, and first helix coupling portion 60B is formed with concave portion 64b recessed to the right.

As shown in FIG. 15 (B), both side portions 61A, 61B, 61C, 62A and 62B of concave portions 63a, 63b, 64a and 64b of first helix coupling portions 59A, 59B, 60A and 60B, 62C are preferably formed to be convexly curved, but the present invention is not limited thereto.

The both side portions 61A, 61B, 61C, 62A, 62B, and 62C may be convexly curved so that concave portions 63a and 63b and concave portions 64a and 64b may slide more smoothly when sliding along first helixes 56B and 56A and first helixes 57A and 57B respectively.

First helix coupling portion 59A and first helix coupling portion 59B are connected by support-portion 58A, and first helix coupling portion 60A and first helix coupling portion 60B are connected by support-portion 58B.

The convex portion of first helix 56B of rod 55A is correspondingly inserted into concave portion 63a such that first helix coupling portion 59A and first helix 56B are slidably coupled, and the convex portion of first helix 56A of rod 55A is correspondingly inserted into concave portion 63b such that first helix coupling portion 59B and first helix 56A are slidably coupled.

Similarly, the convex portion of first helix 57A of rod 55B is correspondingly inserted into concave portion 64a such that first helix coupling portion 60A and first helix 57A are slidably coupled, and the convex portion of first helix 57B of rod 55B is correspondingly inserted into concave portion 64b such that first helix coupling portion 60B and first helix 57B are slidably coupled.

Rod 55A and rod 55B may be connected by movable member 54 and thus the pair of first helix coupling portions 59A and 59B and the pair of first helix coupling portions 60A and 60B may slide up and down along the pair of first helixes 56B and 56A and the pair of first helixes 57A and 57B respectively as movable member 54 is moved up and down and thus the pair of rods 55A and 55B can be rotated by a predetermined angle with their longitudinal directions as the axes of rotation.

When movable member 54 is moved downward and thus the pair of wheels 32A and 32B are folded toward the center as shown in FIGS. 12, or when movable member 54 is moved upward and thus the pair of wheels 32A and 32B are opened and spread forward as shown in FIG. 13, the angle by which rod 55A and rod 55B rotate with their longitudinal directions as the axes of rotation respectively may be 90 degrees, or 85 degrees to 95 degrees, or 80 degrees to 100 degrees, but the present invention is not limited thereto.

The upper and lower portions of first helixes 56A, 56B, 57A, and 57B may be formed in straight lines of a predetermined length in the vertical direction or in the longitudinal direction of the rods 55A and 55B respectively to fix rods 55A and 55B from being rotated while the pair of wheels 32A and 32B are folded toward the center as shown in FIGS. 12 and 14 or while the pair of wheels 32A and 32B are opened and spread forward as shown in FIG. 13, but the present invention is not limited thereto.

(When the upper and lower portions of first helixes 56A, 56B, 57A, 57B are respectively formed in a straight line by a predetermined length in the vertical direction or in the longitudinal direction of rod 55A and rod 55B, the length of the straight line may be preferably 0.5 cm to 3 cm, but the present invention is not limited thereto.)

One or more guide members 47A and 47B may be coupled to body 610 of carrier 1300.

Guide member 47A and guide member 47B are each formed in a square tube shape in the drawing, but the present invention is not limited thereto.

When the pair of guide members 47A and 47B are coupled to body 610, guide member 47A and guide member 47B are preferably attached and fixed to body 610 parallel or substantially parallel to each other with a predetermined distance between left and right, but the present invention is not limited thereto.

When the pair of guide members 47A and 47B are coupled to body 610, guide member 47A and guide member 47B may be attached to body 610 in such a way that their longitudinal directions are vertical with a predetermined distance between left and right, but the present invention is not limited thereto.

Guide member 47B may be provided with one or more height adjustment holes 11b, 12b, 13b, 14b and 15b.

Although not shown in the drawing, guide member 47A may also be provided with one or more height adjustment holes.

As shown in FIG. 13, one or more handle extender 46A, 46B may be coupled to body 610.

Handle extender 46A has a single-stage structure including first-stage extender 40A, and similarly, handle extender 46B has a single-stage structure including first-stage extender 40B.

First-stage extender 40A and first-stage extender 40B are each a rectangular tube in the drawing, but the present invention is not limited thereto.

First-stage extender 40A and first-stage extender 40B may be coupled to body 610.

(First-stage extender 40A and first-stage extender 40B may be coupled to body 610 to be movable up and down.)

First-stage extender 40A and first-stage extender 40B may be coupled to body 610 with a predetermined distance therebetween from left to right and with their longitudinal directions being vertical, so that they may move up and down, but the present invention is not limited thereto.

Guide members 47A and 47B and first-stage extender 40A and 40B may be connected in a telescopic manner, but the present invention is not limited thereto.

First-stage extender 40A may move up and down a predetermined distance along the inside of guide member 47A, and similarly, first-stage extender 40B may move up and down a predetermined distance along the inside of guide member 47B.

Height adjustment protrusion 8B may be coupled to first-stage extender 40B, and similarly, although not shown in the drawing, height adjustment protrusion may be coupled to first-stage extender 40A.

Handle 1 may be coupled to one or more handle extender 46A, 46B.

(Preferably, handle 1 may be coupled to the top of handle extenders 46A and 46B, but the present invention is not limited thereto.)

When handle 1 is moved upward a predetermined distance or more from carrier 1300 of FIG. 12, movable member 54 and handle 1 may be connected as in carrier 1300 of FIG. 13 by traction member 45 which has a two-stage structure including first-stage member 43 and second-stage member 38 as shown in FIG. 16.

The bottom of traction member 45 is connected to movable member 54, and the top of traction member 45 is connected to handle 1.

(The bottom of first-stage member 43 is connected to movable member 54, and the top of second-stage member 38, that is, a hand guard 37, is connected to handle 1.)

Movable member 54 can be pulled a predetermined distance in a predetermined direction by traction member 45.

(Movable member 54 can be pulled upward by a predetermined distance by traction member 45.)

Second-stage member 38 includes hand guard 37. Hand guard 37 is connected to handle 1.

(Although not shown in the drawing, the upper side of second-stage member 38 may be directly connected to handle 1 without hand guard (37))

First-stage member 43 is formed extending upward from movable member 54 by a predetermined length.

First-stage member 43 includes first-stage member connecting portion 41. Second-stage member 38 includes second-stage member connecting portion 42.

As shown in FIG. 16, first-stage member connecting portion 41 is formed with first-stage member connecting portion hole 39 and thus second-stage member 38 may move up and down through first-stage member connecting portion hole 39.

When handle 1 is moved upward high by a predetermined distance or more as shown in FIG. 13 from the state in which handle 1 is lowered and the pair of wheels 32A and 32B are folded toward the center as shown in FIG. 12, height adjustment protrusion 8B is positioned inside height adjustment hole 11b, and traction member 45 is extended in the longitudinal direction thereof and thus second-stage member connecting portion 42 and first-stage member connecting portion 41 are in contact with each other, and movable member 54 is pulled upward by a predetermined distance as traction member 45 moves a predetermined distance upward, and restoration member 30 is stretched a predetermined length, and the pair of wheels 32A and 32B are opened and spread forward as rod 26A and rod 26B are rotated by a predetermined angle with their longitudinal directions as the axes of rotation respectively.

FIG. 14 exemplarily shows a state in which height adjustment protrusion 8B is positioned inside height adjustment holes 12b as handle 1 is slightly moved downward from carrier 1300 of FIG. 13, and movable member 54 is moved downward by a predetermined distance by the return force of restoration member 30 or by gravity and the return force of restoration member 30, and the pair of wheels 32A and 32B are folded toward the center as rod 26A and rod 26B are each rotated by a predetermined angle with their longitudinal directions as the axes of rotation.

When handle 1 is slightly moved downward and movable member 54 is moved downward as in the case of carrier 1300 of FIG. 14, second-stage member connecting portion 42 and first-stage member connecting portion 41 are in contact with each other or, although not shown in the drawing, second-stage member connecting portion 42 and first-stage member connecting portion 41 may be slightly apart from each other.

When handle 1 is moved downward as shown in FIG. 12 from carrier 1300 of FIG. 14, height adjustment protrusion 8B is positioned inside height adjustment hole 15b, and first-stage member connecting portion 41 and second-stage member connecting portion 42 are separated from each other by a predetermined distance as second-stage member 38 is moved downward, and traction member 45 is contracted in the longitudinal direction thereof or in the vertical direction.

Referring to carrier 1300, the distance between the top of traction member 45 and movable member 54 may be increased or decreased.

(Referring to carrier 1300, the distance between the top of traction member 45 and the bottom of traction member 45 may be increased or decreased.

Referring to carrier 1300, when handle 1 is moved up as shown in FIG. 13 from the state in which handle 1 is moved down as shown in FIG. 12, traction member 45 is extended or stretched and thus the distance between the top of traction member 45 and movable member 54 or the distance between the top of traction member 45 and the bottom of traction member 45 may be increased.

Referring to carrier 1300, when handle 1 is moved downward as shown in FIG. 12 from the state in which handle 1 is moved upward as shown in FIG. 13, traction member 45 is contracted and therefore the distance between the top of traction member 45 and movable member 54 or the distance between the top of traction member 45 and the bottom of traction member 45 may be decreased.

### <Fourth embodiment

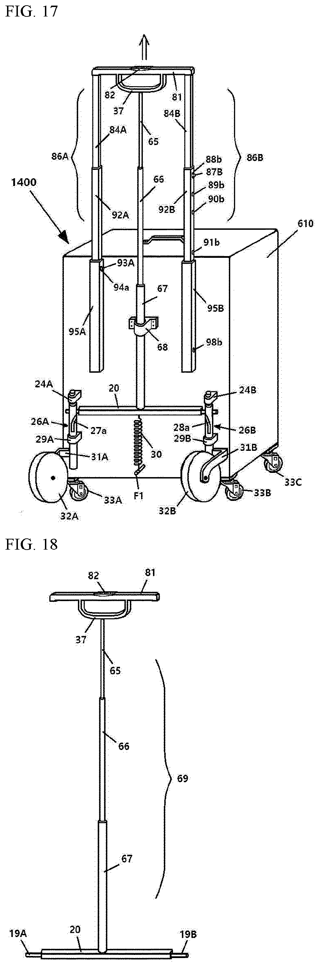

FIG. 17 is a perspective view showing a rod rotation apparatus according to the fourth embodiment of the present invention and carrier 1400 including the apparatus.

Hereinafter, likewise, description of the content overlapping with the above-described embodiments will be omitted.

One or more guide members 95A, 95B may be coupled to body 610.

When a pair of guide members 95A, 95B are coupled to body 610, guide member 95A and guide member 95B may be preferably attached and fixed to body 610 parallel or substantially parallel to each other with a predetermined distance therebetween from left to right, but the present invention is not limited thereto.

When a pair of guide members 95A, 95B are coupled to body 610, guide member 95A and guide member 95B may be preferably attached and fixed to body 610 with a predetermined distance therebetween from left to right and with their longitudinal directions being vertical, but the present invention is not limited thereto.

In the drawing, guide member 95A and guide member 95B are each formed in a tube shape, but the present invention is not limited thereto.

Guide member 95B may be provided with at least one height adjustment hole 98b, and guide member 95A may also be provided with at least one height adjustment hole 94a.

Guide member 95A may also be provided with a height adjustment hole corresponding to height adjustment hole 98b, but is not shown in the drawing.

Similarly, guide member 95B may also be provided with a height adjustment hole corresponding to height adjustment hole 94a, but is not shown in the drawing.

Handle extender 86A includes first-stage extender 92A and second-stage extender 84A thereon, and first-stage extender 92A and second-stage extender 84A are connected in a telescopic manner and thus handle extender 86A has a two-stage structure.

(Although first-stage extender 92A and second-stage extender 84A are connected in a telescopic manner, this is exemplary and the present invention is not limited thereto.)

Similarly, handle extender 86B includes first-stage extender 92B and second-stage extender 84B thereon, and first-stage extender 92B and second-stage extender 84B are connected in a telescopic manner and thus handle extender 86B has a two-stage structure.

(Although first-stage extender 92B and second-stage extender 84B are connected in a telescopic manner, this is exemplary and the present invention is not limited thereto.)

Although not shown in the drawing, the third-stage extender, the fourth stage extender, etc. may be added on second-stage extender 84A such that handle extender 86A may have a structure of three or more stages, and similarly, the third-stage extender, the fourth stage extender, etc. may be added on second-stage extender 84B such that handle extender 86B may have a structure of three or more stages.

In the drawing, first-stage extender 92A, 92B and second-stage extender 84A, 84B are each a square tube, but the present invention is not limited thereto.

First-stage extender 92A and first-stage extender 92B may be coupled to body 610.

(First-stage extender 92A and first-stage extender 92B may be coupled to body 610 to be movable up and down.)

First-stage extender 92A and first-stage extender 92B may be coupled to body 610 with a predetermined distance therebetween from left to right and with their longitudinal directions being vertical such that they may move up and down, but the present invention is not limited thereto.

First-stage extender 92A can move along the inside of guide member 95A by a predetermined distance in the longitudinal direction or the vertical direction, and similarly, first-stage extender 92B can move along the inside of guide member 95B by a predetermined distance in the longitudinal direction or the vertical direction.

Second-stage extender 84A can move along the inside of first-stage extender 92A by a predetermined distance in the longitudinal direction or the vertical direction, and similarly, second-stage extender 84B can move along the inside of first-stage extender 92B by a predetermined distance in the longitudinal direction or the vertical direction.

First-stage extender 92B may be provided with one or more height adjustment holes 88b, 89b, 90b, and 91b.

Although not shown in the drawing, first-stage extender 92A may also be provided with one or more height adjustment holes or height adjustment holes corresponding to height adjustment holes 88b, 89b, 90b, 91b provided on first-stage extender 92B.

Height adjustment protrusion 93A may be coupled to first-stage extender 92A, and similarly, height adjustment protrusion may be coupled to first-stage extender 92B, although not shown in the drawing.

Height adjustment protrusion 87B may be coupled to second-stage extender 84B, and similarly, height adjustment protrusion may be coupled to second-stage extender 84A, although not shown in the drawing.

Handle 81 may be coupled to one or more handle extender 86A, 86B.

Preferably, handle is coupled to the top of handle extenders 86A and 86B, but the present invention is not limited thereto.

(In the drawing, handle 81 is coupled to the top of second-stage extender 84A and the top of second-stage extender 84B.)

Handle button 82 may be coupled to handle 81.

Handle button 82 is interlocked with height adjustment protrusion 87B such that height adjustment protrusion 87B may be moved to the left or the right by a predetermined distance as handle button 82 is pressed or released,

Height adjustment protrusion 93A is interlocked with second-stage extender 84A and therefore height adjustment protrusion 93A may be moved to the left or the right by a predetermined distance as second-stage extender 84A is moved downward or upward along the inside of first-stage extender 92A,

The manner in which handle button 82 is interlocked with height adjustment protrusion 87B is exemplary, and the present invention is not limited thereto.

The manner in which height adjustment protrusion 93A is interlocked with second-stage extender 84A is exemplary, and the present invention is not limited thereto.

Height adjustment protrusion 87B may be positioned inside one of the plurality of height adjustment holes 88b, 89b, 90b, and 91b, but the present invention is not limited thereto.

Movable member 20 and handle 81 are connected by traction member 69 as shown in FIG. 18 such that movable member 20 can be pulled by a predetermined distance in a predetermined direction by traction member 69.

(Movable member 20 can be pulled upward by a predetermined distance by traction member 69.)

The bottom of traction member 69 is connected to movable member 20, and the top of traction member 69 is connected to handle 81.

The bottom of first-stage member 67 is connected to movable member 20, and the top of third-stage member 65, that is, handle guard 37, is connected to handle 81.)

Traction member 69 includes third-stage member 65 having hand guard 37, first-stage member 67 extending upward by a predetermined length from movable member 20, and second-stage member 66 between first-stage member 67 and third-stage member 65.

First-stage member 67, second-stage member 66, and third-stage member 65 are connected in a telescopic manner and thus traction member 69 has a three-stage structure.

In the drawing, first-stage member 67, second-stage member 66, and third-stage member 65 are connected in a telescopic manner, but the present invention is not limited thereto.

The upper side of third-stage member 65 may be directly connected to handle 81 without hand guard 37.

Although not shown in the drawing, the fourth stage member, the fifth stage member, and the like may be added on third-stage member 65 such that traction member 69 may have a structure of four or more stages.

First-stage member 67 is slideable in the longitudinal direction or the vertical direction through sleeve bracket 68 coupled to or installed on body 610.

FIG. 17 exemplarily shows a state in which handle 81 is moved upward, and height adjustment protrusion 87B is positioned inside height adjustment hole 88b, and height adjustment protrusion 93A is positioned inside height adjustment hole 94a, and movable member 20 is pulled upward by a predetermined distance by traction member 69, and the pair of wheels 32A and 32B are opened and spread forward, and restoration member 30 is stretched to a predetermined length.

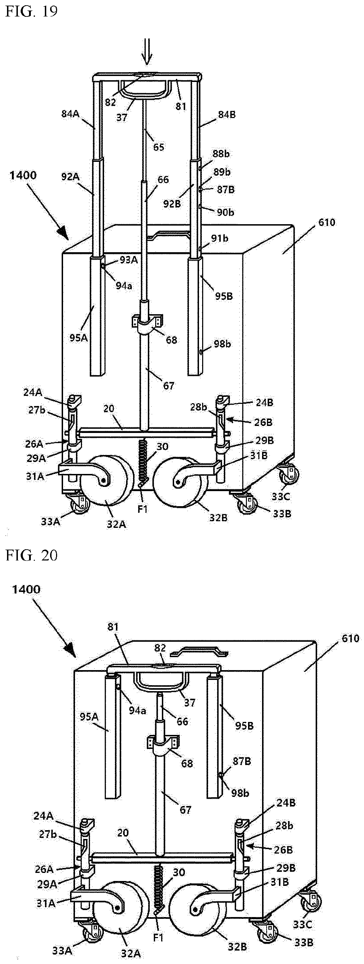

FIG. 19 exemplarily shows a state in which second-stage extender 84A, 84B and third-stage member 65 are slightly moved downward as handle 81 is slightly moved downward from carrier 1400 of FIG. 17 and thus height adjustment protrusion 87B is positioned inside height adjustment holes 89b; second-stage member 66, first-stage member 67, and movable member 20 are moved downward a predetermined distance by the return force of restoration member 30 or by gravity and the return force of restoration member 30 and thus a pair of wheels 32A and 32B are folded toward the center as rod 26A and rod 26B are each rotated by a predetermined angle with their longitudinal directions as the axes of rotation.

When movable member 20 can be moved downward as handle 81 is slightly moved downward as shown in FIG. 19 from the state in which handle 81 is moved upward as shown in FIG. 17, the distance that handle 81 is moved downward may be preferably 2 cm to 12 cm, more preferably 4 cm to 7 cm, but the present invention is not limited thereto.

When height adjustment protrusion 87B is positioned inside second height adjustment hole 89b from above and movable member 20 can be moved downward as in FIG. 19 from the state in which height adjustment protrusion 87B is positioned inside first height adjustment hole 88b from above and movable member 20 is moved upward as in FIG. 17, the distance between the first height adjustment hole 88b from above and second height adjustment hole 89b from above may preferably be 2 cm to 12 cm, more preferably 4 cm to 7 cm, but the present invention is not limited thereto.

FIG. 20 exemplarily shows a state in which handle 81 is moved downward from carrier 1400 of FIG.19 and thus height adjustment protrusion 87B is positioned inside height adjustment hole 98b, and traction member 69 is folded to a predetermined length in the longitudinal direction or the vertical direction.

When height adjustment protrusion 87B is positioned inside height adjustment hole 98b as handle 81 is moved downward as shown in FIG. 20, height adjustment protrusion 87B may be positioned inside height adjustment hole 98b through height adjustment hole 91b, but the present invention is not limited thereto.

When handle 81 is moved upward high as shown in FIG. 17 from carrier 1400 of FIG. 20, movable member 20 is pulled upward by a predetermined distance as traction member 69 which is contracted is stretched in the longitudinal direction or the vertical direction and moved upward by a predetermined distance, and restoration member 30 which is contracted is stretched to a predetermined length, and the pair of wheels 32A and 32B are opened to spread forward as rod 26A and rod 26B are each rotated by a predetermined angle with their longitudinal directions as the axes of rotation.

Referring to carrier 1400, the distance between the top of traction member 69 and movable member 20 may be increased or decreased.

(Referring to carrier 1400, the distance between the top of traction member 69 and the bottom of traction member 69 may be increased or decreased.)

Referring to carrier 1400, when handle 81 is moved upward as shown in FIG. 17 from the state in which handle 81 is moved down as shown in FIG. 20, traction member 69 is extended or stretched and thus the distance between the top of traction member 69 and movable member 20 or the distance between the top of traction member 69 and the bottom of traction member 69 may be increased.

Referring to carrier 1400, when handle 81 is moved downward as shown in FIG. 20 from the state in which handle 81 is moved upward as shown in FIG. 17, traction member 69 is contracted and thus the distance between the top of traction member 69 and movable member 20 or the distance between the top of traction member 69 and the bottom of traction member 69 may be decreased.

### <Fifth Embodiment

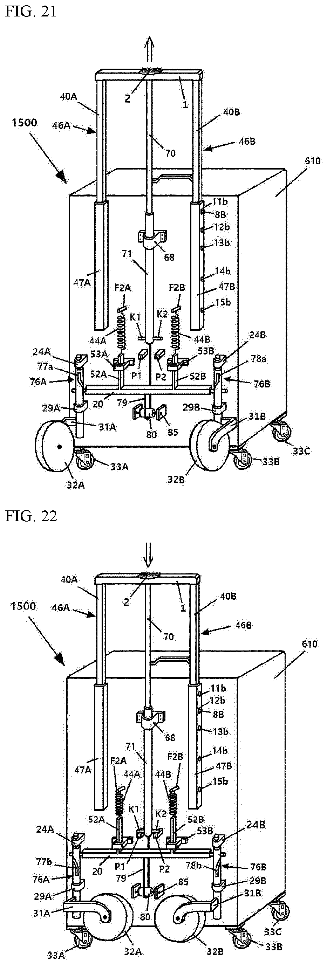

FIG. 21 is a perspective view showing a rod rotation apparatus according to the fifth embodiment of the present invention and carrier 1500 including the apparatus.

Hereinafter, likewise, description of the content overlapping with the above-described embodiments will be omitted.

One or more rods 76A and 76B may be coupled to body 610 of carrier 1500 so as to be rotatable with their longitudinal directions as the axes of rotation by a predetermined angle respectively.

As shown in FIGS. 21 and 22, rod 76A has one or more first helixes 77a, 77b of a predetermined length as a groove or a slit, and similarly, rod 76B has one or more first helixes 78a, 78b of a predetermined length as a groove or a slit.

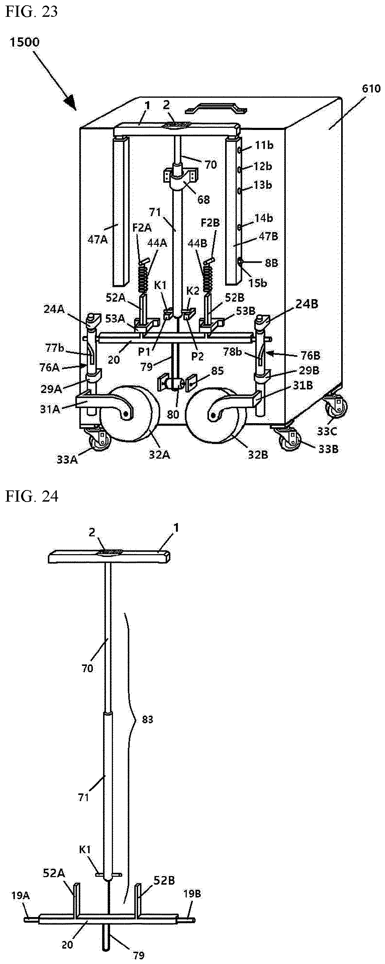

When the pair of wheels 32A, 32B are opened to spread forward as movable member 20 is moved downward as in FIG. 21 or when the pair of wheels 32A, 32B are folded toward the center as movable member 20 is moved upward as shown in FIG. 23, it is preferable that the angle by which the pair of rods 76A and 76B rotate with their longitudinal directions as the axes of rotation respectively is 90 degrees, or 85 degrees to 95 degrees, or 80 degrees to 100 degrees, but the present invention is not limited thereto.

Referring to carrier 1500 of FIG.21, handle 1 and movable member 20 are connected by traction member 83 as shown in FIG. 24

The lower part of traction member 83 is connected to movable member 20, and the top of traction member 83 is connected to handle 1.

Traction member 83 includes second-stage member 70, first-stage member 71, and second direction-changing member 79B.

The top of second-stage member 70 is connected to handle 1, and first-stage member 71 is positioned under second-stage member 70 and thus second-stage member 70 and first-stage member 71 are connected to be a two-stage structure.

(Second-stage member 70 and first-stage member 71 may be connected in a telescopic manner, but the present invention is not limited thereto.)

First-stage member 71 and movable member 20 are connected by second direction-changing member 79.

Second direction-changing member 79 may be, for example, a line of a predetermined length such as a rope or a cable, or may be in the shape of a strip of a predetermined length which is thin and has a predetermined width, but the present invention is not limited thereto.

First-stage member 71 may be provided with one or more first projections K1 and K2.

First-stage member 71 is slidable in the longitudinal direction or in the vertical direction through sleeve bracket 68.

First direction-changing member 80 may be coupled to or installed on body 610.

Traction member 83 is movable a predetermined distance via first direction-changing member 80.

(Second direction-changing member 79 included in traction member 83 is movable a predetermined distance via first direction-changing member 80.)

It is preferable that first direction-changing member 80 is coupled to body 610 to be rotatable with its shaft 85 as a rotation axis for smooth movement of second direction-changing member 79, but the present invention is not limited thereto.

The manner in which first direction-changing member 80 is coupled to or installed on body 610 is exemplary, and the present invention is not limited thereto.

When second direction-changing member 79 moves via first direction-changing member 80, the vertical movement direction of one side and the other side of second direction-changing member 79 are different from each other; that is, when one side moves upward, the other side moves downward, or conversely, when one side moves downward, the other side moves upward.

One or more restoration members 44A, 44B may be coupled to or installed on body 610.

One or more restoration members 44A, 44B can impart a return force in the upward direction to movable member 20 moved downward.

Restoration members 44A and 44B are elastic members or tension springs, but the present invention is not limited thereto.

One end portion of restoration member 44A is connected to movable member 20 with balance bar 52A interposed therebetween, and the other end portion is connected to connection protrusion F2A formed on body 610 and thus the other end portion is indirectly connected to body 610.

Similarly, one end portion of restoration member 44B is connected to movable member 20 with balance bar 52B interposed therebetween, and the other end portion is connected to connection protrusion F2B formed on body 610 and thus the other end portion is indirectly connected to body 610.

The manner in which one end portions of restoration members 44A and 44B are connected to movable member 20 and the other end portions are connected to body 610 is exemplary, and the present invention is not limited thereto.

Restoration members 44A and 44B can pull movable member 20 upward.

(Movable member 20 can be returned upward by restoration members 44A and 44B.)

One or more second projections P1 and P2 may be formed on body 610.

Movable member 20 can be pulled a predetermined distance in a predetermined direction by traction member 83.

(Movable member 20 can be pulled downward by a predetermined distance by traction member 83.)

If handle 1 is moved up as in FIG. 21 from the state in which handle 1 is moved down as in FIG. 23, first-stage member 71 and second-stage member 70 are extended or stretched with each other; conversely, if handle 1 is moved downward as shown in FIG. 23 from the state in which handle 1 is moved upward as shown in FIG. 21, first-stage member 71 and second-stage member 70 are contracted to each other.

When handle 1 is moved up as shown in FIG. 21 from the state in which handle 1 is moved down as shown in FIG. 23, traction member 83 pulls movable member 20 downward by a predetermined distance, and the pair of wheels (32A, 32B) are opened to spread forward as rods 76A and 76B are rotated by a predetermined angle with their longitudinal directions as the axes of rotation, and restoration members 44A and 44B are stretched to a predetermined length.

FIG. 22 exemplarily shows a state in which handle 1 is slightly moved downward from carrier 1500 of FIG. 21, and restoration members 44A, 44B pull up movable member 20 as restoration members 44A, 44B are contracted a predetermined length by their own restoring force, and the pair of wheels 32A and 32B are folded toward the center as each of rods 76A and 76B is rotated by a predetermined angle with their longitudinal directions as the axes of rotation.

FIG. 23 exemplarily shows a state in which handle 1 is moved downward from carrier 1500 of FIG. 22, and second-stage member 70 and first-stage member 71 are contracted to a predetermined length in the longitudinal direction or the vertical direction.

When second-stage member 70 and first-stage member 71 are moved downward, first projections K1 and K2 formed on first-stage member 71 are caught by second projections P1 and P2 formed on body 610 and therefore first-stage member 71 can be prevented from descending further downward.

If necessary, one or more balance bars 52A and 52B may be formed extending upwardly or downwardly from movable member 20 by a predetermined length.

(Balance bars 52A and 52B included in carrier 1500 are formed to extend upward from movable member 20 by a predetermined length.)

Balance bars 52A and 52B can be moved a predetermined distance in the longitudinal direction or the vertical direction.

Balance bars 52A and 52B may slid by a predetermined distance in the longitudinal direction or the vertical direction through the inside of sleeve brackets 53A and 53B coupled to body 610 respectively, and therefore when movable member 20 moves up and down, the left and right balance can be better maintained or the horizontal state can be better maintained, and movable member 20 can be prevented from rotating back and forth by a predetermined angle with its longitudinal direction as the axis of rotation.

Referring to carrier 1500, the distance between the top of traction member 83 and movable member 20 may be increased or decreased.

Referring to carrier 1500, when handle 1 is moved up as shown in FIG. 21 from the state in which handle 1 is moved down as shown in FIG. 23, the distance between the top of traction member 83 and movable member 20 is increased as traction member 83 is extended or stretched; conversely, when handle 1 is moved downward as shown in FIG. 23 from the state in which handle 1 is moved upward as shown in FIG. 21, the distance between the top of traction member 83 and movable member 20 may be decreased as traction member 83 is contracted.

### <Sixth embodiment

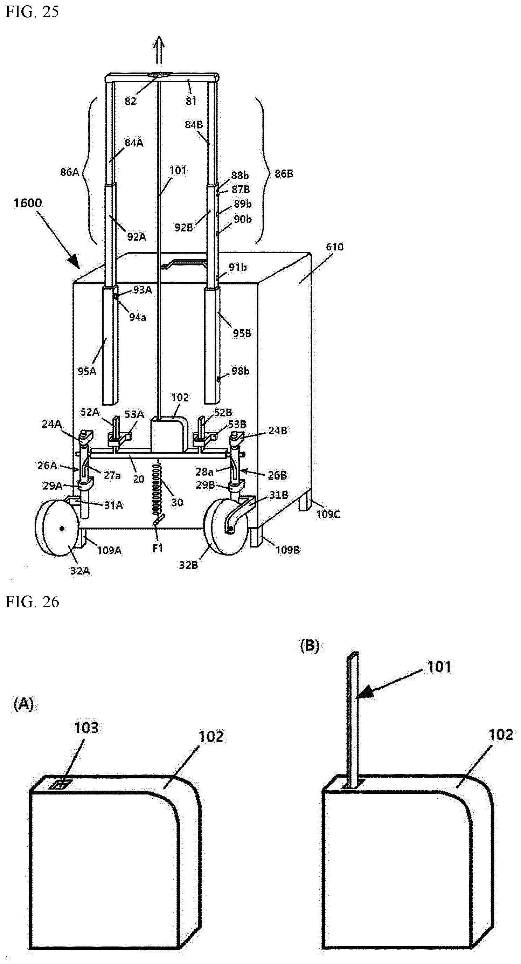

FIG. 25 is a perspective view showing a rod rotation apparatus according to the sixth embodiment of the present invention and carrier 1600 including the apparatus.

Hereinafter, likewise, description of the content overlapping with the above-described embodiments will be omitted.

Referring to carrier 1600 of FIG. 25, traction member 101 is connected between handle 81 and movable member 20.

The top of traction member 101 is connected to handle 81, and the lower portion of traction member 101 is connected to movable member 20 with traction member housing 102 interposed therebetween and thus the lower portion of traction member 101 is indirectly connected to movable member 20.

Movable member 20 may be pulled a predetermined distance in a direction by traction member 101.

(Movable member 20 may be pulled upward by a predetermined distance by traction member 101.)

FIG. 26(A) is a somewhat enlarged view of traction member housing 102 attached to movable member 20 in carrier 1600 of FIG. 25; traction member housing 102 is formed with traction member housing hole 103.

The shape and structure of traction member housing 102 is exemplary, and the present invention is not limited thereto.

As in FIG. 26(B), traction member 101 may be pulled out of traction member housing 102 by a predetermined length through traction member housing hole 103 or may be drawn into traction member housing 102 by a predetermined length through traction member housing hole 103.

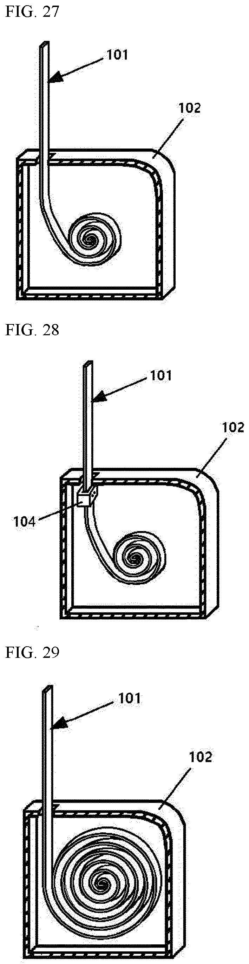

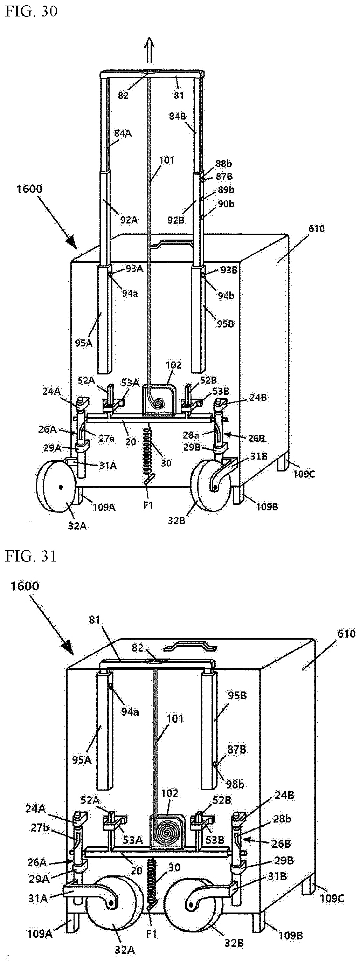

FIG. 27 is a partially enlarged view of a state in which traction member 101 is pulled out of traction member housing 102 by a predetermined length in carrier 1600 of FIG. 30.

FIG. 28 is a view exemplarily showing a state in which traction member 101 is provided with traction member movement preventing portion 104, and traction member movement preventing portion 104 is positioned inside traction member housing 102.

Traction member 101 included in carrier 1600 may be formed with traction member movement preventing portion 104 as shown in FIG. 28 if necessary, but the present invention is not limited thereto.

When traction member 101 is pulled out of traction member housing hole 103, traction member movement preventing portion 104 is caught inside traction member housing 102 and therefore traction member 101 comes out only a predetermined length.

Therefore, traction member movement preventing portion 104 ensures more securely that traction member 101 comes out only by a predetermined length when it comes out of traction member housing hole 103.

FIG. 29 is a partially enlarged view of a state in which the lower portion of traction member 101 is rewound to a predetermined length in traction member housing 102 as shown in carrier 1600 of FIG. 31.

Although not shown in the drawing, traction member 101 included in carrier 1600 may include a rewind spring or be connected to a rewind spring.

The lower part of traction member 101 may be rewound by a predetermined length by the rewind spring.

FIG. 30 shows a state in which a part of traction member housing 102 is cut off and removed from carrier 1600 of FIG. 25.

FIG. 31 shows a state in which handle 81 is moved downward from carrier 1600 of FIG. 30 and therefore the lower portion of traction member 101 is rewound in traction member housing 102 by a predetermined length, and movable member 20 is moved downward by the return force of restoration member 30 or by gravity and the return force of restoration member 30, and the pair of wheels 32A and 32B are folded toward the center as rods 26A and 26B rotate with their longitudinal directions as the axes of rotation by a predetermined angle.

When handle 81 is moved upward high as shown in FIG. 30 from carrier 1600 in FIG. 31, the lower portion of traction member 101 which is wound is released by a predetermined length to come out of traction member housing 102, and the top of traction member 101 is moved upward following handle 81 and therefore movable member 20 is pulled upward by a predetermined distance, and restoration member 30 is stretched a predetermined length, and the pair of wheels 32A and 32B are opened and spread forward as rod 26A and rod 26B are each rotated by a predetermined angle with their longitudinal directions as the axes of rotation.

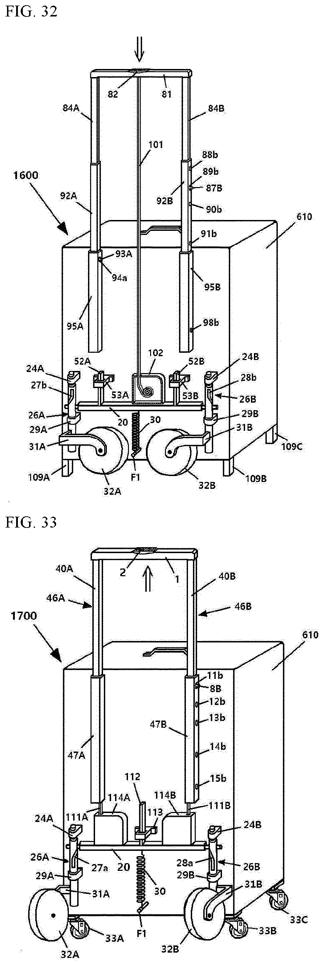

FIG. 32 exemplarily shows a state in which handle 81 is slightly moved downward from carrier 1600 of FIG. 30, and restoration member 30 is contracted to a predetermined length, and movable member 20 is moved downward, and the pair of wheels 32A, 32B are folded toward the center as rod 26A and rod 26B are each rotated by a predetermined angle with their longitudinal directions as the axes of rotation.

Preferably, the retracting force of the rewind spring included in traction member 101 may be weaker than the return force of restoration member 30, but the present invention is not limited thereto.

A plurality of pedestals 109A, 109B, and 109C may be attached to or formed on the bottom surface of body 610 of carrier 1600.

Instead of the plurality of pedestals 109A, 109B, and 109C, a plurality of caster wheels 33A, 33B, 33C may be attached to the bottom surface of body 610 of carrier 1600 as in other embodiments of the present invention.

Similarly, a plurality of pedestals 109A, 109B, and 109C may be attached to or formed on the bottom surface of the bodies 600, 610, 620, and 630 of the other embodiments of the present invention in place of the plurality of caster wheels 33A, 33B, and 33C.

Referring to carrier 1600, the distance between the top of traction member 101 and movable member 20 may be increased or decreased.

Referring to carrier 1600, if handle 81 is moved upward as in FIG. 30 from the state in which handle 81 is moved downward as in FIG. 31, the distance between the top of traction member 101 and movable member 20 may be increased; conversely, if handle 81 is moved downward as in FIG. 31 from the state in which handle 81 is moved upward as in FIG. 30, the distance between the top of traction member 101 and movable member 20 may be decreased.

### <Seventh embodiment

FIG. 33 is a perspective view showing a rod rotation apparatus according to the seventh embodiment of the present invention and carrier 1700 including the apparatus.

Hereinafter, likewise, descriptions of contents overlapping with the above-described embodiments may be omitted.

Just as traction member housing 102 is attached to movable member 20 included in carrier 1600 of FIG. 25, one or more traction member housings 114A and 114B are also attached to movable member 20 included in carrier 1700 of FIG. 33.

The shape and structure of traction member housings 114A and 114B are exemplary, and the present invention is not limited thereto.

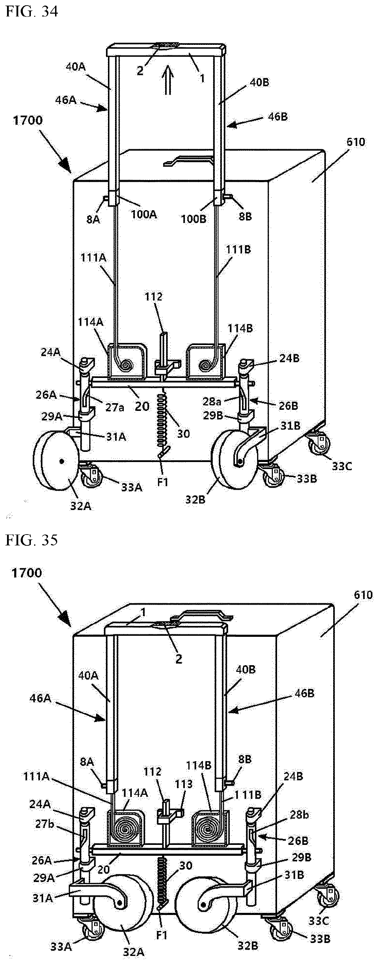

FIG. 34 exemplarily shows a state in which guide member 47A and guide member 47B are removed and a part of each of traction member housing 114A and traction member housing 114B is cut and removed from carrier 1700 of FIG. 33

Referring to carrier 1700 of FIG. 33, traction members 111A and 111B are connected between movable member 20 and handle extenders 46A and 46B as shown in FIG. 34.

The lower portion of traction member 111A is connected to movable member 20, and the top of traction member 111A is connected to handle extender 46A; similarly, the lower portion of traction member 111B is connected to movable member 20, and the top of traction member 111B is connected to handle extender 46B.

Movable member 20 can be pulled a predetermined distance in a direction by one or more traction members 111A and 111B.

(Movable member 20 can be pulled upward by a predetermined distance by one or more traction members 111A and 111B.)

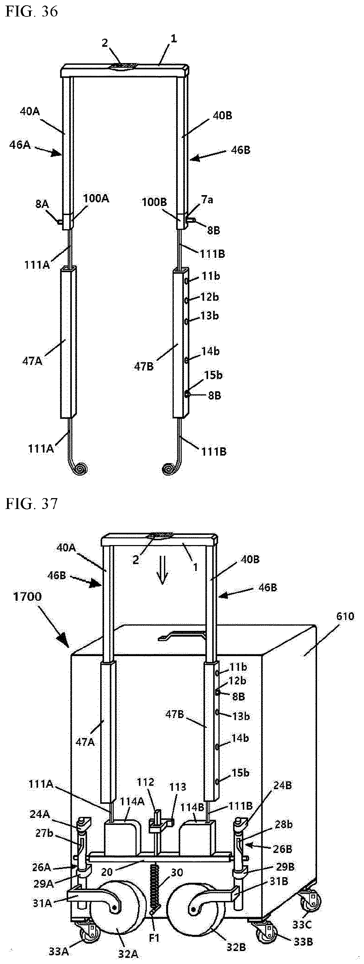

Referring to carrier 1700 of FIG. 33, the lower part of traction member 111A is indirectly connected to movable member 20 with traction member housing 114A interposed therebetween, and the top of traction member 111A is connected to first-stage extender 40A through the inside of guide member 47A as shown in FIG. 36.

Still referring to carrier 1700 of FIG. 33, the lower part of traction member 111B is indirectly connected to movable member 20 with traction member housing 114B interposed therebetween, and the top of traction member 111B is connected to first-stage extender 40B through the inside of guide member 47B as shown in FIG. 36.

Traction member 111A included in carrier 1700 of FIG. 33 is connected between movable member 20 and first-stage extender 40A through the inside of guide member 47A and thus traction member 111A can move a predetermined distance through the inside of guide member 47A.

Similarly, traction member 111B included in carrier 1700 of FIG. 33 is connected between movable member 20 and first-stage extender 40B through the inside of guide member 47B and thus traction member 111B can move a predetermined distance through the inside of guide member 47B.

Each of traction member 111A and traction member 111B may have their lower parts rewound a predetermined length.

Although not shown in the drawing, traction member 111A and traction member 111B may each include a rewind spring or may be connected to a rewind spring. The lower part of traction member 111A and the lower part of traction member 111B may each be rewound by itself by the rewind spring by a predetermined length.

Height adjustment protrusion housing 100A may be attached to first-stage extender 40A.

Similarly, height adjustment protrusion housing 100B may be attached to first-stage extender 40B.

Height adjustment protrusion 8A may be coupled to height adjustment protrusion housing 100A. Similarly, height adjustment protrusion 8B may be coupled to height adjustment protrusion housing 100B.

FIG. 35 exemplarily shows a state in which handle 1 is moved downward from carrier 1700 of FIG. 34, and traction members 111A and 111B are rewound from the lower portions thereof to a predetermined length inside traction member housing 114A and traction member housing 114B, and restoration member 30 is contracted, and movable member 20 is moved downward, and the pair of wheels 32A and 32B are folded toward the center as rod 26A and rod 26B are each rotated by a predetermined angle with their longitudinal directions as the axes of rotation.

When handle 1 is moved upward as shown in FIG. 34 from carrier 1700 of FIG. 35, the lower portion of traction member 111A and the lower portion of traction member 111B, which are wound in traction member housing 114A and traction member housing 114B, are released to a predetermined length and exit traction member housing 114A and traction member housing 114B, and the top of traction member 111A and the top of traction member 111B are moved upward following handle extender 46A and handle extender 46B and therefore movable member 20 is pulled upward by a predetermined distance, and restoration member 30 is stretched to a predetermined length, and the pair of wheels 32A and 32B are opened and spread forward as rod 26A and rod 26B are each rotated by a predetermined angle with their longitudinal directions as the axes of rotation.

FIG. 37 exemplarily shows a state in which handle 1 is slightly moved downward from carrier 1700 of FIG. 33, and movable member 20 is moved downward by the return force of restoration member 30 or by gravity and the return force of restoration member 30, and the pair of wheels 32A and 32B are folded toward the center as rod 26A and rod 26B are each rotated by a predetermined angle with their longitudinal directions as the axes of rotation.

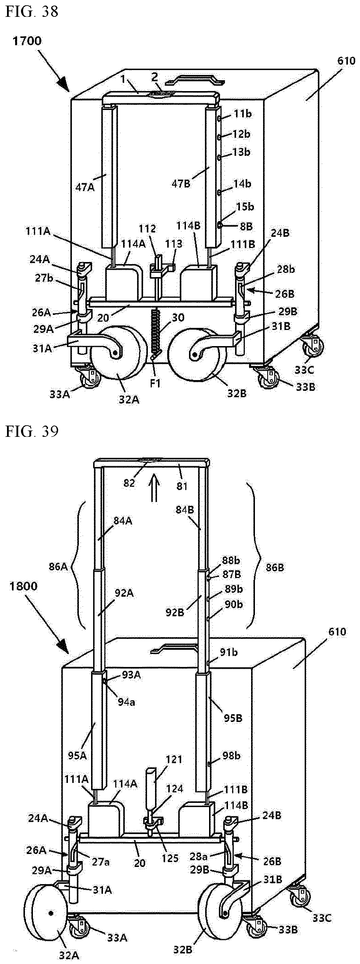

FIG. 38 exemplarily shows a state in which handle 1 is moved downward from carrier 1700 of FIG.37.

Traction member 111A and traction member 111B may each also be provided with traction member movement preventing portion 104, as in traction member 101 of FIG. 28.

Balance bar 112 is formed on movable member 20 included in carrier 1700 as in the case where balance bars 52A and 52B are formed on movable member 20 included in carrier 1500 of FIG. 21 and thus balance bar 112 may move up and down by a predetermined distance in the longitudinal direction.

(Balance bar 112 is slidable a predetermined distance in the longitudinal direction or the vertical direction through sleeve bracket 113 attached to body 610.)

Referring to carrier 1700, it is preferable to make the retracting force of the rewind spring included in traction members 111A and 111B weaker than the return force of restoration member 30, but the present invention is not limited thereto.

With reference to carrier 1700, the distance between the tops of traction members 111A and 111B and movable member 20 may be increased or decreased.

Referring to carrier 1700, if handle 1 is moved up as shown in FIG. 34 from the state in which handle 1 is moved down as shown in FIG. 35, the distance between the top of traction member 111A and movable member 20 may be increased, and similarly, the distance between the top of traction member 111B and movable member 20 may be increased.

Referring to carrier 1700, when handle 1 is moved downward as shown in FIG. 35 from the state in which handle 1 is moved upward as shown in FIG. 34, the distance between the top of traction member 111A and movable member 20 may be decreased, and similarly, the distance between the top of traction member 111B and movable member 20 may be decreased.

### <Eighth embodiment>

FIG. 39 is a perspective view showing a rod rotation apparatus according to the eighth embodiment of the present invention and carrier 1800 including the apparatus.

Hereinafter, likewise, description of the content overlapping with the above-described embodiments will be omitted.

Carrier 1800 of FIG. 39 is similar to carrier 1700 of FIG. 33 except that handle extender 86A and handle extender 86B each have a two-stage structure, and restoration member housing 121 is attached to body 610.

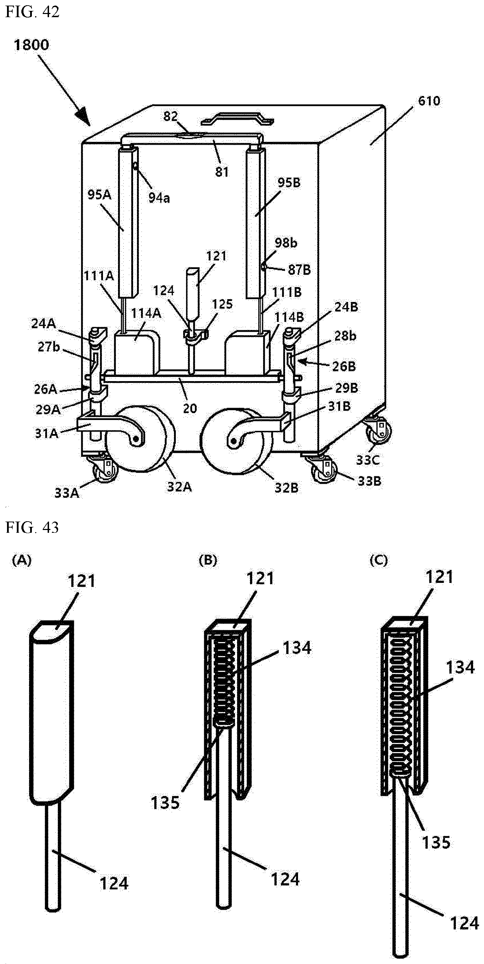

As shown in FIG. 43, restoration member 134 is positioned inside restoration member housing 121, and thus restoration member 134 is coupled to or installed on body 610.

Restoration member housing 121 includes therein restoration member 134 as shown in FIG.43.

Traction member 111A is connected between movable member 20 and handle extender 86A, and similarly, traction member 111B is connected between movable member 20 and handle extender 86B.

The lower portion of traction member 111A is connected to movable member 20 with traction member housing 114A therebetween and thus the lower portion of traction member 111A is indirectly connected to movable member 20.

Similarly, the lower portion of traction member 111B is connected to movable member 20 with traction member housing 114B therebetween and thus the lower portion of traction member 111B is indirectly connected to movable member 20.

The top of traction member 111A may be connected to handle extender 86A, and similarly, the top of traction member 111B may be connected to handle extender 86B.

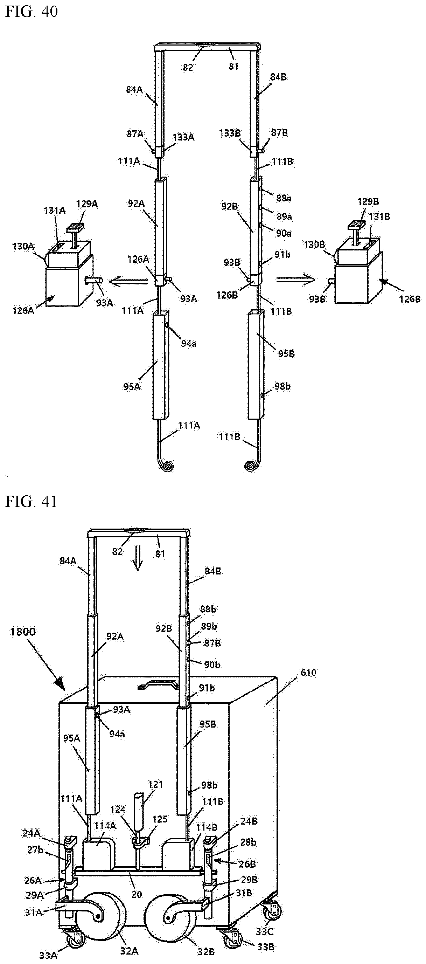

Referring to carrier 1800 of FIG. 39, the upper portion of traction member 111A may be connected to second-stage extender 84A through the inside of guide member 95A and the inside of first-stage extender 92A as shown in FIG. 40.

Similarly, the upper portion of traction member 111B may be connected to second-stage extender 84B through the inside of guide member 95B and the inside of first-stage extender 92B.

Referring to carrier 1800 of FIG. 39, therefore, traction member 111A may be connected between movable member 20 and second-stage extender 84A through the inside of guide member 95A and the inside of first-stage extender 92A.

Similarly, traction member 111B may be connected between movable member 20 and second-stage extender 84B through the inside of guide member 95B and the inside of first-stage extender 92B.

Although not shown in the drawing, traction member 111A and traction member 111B included in carrier 1800 may each include or be connected to a rewind spring and thus the lower portion of traction member 111A and the lower portion of traction member 111B may be rewound by themselves to a predetermined length in traction member housing 114A and traction member housing 114B, respectively.

Movable member 20 included in carrier 1800 can be pulled a predetermined distance in a predetermined direction by one or more traction members 111A and 111B.

(Movable member 20 can be pulled upward by a predetermined distance by one or more traction members 111A and 111B.)

As shown in FIG. 40, height adjustment protrusion housing 126A may be attached to first-stage extender 92A. Similarly, height adjustment protrusion housing 126B may be attached to first-stage extender 92B.

Height adjustment protrusion 93A may be coupled to height adjustment protrusion housing 126A.

Similarly, height adjustment protrusion 93B may be coupled to height adjustment protrusion housing 126B.

Height adjustment protrusion housing 133A may be attached to second-stage extender 84A.

Similarly, height adjustment protrusion housing 133B may be attached to second-stage extender 84B.

Height adjustment protrusion 87A may be coupled to height adjustment protrusion housing 133A.

Similarly, height adjustment protrusion 87B may be coupled to height adjustment protrusion housing 133B.

Height adjustment protrusion housing 126A is provided with height adjustment protrusion housing passage 131A.

Similarly, height adjustment protrusion housing 126B is provided with height adjustment protrusion housing passage 131B.

Traction member 111A can move a predetermined distance through height adjustment protrusion housing passage 131A, and similarly, traction member 111B can move a predetermined distance through height adjustment protrusion housing passage 131B.

Traction member 111A may be connected between movable member 20 and second-stage extender 84A through height adjustment protrusion housing passage 131A and the inside of first-stage extender 92A.

(Traction member 111A may be connected between movable member 20 and second-stage extender 84A through the inside of guide member 95A, height adjustment protrusion housing passage 131A, and the inside of first-stage extender 92A.)

Similarly, traction member 111B may be connected between movable member 20 and second-stage extender 84B through height adjustment protrusion housing passage 131B and the inside of first-stage extender 92B.

(Traction member 111B may be connected between movable member 20 and second-stage extender 84B through the inside of guide member 95B, height adjustment protrusion housing passage 131B, and the inside of first-stage extender 92B.)

Height adjustment protrusion moving button 129A may be coupled to height adjustment protrusion housing 126A.

Similarly, height adjustment protrusion moving button 129B may be coupled to height adjustment protrusion housing 126B.

When height adjustment protrusion moving button 129A is pressed by second-stage extender 84A, height adjustment protrusion 93A moves a predetermined distance inward of height adjustment protrusion housing 126A (leftward in the drawing). Conversely, when second-stage extender 84A is moved upward and therefore height adjustment protrusion moving button 129A which is depressed is returned upward, height adjustment protrusion 93A moves to the outside of height adjustment protrusion housing 126A (rightward in the drawing) by a predetermined distance and protrudes.

Similarly, when height adjustment protrusion moving button 129B is pressed by second-stage extender 84B, height adjustment protrusion 93B moves a predetermined distance inward of height adjustment protrusion housing 126B (rightward in the drawing). Conversely, when second-stage extender 84B is moved upward and therefore height adjustment protrusion moving button 129B which is depressed is returned upward, height adjustment protrusion 93B moves to the outside of height adjustment protrusion housing 126B (leftward in the drawing) by a predetermined distance and protrudes.

(In FIG. 40, height adjustment protrusion 93A and height adjustment protrusion 93B are protruded by moving a predetermined distance to the outside of height adjustment protrusion housing 126A and height adjustment protrusion housing 126B, respectively.)

The shape and structure of height adjustment protrusion housings 126A and 126B are exemplary, and the present invention is not limited thereto.

The shape of height adjustment protrusions 93A and 93B is exemplary, and the present invention is not limited thereto.

The shape of height adjustment protrusion moving buttons 129A and 129B is exemplary, and the present invention is not limited thereto.

The manner in which height adjustment protrusions 93A and 93B and height adjustment protrusion moving buttons 129A and 129B coupled to height adjustment protrusion housings 126A and 126B are operated is illustrative only, and is not intended to limit the present embodiment.

The upper periphery 130A of height adjustment protrusion housing 126A is inserted inside the lower part of first-stage extender 92A such that height adjustment protrusion housing 126A may be attached to first-stage extender 92A.

Similarly, the upper periphery 130B of height adjustment protrusion housing 126B is inserted inside the lower part of first-stage extender 92B such that height adjustment protrusion housing 126B may be attached to first-stage extender 92B.

The position and manner in which height adjustment protrusion housings 126A and 126B are coupled with first-stage extenders 92A and 92B are exemplary, but the present invention is not limited thereto.

It is preferable that height adjustment protrusion housing passage 131A and height adjustment protrusion housing passage 131B may be formed so as to penetrate in the vertical direction at the edge portions of height adjustment protrusion housing 126A and height adjustment protrusion housing 126B so that when traction member 111A and traction member 111B move through height adjustment protrusion housing passage 131A and height adjustment protrusion housing passage 131B, the operations of height adjustment protrusion moving buttons 129A and 129B and height adjustment protrusions 93A and 93B are not disturbed.

FIG. 43 (A) is a somewhat enlarged view of restoration member housing 121 attached to body 610 of carrier 1800 of FIG. 39, and a plunger 124 protruding downward from the bottom of restoration member housing 121 by a predetermined length.

FIG. 43 (B) shows a state in which a part of restoration member housing 121 of FIG. 43 (A) is cut and removed, and restoration member 134 is located therein.

Restoration member 134 is an elastic member or a compression spring, but the present invention is not limited thereto.

Referring to carrier 1800 of FIG. 39, movable member 20 is moved upward by a predetermined distance and therefore plunger 124 is slightly moved upwardly through the inside of sleeve bracket 125 and thus restoration member 134 is somewhat compressed as shown in FIG. 43 (B).

FIG. 43 (C) shows a state in which restoration member 134 of FIG. 43 (B) spreads in the longitudinal direction by its own restoring force and pushes plunger upper portion 135 down and therefore plunger 124 is slightly pushed downward as in carrier 1800 of FIGS. 41 and 42.

The manner in which restoration member 134 is coupled to or installed on body 610 of carrier 1800 is exemplary, and the present invention is not limited thereto.

Although not shown in the drawing, restoration member made of a compression spring may push movable members 20, 54, 197, and 204 downward to return them in the 2nd to 4th, 6th, 7th, 9th to 11th, 13th to 15th, and 21st to 26th embodiments of the present invention in such a way that restoration member 134 made of a compression spring pushes movable member 20 downward to return movable member 20 in the present embodiment, instead of causing restoration member 30 of the tension spring to pull movable members 20, 54, 197, and 204 downward to return it.

Similarly, although not shown in the drawing, restoration member made of a compression spring may push movable members 20 upward to return it in the fifth, sixteenth, and seventeenth embodiments of the present invention in such a way that restoration member 134 made of a compression spring pushes movable member 20 downward to return movable member 20 in the present embodiment, instead of causing restoration member 44A, 44B, and 44 of the tension spring to pull movable members 20 upward to return it.

The manner in which the return force of restoration member 134 is applied to movable member 20 is exemplary, and the present embodiment is not limited thereto.

FIG. 39 exemplarily shows a state in which handle 81 is moved upward, and the pair of wheels 32A and 32B are opened and spread forward.

FIG. 41 exemplarily shows a state in which handle 81 is moved slightly downward from carrier 1800 of FIG. 39, and movable member 20 is moved downward by the return force of restoration member 134 or by gravity and the return force of restoration member 134, and the pair of wheels 32A and 32B are folded toward the center as rod 26A and rod 26B are each rotated by a predetermined angle with their longitudinal directions as the axes of rotation.

FIG. 42 exemplarily shows a state in which handle 81 is moved downward from carrier 1800 of FIG. 41.

Referring to traction member 111A and traction member 111B included in carrier 1800 of FIG. 42, the lower part of each of them is rewound a predetermined length inside traction member housing 114A and traction member housing 114B like traction member 111A and traction member 111B included in carrier 1700 of FIG. 35.

When handle 81 is moved upward high as shown in FIG. 39 from the state in which handle 81 is moved downward as shown in carrier 1800 of FIG. 42, the lower part of traction member 111A and the lower part of traction member 111B, which are wound inside traction member housing 114A and traction member housing 114B, are unwound a predetermined length as in carrier 1700 of FIG. 34, and the upper part of each of them moves upward by following second-stage extender 84A and second-stage extender 84B.

When handle 81 is moved upward high as shown in FIG. 39 from the state in which movable member 20 is moved downward and the pair of wheels 32A and 32B are folded toward the center as in carrier 1800 of FIG. 41 or FIG. 42, movable member 20 is moved by being pulled a predetermined distance upward by traction members 111A and 111B, and the pair of wheels 32A and 32B are opened and spread forward as rod 26A and rod 26B are each rotated by a predetermined angle with their longitudinal directions as the axes of rotation.

Referring to carrier 1800, the distance between the top of traction members 111A, 111B and movable member 20 may be increased or decreased.

Referring to carrier 1800, when handle 81 is moved upward as shown in FIG. 39 from the state in which handle 81 is moved downward as shown in FIG. 42, the distance between the top of traction member 111A and movable member 20 may be increased, and similarly, the distance between the top of traction member 111B and movable member 20 may be increased.

Referring to carrier 1800, when handle 81 is moved downward as shown in FIG. 42 from the state in which handle 81 is moved upward as shown in FIG. 39, the distance between the top of traction member 111A and movable member 20 may be decreased, and similarly, the distance between the top of traction member 111B and movable member 20 may be decreased.

### <Ninth embodiment>

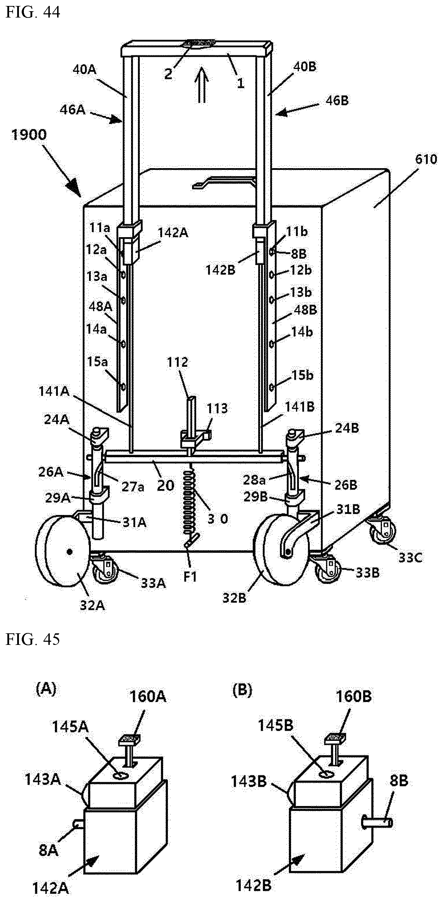

FIG. 44 is a perspective view showing a rod rotation apparatus according to the ninth embodiment of the present invention and carrier 1900 including the apparatus.

Hereinafter, likewise, description of the content overlapping with the above-described embodiments will be omitted.

Guide member 48A and guide member 48B may be coupled to body 610 of carrier 1900.

Guide member 48A may have one or more height adjustment holes 11a, 12a, 13a, 14a, 15a, and similarly, guide member 48B may have one or more height adjustment holes 11b, 12b, 13b, 14b, and 15b.

First-stage extender 40A may move a predetermined distance along guide member 48A, and similarly, first-stage extender 46B may move a predetermined distance along guide member 48B, as shown in FIGS. 44, 48, and 50.

(First-stage extender 40A may move up and down a predetermined distance along guide member 48A, and similarly, first-stage extender 46B may move up and down a predetermined distance along guide member 48B.)

Traction members 141A and 141B are connected between movable member 20 and handle extender 46A and 46B to pull movable member 20 included in carrier 1900 by a predetermined distance in a predetermined direction.

(Movable member 20 can be pulled upward by a predetermined distance by one or more traction members 141A and 141B.)

Although traction member 141A is generally formed in a thin and elongated straight line, this is exemplary and the present invention is not limited thereto.

Similarly, although traction member 141B is generally formed in a thin and elongate straight line, this is exemplary and the present invention is not limited thereto.

Referring to carrier 1900 of FIG. 44, traction member 141A is connected between movable member 20 and handle extender 46A along guide member 48A.

Similarly, traction member 141B is connected between movable member 20 and handle extender 46B along guide member 48B.

Height adjustment protrusion housing 142A and height adjustment protrusion housing 142B may be attached to first-stage extender 40A and first-stage extender 40B included in carrier 1900, respectively.

FIGS. 45 (A) and 45 (B) exemplarily show the shapes and structures of height adjustment protrusion housing 142A and height adjustment protrusion housing 142B attached to first-stage extender 40A and first-stage extender 40B of carrier 1900, respectively.

Upper periphery 143A is inserted into the lower inside of first-stage extender 40A such that height adjustment protrusion housing 142A may be coupled with first-stage extender 40A, and similarly, upper periphery 143B is inserted into the lower inside of first-stage extender 40B such that height adjustment protrusion housing 142B may be coupled with first-stage extender 40B.

The position and manner in which height adjustment protrusion housings 142A and 142B are coupled to first-stage extenders 40A and 40B are exemplary, and the present invention is not limited thereto.

Height adjustment protrusion 8A may be coupled to height adjustment protrusion housing 142A, and similarly, height adjustment protrusion 8B may be coupled to height adjustment protrusion housing 142B.

Height adjustment protrusion moving button 160A may be coupled to height adjustment protrusion housing 142A, and similarly, height adjustment protrusion moving button 160B may be coupled to height adjustment protrusion housing 142B.

Height adjustment protrusion moving button 160A is interlocked with handle button 2 such that when handle button 2 is pressed, height adjustment protrusion 8A is moved a predetermined distance toward the inside of height adjustment protrusion housing 142A (toward the right side in the drawing). Conversely, when handle button 2 is released, height adjustment protrusion 8A moves a predetermined distance toward the outside of height adjustment protrusion housing 142A (towards the left side in the drawing) to protrude.

Similarly, height adjustment protrusion moving button 160B is interlocked with handle button 2 such that when handle button 2 is pressed, height adjustment protrusion 8B is moved a predetermined distance toward the inside of height adjustment protrusion housing 142B (toward the left side in the drawing). Conversely, when handle button 2 is released, height adjustment protrusion 8B moves a predetermined distance toward the outside of height adjustment protrusion housing 142B (toward the right side in the drawing) to protrude.

(FIG. 45 (A) shows a state in which height adjustment protrusion 8A is moved a predetermined distance toward the outside of height adjustment protrusion housing 142A (leftward in the drawing) to protrude.)

(Similarly, FIG. 45 (B) shows a state in which height adjustment protrusion 8B is moved a predetermined distance toward the outside of height adjustment protrusion housing 142B (rightward in the drawing) to protrude.)

The shapes and structures of height adjustment protrusion housings 142A and 142B are each exemplary, and the present invention is not limited thereto.

The shapes of height adjustment protrusions 8A and 8B are each exemplary, and the present invention is not limited thereto.

The manner of operation of height adjustment protrusions 8A and 8B is exemplary, and the present invention is not limited thereto.

The shapes of height adjustment protrusion moving buttons 160A, 160B are each exemplary, and the present invention is not limited thereto.

The manner in which height adjustment protrusion 8A and height adjustment protrusion moving button 160A are interlocked and the manner in which height adjustment protrusion 8B and height adjustment protrusion moving button 160B are interlocked are exemplary, and the present invention is not limited thereto.

The manner in which handle button 2 is interlocked with height adjustment protrusion movement buttons 160A and 160B is only described as an example, and the present invention is not limited thereto.

Height adjustment protrusion housing 142A is provided with height adjustment protrusion housing passage 145A, and similarly, height adjustment protrusion housing 142B is provided with height adjustment protrusion housing passage 145B.

It is preferable that height adjustment protrusion housing passage 145A and height adjustment protrusion housing passage 145B are formed so as to penetrate in the vertical direction at the edge portions of height adjustment protrusion housing 142A and height adjustment protrusion housing 142B, but the present invention is not limited thereto.

The inside of height adjustment protrusion housing passage 145A may move a predetermined distance along traction member 141A, and similarly, the inside of height adjustment protrusion housing passage 145B may move a predetermined distance along traction member 141B.

(The inside of height adjustment protrusion housing passage 145A may move up and down a predetermined distance along traction member 141A, and similarly, the inside of height adjustment protrusion housing passage 145B may move up and down a predetermined distance along traction member 141B.)

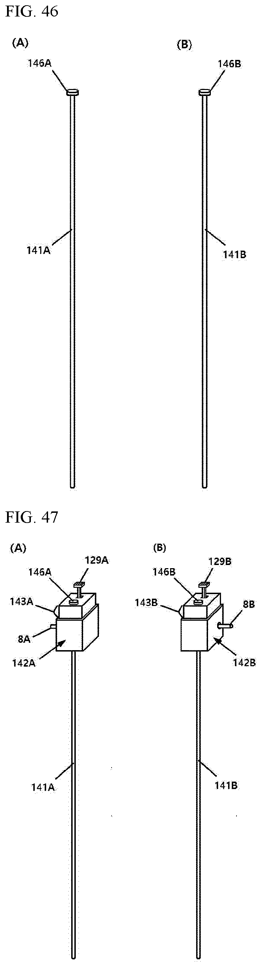

FIGS. 46 (A) and 46 (B) show the shapes of traction member 141A and traction member 141B included in carrier 1900 of FIG. 44, respectively.

Traction member 141A is provided with traction member upper protrusion 146A, and similarly, traction member 141B is provided with traction member upper protrusion 146B.

It is preferable that traction member upper protrusion 146A and traction member upper protrusion 146B are formed on the upper portion of traction member 141A and on the upper portion of traction member 141B, respectively. but the present invention is not limited thereto.

Traction member upper protrusion 146A and traction member upper protrusion 146B are each formed in a shape similar to a screw head or a bolt head, but this is exemplary and the present invention is not limited thereto.

FIG. 47 (A) shows a state in which a predetermined section of the upper part of traction member 141A of FIG. 46A is positioned inside height adjustment protrusion housing passage 145A formed in height adjustment protrusion housing 142A of FIG. 45A.

FIG. 47 (B) shows a state in which a predetermined section of the upper part of traction member 141B of FIG. 46B is positioned inside height adjustment protrusion housing passage 145B formed in height adjustment protrusion housing 142B of FIG. 45B.

Traction member 141A included in carrier 1900 may be connected between movable member 20 and handle extender 46A along guide member 48A and through height adjustment protrusion housing passage 145A, and similarly, traction member 141B may be connected between movable member 20 and handle extender 46B along guide member 48B and through height adjustment protrusion housing passage 145B.

(Traction member 141A included in carrier 1900 may be connected between movable member 20 and first-stage extender 40A along guide member 48A and through height adjustment protrusion housing passage 145A, and similarly, traction member 141B may be connected between movable member 20 and first-stage extender 40B along guide member 48B and through height adjustment protrusion housing passage 145B.)

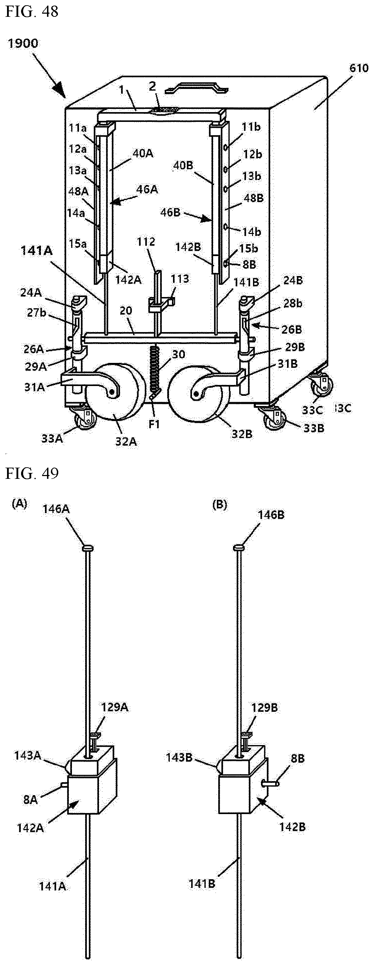

When handle 1 is moved downward as in FIG. 48 from the state in which handle 1 is moved upward as in FIG. 44, the inside of height adjustment protrusion housing passage 145A is moved downward along traction member 141A and thus traction member 141A and first-stage extender 40A are contracted together to a predetermined length in the longitudinal direction or in the vertical direction.

Conversely, when handle 1 is moved up as shown in FIG. 44 from the state in which handle 1 is moved down as shown in FIG. 48, the inside of height adjustment protrusion housing passage 145A is moved upward along traction member 141A and thus traction member 141A and first-stage extender 40A which are contracted together are extended or stretched in the longitudinal direction or in the vertical direction.

Similarly, when handle 1 is moved downward as in FIG. 48 from the state in which handle 1 is moved upward as in FIG. 44, the inside of height adjustment protrusion housing passage 145B is moved downward along traction member 141B and thus traction member 141B and first-stage extender 40B are contracted together to a predetermined length in the longitudinal direction or in the vertical direction.

Conversely, when handle 1 is moved up as shown in FIG. 44 from the state in which handle 1 is moved down as shown in FIG. 48, the inside of height adjustment protrusion housing passage 145B is moved upward along traction member 141B and thus traction member 141B and first-stage extender 40B which are contracted together are extended or stretched in the longitudinal direction or in the vertical direction.

When handle 1 is moved downward as shown in FIG. 48 from the state in which handle 1 is moved upward as shown in FIG. 44, the inside of height adjustment protrusion housing passage 145A is moved downward along traction member 141A, and similarly, the inside of height adjustment protrusion housing passage 145B is moved downward along traction member 141B; therefore the distance between the top of traction member 141A and the bottom of first-stage extender 40A is increased, and similarly, the distance between the top of traction member 141B and the bottom of first-stage extender 40B is increased.

Conversely, when handle 1 is moved upward as shown in FIG. 44, from the state in which handle 1 is moved downward as shown in FIG. 48, the inside of height adjustment protrusion housing passage 145A is moved upward along traction member 141A, and similarly, the inside of height adjustment protrusion housing passage 145B is moved upward along traction member 141B; therefore the distance between the top of traction member 141A and the bottom of first-stage extender 40A may be decreased, and similarly, the distance between the top of traction member 141B and the bottom of first-stage extender 40B may be decreased.

FIG. 47 (A) exemplarily shows a state in which when handle 1 is moved up as in carrier 1900 of FIG. 44, the inside of height adjustment protrusion housing passage 145A is moved upward along traction member 141A and thus traction member upper protrusion 146A is caught by the top surface of height adjustment protrusion housing 142A, or traction member upper protrusion 146A is in contact with the top surface of height adjustment protrusion housing 142A.

Similarly, FIG. 47 (B) exemplarily shows a state in which when handle 1 is moved up as in carrier 1900 of FIG. 44, the inside of height adjustment protrusion housing passage 145B is moved upward along traction member 141B and thus traction member upper protrusion 146B is caught by the top surface of height adjustment protrusion housing 142B, or traction member upper protrusion 146B is in contact with the top surface of height adjustment protrusion housing 142B.

FIG. 48 exemplarily shows a state in which handle 1 is moved downward from carrier 1900 of FIG.44 and thus movable member 20 is moved downward by the return force of restoration member 134 or by gravity and the return force of restoration member 134, and the pair of wheels 32A and 32B are folded toward the center as rod 26A and rod 26B are each rotated by a predetermined angle with their longitudinal directions as the axes of rotation.

When handle 1 is moved downward as in FIG. 48 from the state in which handle 1 is moved upward as in FIG. 44, the distance between the top of traction member 141A and the bottom of first-stage extender 40A is increased and thus traction member upper protrusion 146A and height adjustment protrusion housing 142A are separated as shown in FIG. 49A, and the distance between traction member upper protrusion 146A and height adjustment protrusion housing 142A is increased.

(The distance between height adjustment protrusion housing 142A and traction member upper protrusion 146A may be 5 cm or more, or 10 cm or more, or 20 cm or more, but the present invention is not limited thereto.)

Similarly, when handle 1 is moved downward as in FIG. 48 from the state in which handle 1 is moved upward as in FIG. 44, the distance between the top of traction member 141B and the bottom of first-stage extender 40B is increased and thus traction member upper protrusion 146B and height adjustment protrusion housing 142B are separated as shown in FIG. 49B, and the distance between traction member upper protrusion 146B and height adjustment protrusion housing 142B is increased.

(The distance between height adjustment protrusion housing 142B and traction member upper protrusion 146B may be 5 cm or more, or 10 cm or more, or 20 cm or more, but the present invention is not limited thereto.)

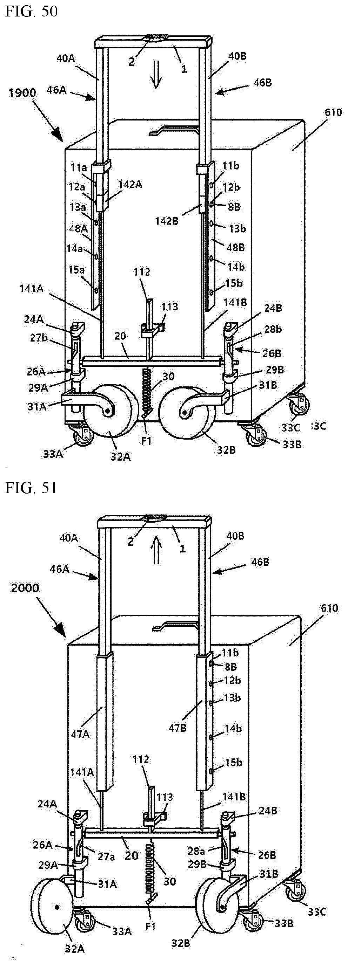

FIG. 50 exemplarily shows a state in which handle 1 is slightly moved downward from carrier 1900 of FIG. 44, and restoration member 30 is contracted, and movable member 20 is moved downward, and the pair of wheels 32A, 32B are folded toward the center.

When handle 1 is moved high in the upward direction as shown in FIG. 44 from the state in which restoration member 30 is contracted and movable member 20 is moved downward and the pair of wheels 32A and 32B are folded toward the center as in carrier 1900 of FIG. 48 or 50, movable member 20 is moved a predetermined distance by being pulled upward by traction members 141A, 141B, and the pair of wheels 32A, 32B are opened to spread forward as rods 26A and 26B are each rotated by a predetermined angle with their longitudinal directions as the axes of rotation, and restoration member 30 is stretched a predetermined length.

### <Tenth embodiment>

FIG. 51 is a perspective view showing a rod rotation apparatus according to the tenth embodiment of the present invention and carrier 2000 including the apparatus.

Hereinafter, likewise, description of the content overlapping with the above-described embodiments will be omitted.

Carrier 2000 of FIGS. 51, 53, and 54 are the same as carrier 1900 of FIGS. 44, 50, and 48, respectively, except that guide member 47A and guide member 47B are coupled to body 610 instead of guide member 48A and guide member 48B.

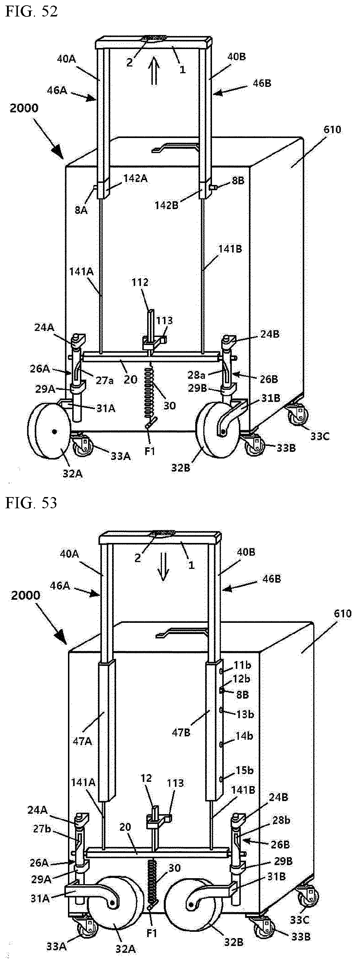

FIG. 52 shows a state in which guide member 47A and guide member 47B are removed from carrier 2000 of FIG.51.

Traction members 141A and 141B are connected between movable member 20 and handle extender 46A and 46 in order to pull movable member 20 included in carrier 2000 by a predetermined distance in a predetermined direction.

(Movable member 20 may be pulled upward by a predetermined distance by one or more traction members 141A and 141B.)

Referring to carrier 2000 of FIG. 51, traction member 141A may be connected between movable member 20 and first-stage extender 40A through the inside of guide member 47A and through height adjustment protrusion housing passage 145A as in FIGS. 45 (A) and 47(A), and similarly, traction member 141B may be connected between movable member 20 and first-stage extender 40B through the inside of guide member 47B and through height adjustment protrusion housing passage 145B as in FIGS. 45 (B) and 47 (B).

### <Eleventh embodiment>

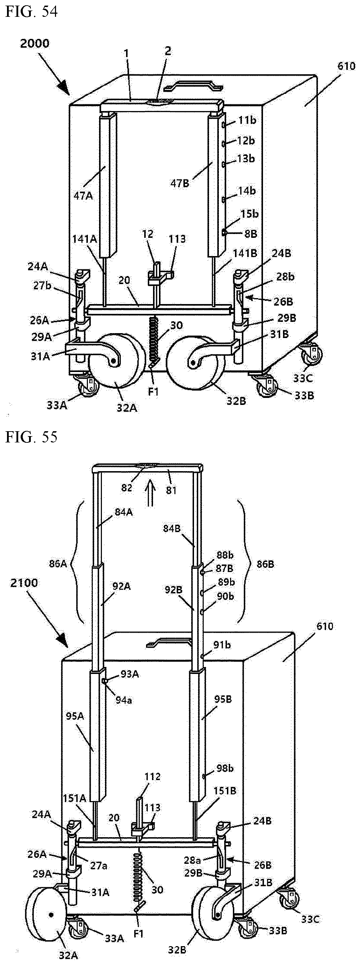

FIG. 55 is a perspective view showing a rod rotation apparatus according to the eleventh embodiment of the present invention and carrier 2100 including the apparatus.

Hereinafter, likewise, description of the content overlapping with the above-described embodiments will be omitted.

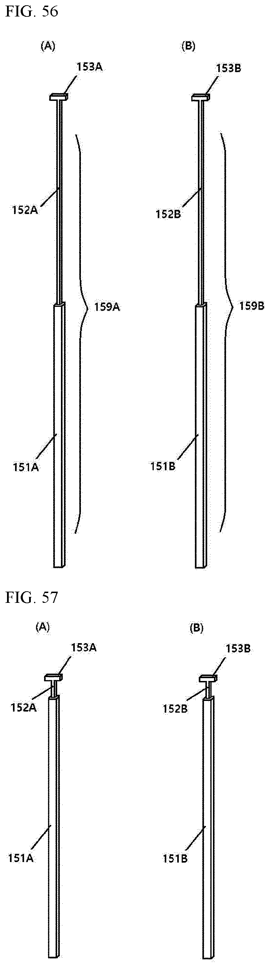

Carrier 2100 of FIG. 55 is similar to carrier 2000 of FIG. 51, except that handle extender 86A and handle extender 86B each have a two-stage structure in a telescopic manner, and that traction member 159A and traction member 159B each have a two-stage structure in a telescopic manner as shown in FIGS. 56A and 56B,

Referring to carrier 2100 of FIG 55, movable member 20 and handle extender 86A are connected by traction member 159A as shown in FIG. 56 (A), and similarly, movable member 20 and handle extender 86B are connected by traction member 159B as shown in FIG. 56 (B).

As shown in FIG. 56 (A), traction member 159A includes first-stage member 151A and second-stage member 152A thereon so as to be contracted in two-stages.

Similarly, as shown in FIG. 56 (B), traction member 159B includes first-stage member 151B and second-stage member 152B thereon so as to be contracted in two-stages.

Traction member 159A of FIG. 56 is thin and elongated in a straight line as a whole, but this is exemplary and the present invention is not limited thereto.

Similarly, traction member 159B of FIG. 56 is thin and elongated in a straight line as a whole, but this is exemplary and the present invention is not limited thereto.

The shape and structure of traction member 159A are exemplary, and the present invention is not limited thereto.

Similarly, the shape and structure of traction member 159B are exemplary, and the present invention is not limited thereto.

Traction member 159A is provided with traction member upper protrusion 153A.

(Traction member upper protrusion 153A is preferably formed on the top of traction member 159A or on the top of second-stage member 152A, but the present invention is not limited thereto.)

Similarly, traction member 159B is provided with traction member upper protrusion 153B.

(Traction member upper protrusion 153B is preferably formed on the top of traction member 159B or on the top of second-stage member 152B, but the present invention is not limited thereto.)

FIGS. 57 (A) and 57 (B) exemplarily show states in which traction members 159A in FIG. 56 (A) and traction members 159B in FIG. 56 (B) are contracted a predetermined length in the longitudinal direction or the vertical direction, respectively.

When handle 81 is moved upward as in carrier 2100 of FIG. 55, traction member 159A and traction member 159B are each extended or stretched in the longitudinal direction or the vertical direction, as shown in FIGS. 56 (A) and 56 (B).

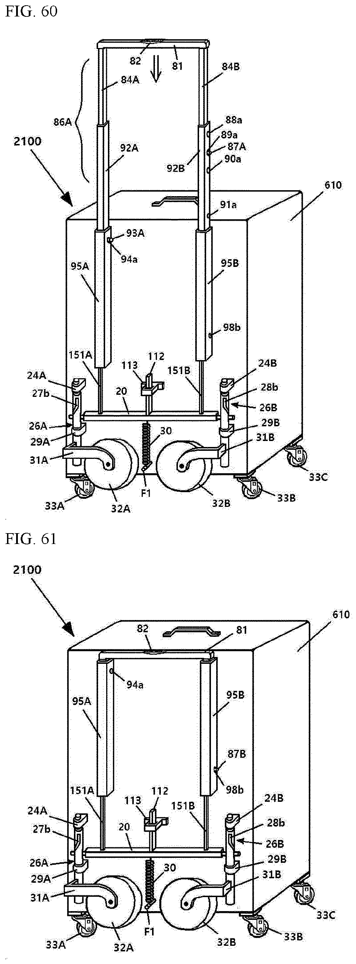

When handle 81 is moved downward as in carrier 2100 of FIG. 61, traction member 159A and traction member 159B are each contracted to a predetermined length in the longitudinal direction or the vertical direction, as shown in FIGS. 57A and 57B.

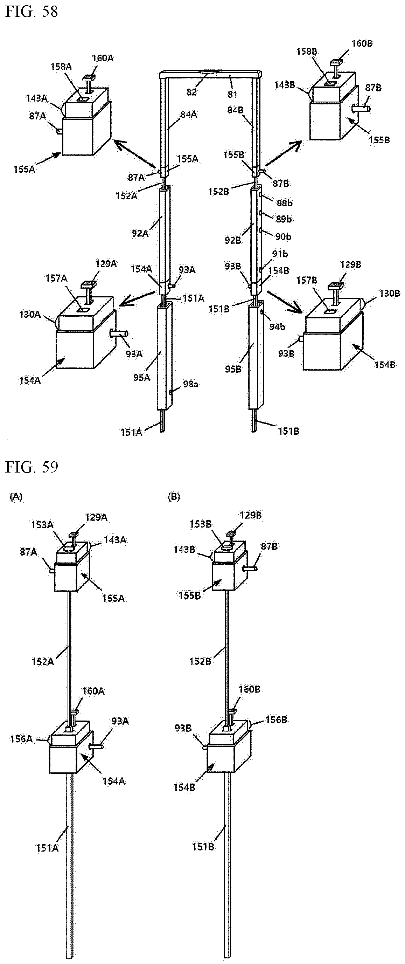

FIG. 58 exemplarily shows a manner in which the top of traction member 159A included in carrier 2100 of FIG. 55 is connected to second-stage extender 84A through the inside of guide member 95A and the inside of first-stage extender 92A, and similarly, the top of traction member 159B is connected to second-stage extender 84B through the inside of guide member 95B and the inside of first-stage extender 92B.

Also FIG. 58 is a perspective view showing height adjustment protrusion housing 154A attached to first-stage extender 92A, height adjustment protrusion housing 154B attached to first-stage extender 92B, height adjustment protrusion housing 155A attached to second-stage extender 84A, and height adjustment protrusion housing 155B attached to second-stage extender 84B are each somewhat enlarged.

Referring to carrier 2100 of FIG. 55, traction member 159A may be connected between movable member 20 and handle extender 86A through the inside of guide member 95A and the inside of first-stage extender 92A, and similarly, traction member 159B may be connected between movable member 20 and handle extender 86B through the inside of guide member 95B and the inside of first-stage extender 92B.

Movable member 20 can be pulled a predetermined distance in a predetermined direction by one or more traction members 159A and 159B.

(Movable member 20 can be pulled upward by a predetermined distance by one or more traction members 159A, 159B)

Referring to carrier 2100 of FIG.55, height adjustment protrusion housing 154A may be attached to first-stage extender 92A, and similarly, height adjustment protrusion housing 154B may be attached to first-stage extender 92B, as shown in FIG. 58.

Upper periphery 130A of height adjustment protrusion housing 154A is inserted into the lower inside of first-stage extender 92A such that height adjustment protrusion housing 154A may be attached to first-stage extender 92A.

Similarly, upper periphery 130B of height adjustment protrusion housing 154B is inserted into the lower inside of first-stage extender 92B such that height adjustment protrusion housing 154B may be attached to first-stage extender 92B.

The position and manner in which height adjustment protrusion housing 154A and height adjustment protrusion housing 154B are coupled to first-stage extender 92A and first-stage extender 92B respectively are exemplary, and the present invention is not limited thereto.

Height adjustment protrusion 93A may be coupled to height adjustment protrusion housing 154A.

Similarly, height adjustment protrusion 93A may be coupled to height adjustment protrusion housing 154B.

Height adjustment protrusion moving button 129A may be coupled to height adjustment protrusion housing 154A.

Similarly, height adjustment protrusion moving button 129B may be coupled to height adjustment protrusion housing 154B.

Height adjustment protrusion housings 155A and 155B may also be attached to second-stage extender 84A and 84B.

The upper periphery 143A of height adjustment protrusion housing 155A is inserted into the lower inside of second-stage extender 84A such that height adjustment protrusion housing 155A may be attached to second-stage extender 84A.

Similarly, the upper periphery 143B of height adjustment protrusion housing 155B is inserted into the lower inside of second-stage extender 84B such that height adjustment protrusion housing 155B may be attached to second-stage extender 84B.

The position and manner in which height adjustment protrusion housing 155A and height adjustment protrusion housing 155B are coupled to second-stage extender 84A and second-stage extender 84B respectively are exemplary, and the present invention is not limited thereto.

Height adjustment protrusion 87A may be coupled to height adjustment protrusion housing 155A.

Similarly, height adjustment protrusion 87B may be coupled to height adjustment protrusion housing 155B.

Height adjustment protrusion moving button 160A may be coupled to height adjustment protrusion housing 155A.

Similarly, height adjustment protrusion moving button 160B may be coupled to height adjustment protrusion housing 155B.

When second-stage extender 84A is moved downward along the inside of first-stage extender 92A, height adjustment protrusion moving button 129A is pressed and height adjustment protrusion 93A is drawn toward the inside of height adjustment protrusion housing 154A (toward the left side in the drawing) by a predetermined length.

Conversely, when second-stage extender 84A is moved upward, height adjustment protrusion moving button 129A which is pressed rises upward and height adjustment protrusion 93A is protruded by moving a predetermined distance toward the outside of height adjustment protrusion housing 154A (toward the right side in the drawing).

Similarly, when second-stage extender 84B is moved downward along the inside of first-stage extender 92B, height adjustment protrusion moving button 129B is pressed and height adjustment protrusion 93B is drawn toward the inside of height adjustment protrusion housing 154B (toward the right side in the drawing) by a predetermined length.

Conversely, when second-stage extender 84B is moved upward, height adjustment protrusion moving button 129B which is pressed rises upward and height adjustment protrusion 93B is protruded by moving a predetermined distance toward the outside of height adjustment protrusion housing 154B (toward the left side in the drawing).

The shape and structure of height adjustment protrusion housings 154A and 154B are each exemplary and the present invention is not limited thereto.

The shape and manner of operation of height adjustment protrusions 93A and 93B are each exemplary, and the present invention is not limited thereto.

The shape and manner of operation of height adjustment protrusion moving buttons 129A and 129B are each exemplary, and the present invention is not limited thereto.

The manner in which height adjustment protrusion moving buttons 129A, 129B and height adjustment protrusions 93A, 93B are operated is exemplary and is not intended to limit the present invention.

The manner in which height adjustment protrusion 93A and height adjustment protrusion moving button 129A are interlocked and the manner in which height adjustment protrusion 93B and height adjustment protrusion moving button 129B are interlocked are exemplary, and the present invention is not limited thereto.

Handle button 82 is interlocked with height adjustment protrusion moving buttons 160A and 160B.

When handle button 82 is pressed, height adjustment protrusion moving button 160A is pressed, and height adjustment protrusion 87A is drawn toward the inside of height adjustment protrusion housing 155A (toward the right side in the drawing) by a predetermined length. Conversely, when handle button 82 is released, height adjustment protrusion moving button 160A which is depressed rises upward and height adjustment protrusion 87A is protruded by moving a predetermined distance toward the outside of height adjustment protrusion housing 155A (toward the left side in the drawing).

Similarly, when handle button 82 is pressed, height adjustment protrusion moving button 160B is pressed, and height adjustment protrusion 87B is drawn toward the inside of height adjustment protrusion housing 155B (toward the left side in the drawing) by a predetermined length. Conversely, when handle button 82 is released, height adjustment protrusion moving button 160B which is depressed rises upward and height adjustment protrusion 87B is protruded by moving a predetermined distance toward the outside of height adjustment protrusion housing 155B (toward the right side in the drawing).

The shape and structure of height adjustment protrusion housings 155A and 155B are each exemplary, and the present invention is not limited thereto.

The shape of height adjustment protrusions 87A and 87B and the manner of operation of height adjustment protrusions 87A and 87B are each exemplary, and the present invention is not limited thereto.

The shape and operation method of height adjustment protrusion moving buttons 160A and 160B are each exemplary, and the present invention is not limited thereto.

The manner in which height adjustment protrusion 87A and height adjustment protrusion moving button 160A are interlocked and the manner in which height adjustment protrusion 87B and height adjustment protrusion moving button 160B are interlocked are exemplary, and the present invention is not limited thereto.

The manner in which height adjustment protrusion moving buttons 160A and 160B are interlocked with handle button 82 is exemplary, and the present invention is not limited thereto.

Height adjustment protrusion housing 154A is provided with height adjustment protrusion housing passage 157A, and height adjustment protrusion housing 155A is provided with height adjustment protrusion housing passage 158A.

Similarly, height adjustment protrusion housing 154B is provided with height adjustment protrusion housing passage 157B, and height adjustment protrusion housing 155B is provided with height adjustment protrusion housing passage 158B.

Therefore, the inside of height adjustment protrusion housing passage 157A may move a predetermined distance along first-stage member 151A or traction member 159A.

(The inside of height adjustment protrusion housing passage 157A may move up and down a predetermined distance along first-stage member 151A or traction member 159A.)

Similarly, the inside of height adjustment protrusion housing passage 157B may move a predetermined distance along first-stage member 151B or traction member 159B.

(The inside of height adjustment protrusion housing passage 157B may move up and down a predetermined distance along first-stage member 151B or traction member 159B.)

Referring to carrier 2100 of FIG. 55, the lower portion of traction member 159A may be connected to movable member 20, and the upper portion thereof may be connected to second-stage extender 84A through the inside of guide member 95A and first-stage extender 92A and through height adjustment protrusion housing passage 157A and height adjustment protrusion housing passage 158A.

Referring to carrier 2100 of FIG. 55, similarly, the lower portion of traction member 159B may be connected to movable member 20, and the upper portion thereof may be connected to second-stage extender 84B through the inside of guide member 95B and first-stage extender 92B and through height adjustment protrusion housing passage 157B and height adjustment protrusion housing passage 158B.

FIG. 55 shows a state in which handle 81 of carrier 2100 is moved upward high and movable member 20 is pulled upward by a predetermined distance by traction members 159A and 159B, and restoration member 30 is stretched to a predetermined length, and a pair of wheels 32A and 32B are opened and spread forward.

FIG. 59 (A) exemplarily shows a state in which portions of traction member 159A are positioned inside height adjustment protrusion housing passage 157A of height adjustment protrusion housing 154A and height adjustment protrusion housing passage 158A of height adjustment protrusion housing 155A, and traction member upper protrusion 153A is caught by the upper surface of height adjustment protrusion housing 155A, or traction member upper protrusion 153A and the upper surface of height adjustment protrusion housing 155A contact each other when handle 81 is moved up as in carrier 2100 of FIG. 55, with traction member 159A extended or stretched in the longitudinal direction or the vertical direction thereof.

Similarly, FIG. 59 (B) exemplarily shows a state in which portions of traction member 159B are positioned inside height adjustment protrusion housing passage 157B of height adjustment protrusion housing 154B and height adjustment protrusion housing passage 158B of height adjustment protrusion housing 155B, and traction member upper protrusion 153B is caught by the upper surface of height adjustment protrusion housing 155B, or traction member upper protrusion 153A and the upper surface of height adjustment protrusion housing 155A contact each other, when handle 81 is moved up as in carrier 2100 of FIG. 55, with traction member 159B extended or stretched in the longitudinal direction or the vertical direction thereof.

FIG. 60 exemplarily shows a state in which handle 81 is slightly moved downward from carrier 2100 of FIG. 55, and movable member 20 is moved downward by a predetermined distance by the return force of restoration member 30 or by gravity and the return force of restoration member 30, and the pair of wheels 32A, 32B are folded toward the center as rod 26A and rod 26B are each rotated by a predetermined angle with their longitudinal directions as the axes of rotation.

FIG. 61 exemplarily shows a state in which handle 81 is moved downward from carrier 2100 of FIG. 60.

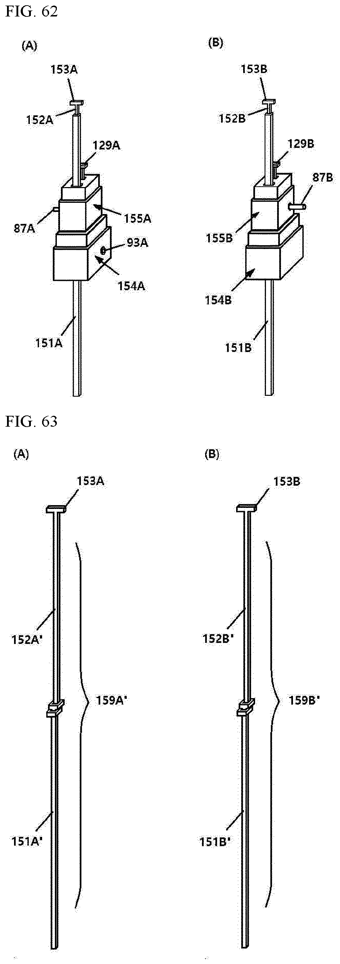

FIG. 62 (A) shows a state in which portions of traction member 159A are positioned inside height adjustment protrusion housing passage 157A of height adjustment protrusion housing 154A and height adjustment protrusion housing passage 158A of height adjustment protrusion housing 155A with traction member 159A contracted to a predetermined length in the longitudinal direction thereof or the vertical direction as in FIG. 57A when handle 81 of carrier 2100 is moved downward as shown in FIG. 61, but this is exemplary and the present invention is not limited thereto.

Similarly, FIG. 62 (B) shows a state in which portions of traction member 159B are positioned inside height adjustment protrusion housing passage 157B of height adjustment protrusion housing 154B and height adjustment protrusion housing passage 158B of height adjustment protrusion housing 155B with traction member 159B contracted to a predetermined length in the longitudinal direction thereof or the vertical direction as in FIG. 57B when handle 81 of carrier 2100 is moved downward as shown in FIG. 61, but this is exemplary and the present invention is not limited thereto.

When handle 81 is moved downward as shown in FIG. 61, height adjustment protrusion housing 154A and height adjustment protrusion housing 155A come close to each other or come into contact with each other as shown in FIG. 62 (A), and the distance between traction member upper protrusion 153A and height adjustment protrusion housing 155A may be a predetermined distance apart, but this is exemplary and the present invention is not limited thereto.

(The distance between height adjustment protrusion housing 155A and traction member upper protrusion 153A may be 5 cm or more, or 10 cm or more, or 15 cm or more, but the present invention is not limited thereto.)

Similarly, when handle 81 is moved downward as shown in FIG. 61, height adjustment protrusion housing 154B and height adjustment protrusion housing 155B come close to each other or come into contact with each other as shown in FIG. 62 (B), and the distance between traction member upper protrusion 153B and height adjustment protrusion housing 155B may be a predetermined distance apart, but this is exemplary and the present invention is not limited thereto.

(The distance between height adjustment protrusion housing 155B and traction member upper protrusion 153B may be 5 cm or more, or 10 cm or more, or 15 cm or more, but the present invention is not limited thereto.)

FIG. 62 (A) shows a state in which height adjustment protrusion housing 154A and height adjustment protrusion housing 155A come close to each other or come into contact with each other and therefore height adjustment protrusion moving button 129A is pressed by height adjustment protrusion housing 155A and thus height adjustment protrusion 93A is drawn a predetermined length toward the inside of height adjustment protrusion housing 154A (toward the left in the drawing).

When handle 81 is moved upward as in FIG. 55 from carrier 2100 of FIG. 61, the contracted handle extender 86A, 86B and the contracted traction members 159A, 159 are each extended or stretched in their longitudinal directions, and movable member 20 is pulled upward by a predetermined distance by traction members 159A and 159, and the pair of wheels 32A and 32B are folded toward the center as rod 26A and rod 26B are each rotated by a predetermined angle with their longitudinal directions as the axes of rotation.

FIGS. 63 (A) and 63 (B) exemplarily show traction member 159A'and traction member 159B' of another form and structure which may be applied instead of traction member 159A and traction member 159B in FIGS. 56A and 56B,

(Referring to carrier 2100 of FIG. 55, movable member 20 and second-stage extender 84A may be connected by traction member 159A ' instead of traction member 159A, and similarly, movable member 20 and second-stage extender 84B may be connected by traction member 159B ' instead of traction member 159B.

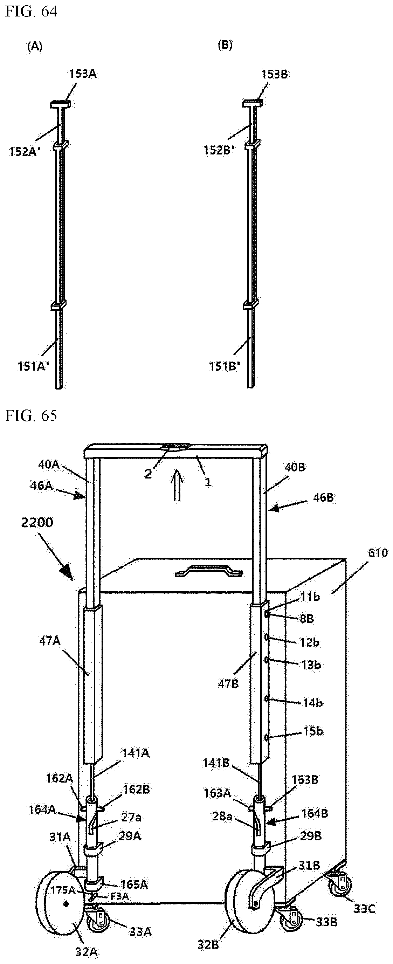

Traction member 159A' is composed of first-stage member 151A' and second-stage member 152A' thereon and thus traction member 159A' may be contracted to a predetermined length in the vertical direction or in the longitudinal direction as shown in FIG. 64 (A). Similarly, traction member 159B' is composed of first-stage member 151B' and second-stage member 152B' thereon and thus traction member 159B' may be contracted to a predetermined length in the vertical direction or in the longitudinal direction as shown in FIG. 64 (B).

Traction member 159A' in FIG. 63 is thin and elongated in a straight line as a whole, but this is exemplary and the present invention is not limited thereto.

Similarly, traction member 159B' in FIG. 63 is thin and elongated in a straight line as a whole, but this is exemplary and the present invention is not limited thereto.

The shape and structure of traction member 159A' are exemplary, and the present invention is not limited thereto.

Similarly, the shape and structure of traction member 159B' are exemplary, and the present invention is not limited thereto.

Referring to carrier 2100, the distance between the top of traction members 159A, 159B and movable member 20 may be increased or decreased.

(The distance between traction member upper protrusions 153A and 153B and movable member 20 may be increased or decreased.)

Referring to carrier 2100, when handle 81 is moved up as shown in FIG. 55 from the state where handle 81 is moved down as shown in FIG. 61, the distance between the top of traction member 159A and movable member 20 may be increased as traction member 159A which is contracted is extended or stretched, and similarly, the distance between the top of traction member 159B and movable member 20 may be increased as traction member 159B which is contracted is extended or stretched. (The distance between traction member upper protrusion 153A and movable member 20 may be increased, and similarly, the distance between traction member upper protrusion 153B and movable member 20 may be increased.)

Regarding carrier 2100, when handle 81 is moved downward as shown in FIG. 61 from the state where handle 81 is moved upward as shown in FIG. 55, the distance between the top of traction member 159A and movable member 20 may be decreased as traction member 159A is contracted, and similarly, the distance between the top of traction member 159B and movable member 20 may be decreased as traction member 159B is contracted. (The distance between traction member upper protrusion 153A and movable member 20 may be decreased, and similarly, the distance between traction member upper protrusion 153B and movable member 20 may be decreased.)

### <Twelfth embodiment>

FIG. 65 is a perspective view showing a rod rotation apparatus according to the twelfth embodiment of the present invention and carrier 2200 including the apparatus.

Hereinafter, likewise, description of the content overlapping with the above-described embodiments will be omitted.

One or more rods 164A and 164B may be coupled to body 610 of carrier 2200 such that rods 164A and 164B are rotatable with their longitudinal directions as the axes of rotation by a predetermined angle.

When the pair of rods 164A and 164B are coupled to body 610 to be rotatable with their longitudinal directions as the axes of rotation, rods 164A and rods 164B may be coupled to body 610 in parallel to each other or substantially parallel to each other with a predetermined distance therebetween from left to right, but the present invention is not limited thereto.

When the pair of rods 164A and 164B are coupled to body 610 so as to be rotatable with their longitudinal directions as the axes of rotation, rod 164A and rod 164B may be coupled to body 610 with a predetermined distance therebetween from left to right and with their longitudinal directions vertical, but the present invention is not limited thereto.

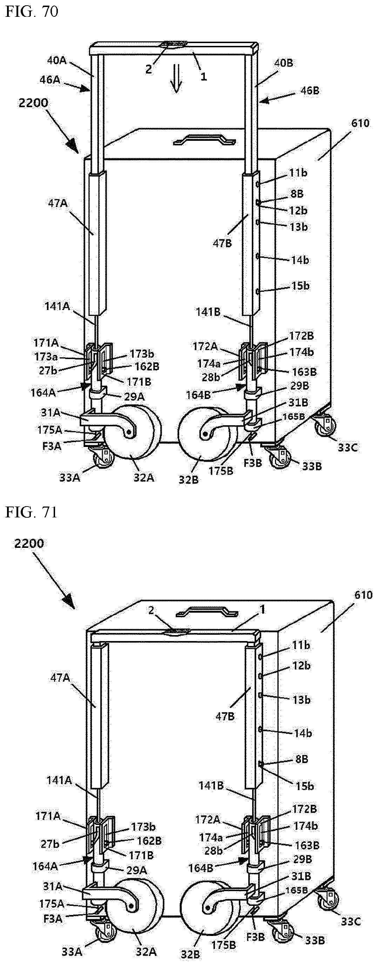

As shown in FIGS. 65 and 70, rod 164A is coupled to body 610 by sleeve bracket 29A and sleeve bracket 165A such that rod 164A may be rotated with its longitudinal direction as the axis of rotation.

Similarly, rod 164B is coupled to body 610 by sleeve bracket 29B and sleeve bracket 165B such that rod 164B may be rotated with its longitudinal direction as the axis of rotation.

As shown in FIGS. 65 and 70, rod 164A is provided with one or more first helixes 27a, 27b, and rod 164B is also provided with one or more first helixes 28a, 28b.

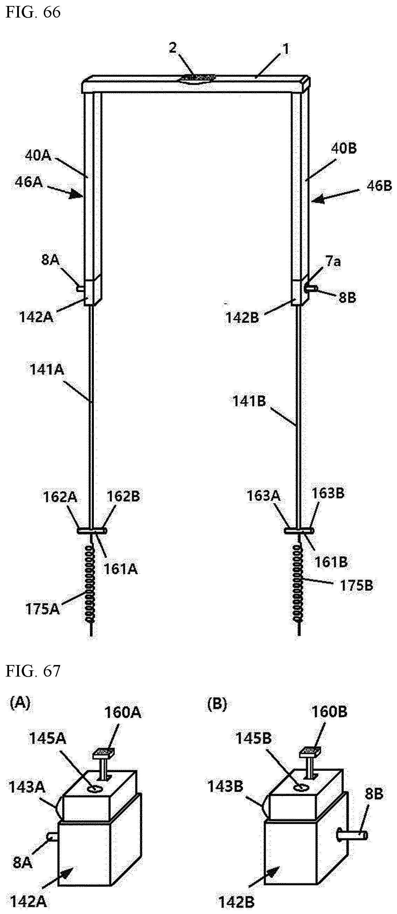

FIG. 66 shows a state where the upper portions of traction member 141A and traction member 141B included in carrier 2200 of FIG. 65 are connected to handle extender 46A and handle extender 46B, and the lower portions of traction member 141A and traction member 141B are connected to movable member 161A and movable member 161B, and restoration member 175A and restoration member 175B are connected to movable member 160A and movable member 160B.

Movable member 161A has or includes one or more first helix coupling portions 162A, 162B, and similarly, movable member 161B has or includes one or more first helix coupling portions 163A, 163B.

First helix coupling portion 162A is inserted into first helix 27b such that first helix coupling portion 162A and first helix 27b are slidably coupled, and similarly, first helix coupling portion 162B is inserted into first helix 27a such that first helix coupling portion 162B and first helix 27a are slidably coupled.

Similarly, first helix coupling portion 163A is inserted into first helix 28a such that first helix coupling portion 163A and first helix 28a are slidably coupled, and similarly, first helix coupling portion 163A is inserted into first helix 28b such that first helix coupling portion 163B and first helix 28b are slidably coupled.

Restoration member 175A and restoration member 175B may be coupled to or installed on body 610.

Restoration member 175A is connected to movable member 161A and body 610 through the inside of rod 164A.

(Restoration member 175A is connected between movable member 161A and connection protrusion F3A formed on body 610 through the inside of rod 164A.)

Similarly, restoration member 175B is connected to movable member 161B and body 610 through the inside of rod 164B.

(Restoration member 175B is connected between movable member 161B and connection protrusion F3B formed on body 610 through the inside of rod 164B.)

Restoration members 175A and 157B are elastic members or tension springs, but the present invention is not limited thereto.

The manner in which the return force of restoration member 175A is applied to movable member 161A is exemplary, and the present invention is not limited thereto.

Similarly, the manner in which the return force of restoration member 175B is applied to movable member 161B is exemplary, and the present invention is not limited thereto.

The manner in which restoration member 175A and restoration member 175B are each coupled to or installed on body 610 is exemplary, and the present invention is not limited thereto.

Movable member 161A, which is pulled upward by traction member 141A, may be returned downward by restoration member 175A.

Similarly, movable member 161B, which is pulled upward by traction member 141B, may be returned downward by restoration member 175B.

As shown in FIG. 66, height adjustment protrusion housing 142A and height adjustment protrusion housing 142B as shown in FIGS. 67A and 67B may be attached to first-stage extender 40A and first-stage extender 40B, respectively.

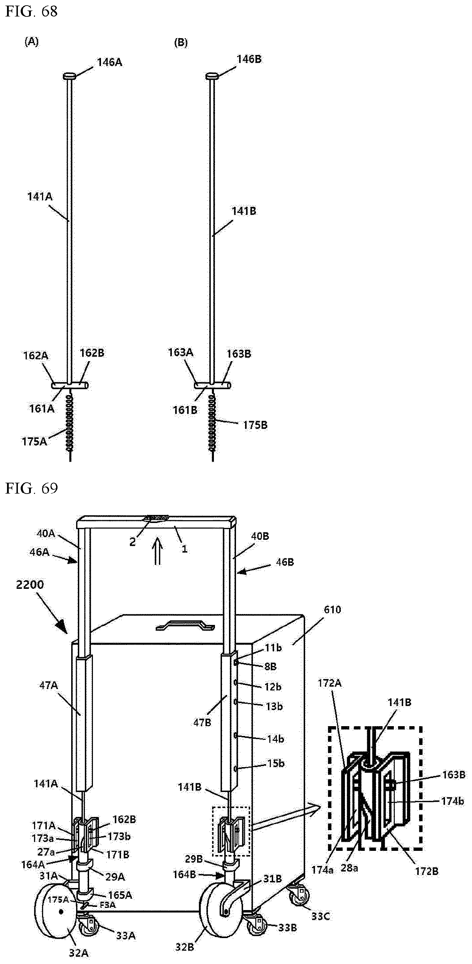

The upper portion of traction member 141A and the upper portion of traction member 141B in FIG. 66 are formed with traction member upper protrusion 146A and traction member upper protrusion 146B, respectively, as shown in FIGS. 68 (A) and 68 (B).

As in the manner in which the upper side of traction member 141A and the upper side of traction member 141B included in carrier 2000 of FIG. 51 are connected to first-stage extender 40A and first-stage extender 40B, the upper side of traction member 141A included in carrier 2200 of FIG. 65 is connected to first-stage extender 40A through the inside of guide member 47A and through height adjustment protrusion housing passage 145A, and similarly, the upper side of traction member 141B included in carrier 2200 of FIG. 65 is connected to first-stage extender 40B through the inside of guide member 47B and through height adjustment protrusion housing passage 145B.

Movable member 160A can be pulled a predetermined distance in a direction by traction member 141A.

(Movable member 161A can be pulled upward a predetermined distance by traction member 141A.)

Similarly, movable member 161B can be pulled a predetermined distance in a direction by traction member 141B.

(Movable member 160B can be pulled upward a predetermined distance by traction member 141B).

FIG. 69 shows a state in which one or more helix coupling portion guide rails 171A, 171B, 172A, and 172B are coupled to body 610 in carrier 2200 of FIG. 65.

A pair of helix coupling portion guide rails 171A and 171B are respectively positioned on both left and right sides of rod 164A, and similarly, a pair of helix coupling portion guide rails 172A and 172B are respectively positioned on both left and right sides of rod 164B.

Helix coupling portion guide rail 172B is formed with helix coupling portion guide slit 174b, and similarly, helix coupling portion guide rail 172A is formed with helix coupling portion guide slit 174a.

Similarly, helix coupling portion guide rail 171A is formed with helix coupling portion guide slit 173a, and similarly, helix coupling portion guide rail 171B is formed with helix coupling portion guide slit 173b.

First helix coupling portion 162A is slidable along first helix 27b and helix coupling portion guide slit 173a, and similarly, first helix coupling portion 162B is slidable along first helix 27a and helix coupling portion guide slit 173b.

Similarly, first helix coupling portion 163A is slidable along first helix 28a and helix coupling portion guide slit 174a, and similarly, first helix coupling portion 163B is slidable along first helix 28b and helix coupling portion guide slit 174b.

Therefore, rod 164A can be rotated by a predetermined angle with its longitudinal direction as the axis of rotation as movable member 160A moves up and down.

Similarly, rod 164B can be rotated by a predetermined angle with its longitudinal direction as the axis of rotation as movable member 161B moves up and down,

FIG. 70 exemplarily shows a state in which handle 1 is slightly moved downward from carrier 2200 of FIG. 69 and thus movable member 161A and movable member 161B are moved downward by the return force of restoration member 175A and the return force of restoration member 175B, and the pair of wheels 32A and 32B are folded toward the center as rod 164A and rod 164B are each rotated by a predetermined angle with their longitudinal directions as the axes of rotation.

FIG. 71 exemplarily shows a state in which handle 1 is moved downward from carrier 2200 of FIG. 70.

When handle 1 is moved upward high as shown in FIG. 69 from the state in which the pair of wheels 32A and 32B are folded toward the center as in carrier 2200 of FIGS. 70 and 71, the pair of wheels 32A and 32B are opened and spread forward as rod 164A and rod 164B are each rotated by a predetermined angle with their longitudinal directions as the axes of rotation.

### <Thirteenth embodiment>

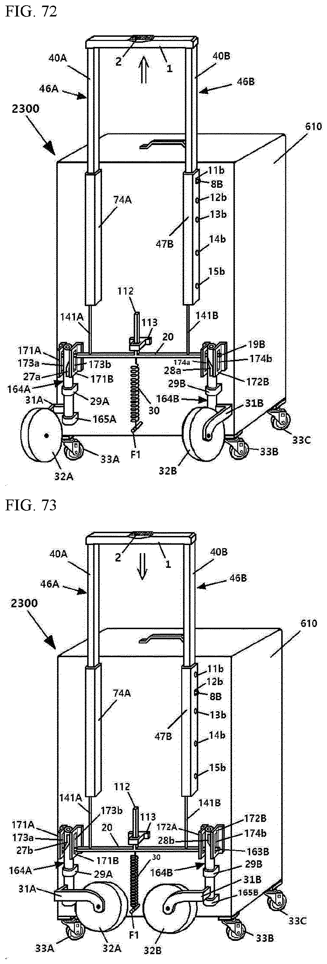

FIG. 72 is a perspective view showing a rod rotation apparatus according to the thirteenth embodiment of the present invention and carrier 2300 including the apparatus.

Hereinafter, likewise, description of the content overlapping with the above-described embodiments will be omitted.

Carrier 2300 in FIG. 72 is similar to carrier 2200 in FIG. 69, but rod 164A and rod 164B are connected by a single movable member 20.

Movable member 20 included in carrier 2300 of FIG. 72 is provided with first helix coupling portion 19A on one side and first helix coupling portion 19B on the other side like movable member 20 of FIG. 8 (A).

First helix coupling portion 19A is inserted into helix coupling portion guide slit 173b, first helix 27a, first helix 27b, and helix coupling portion guide slit 173a so as to be vertically slidable.

Similarly, first helix coupling portion 19B is inserted into helix coupling portion guide slit 174a, first helix 28a, first helix 28b, and helix coupling portion guide slit 174b so as to be vertically slidable.

Referring to carrier 2300 of FIG. 72, traction members 141A and 141B are connected between movable member 20 and handle extenders 46A and 46B.

As in the manner in which the upper side of traction member 141A and the upper side of traction member 141B included in carrier 2000 of FIG. 51 are connected to first-stage extender 40A and first-stage extender 40B, the upper side of traction member 141A included in carrier 2300 of FIG. 72. is connected to first-stage extender 40A through the inside of guide member 47A and through height adjustment protrusion housing passage 145A, and similarly, the upper side of traction member 141B is connected to first-stage extender 40B through the inside of guide member 47B and through height adjustment protrusion housing passage 145B.

Movable member 20 can be pulled a predetermined distance in a predetermined direction by one or more traction members 141A and 141B.

(Movable member 20 can be pulled upward by a predetermined distance by one or more traction members 141A and 141B.)

FIG. 73 exemplarily shows a state in which handle 1 is slightly moved downward from carrier 2300 of FIG. 72 and thus movable member 20 is moved downward by a predetermined distance by the return force of restoration member 30 or by gravity and the return force of restoration member 30, and the pair of wheels 32A and 32B are folded toward the center as rod 164A and rod 164B are each rotated by a predetermined angle with their longitudinal directions as the axes of rotation.

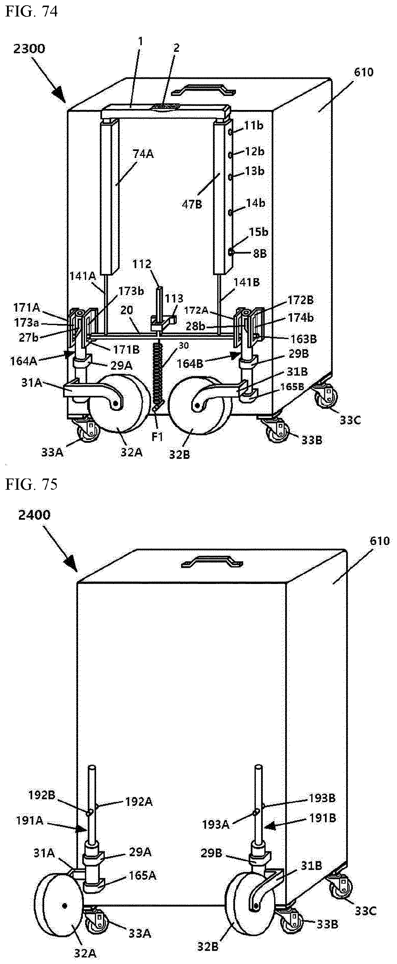

FIG. 74 shows a state in which handle 1 is moved downward from carrier 2300 of FIG. 73.

When handle 1 is moved up as in FIG. 72 from the state in which movable member 20 is moved downward and the pair of wheels 32A, 32B are folded toward the center as in carrier 2300 of FIG. 73 or 74, movable member 20 is moved by being pulled upward by a predetermined distance by traction members 141A and 141B, and restoration member 30 is stretched a predetermined length, and the pair of wheels 32A and 32B are opened and spread forward as rod 164A and rod 164B are each rotated by a predetermined angle with their longitudinal directions as the axes of rotation.

### <Fourteenth embodiment>

FIG. 75 is a perspective view showing a rod rotation apparatus according to the fourteenth embodiment of the present invention and carrier 2400 including the apparatus.

Hereinafter, likewise, description of the content overlapping with the above-described embodiments will be omitted.

As shown in FIGS. 75 to 80, rod rotation apparatus according to the seventeenth embodiment of the present invention includes: rod 191B having at least one second helix coupling portion 193A; movable member 197 having at least one second helix 196a coupled with at least one second helix coupling portion 193A; handle extender 46B including first-stage extender 40B; and traction member 141B which can pull movable member 197 a predetermined distance in a predetermined direction, but the above configuration is exemplary only and is not intended to limit the present invention.

One or more rods 191A and 191B may be coupled to body 610 of carrier 2400 so as to be rotatable by a predetermined angle in the longitudinal direction.

When the pair of rods 191A and 191B are coupled to body 610 so as to be rotatable with their longitudinal directions as the axes of rotation respectively, rod 191A and rod 191B may be coupled to body 610 parallel to each other or substantially parallel to each other with a predetermined distance therebetween from left to right, but the present invention is not limited thereto.

When the pair of rods 191A and 191B are coupled to body 610 so as to be rotatable with their longitudinal directions as the axes of rotation, rod 191A and rod 191B may be coupled to body 610 with a predetermined distance therebetween from left to right and with their longitudinal directions vertical, but the present invention is not limited thereto.

Rod 191A is formed with one or more second helix coupling portions 192A and 192B, and similarly, rod 191B is formed with one or more second helix coupling portions 193A and 193B.

Wheel 32A and wheel 32B may be connected to rod 191A and rod 191B.

(Wheel bracket 31A may be coupled to rod 191A, and wheel 32A may be rotatably coupled to wheel bracket 31A. Similarly, wheel bracket 31B may be coupled to rod 191B, and wheel 32B may be rotatably coupled to wheel bracket 31B.)

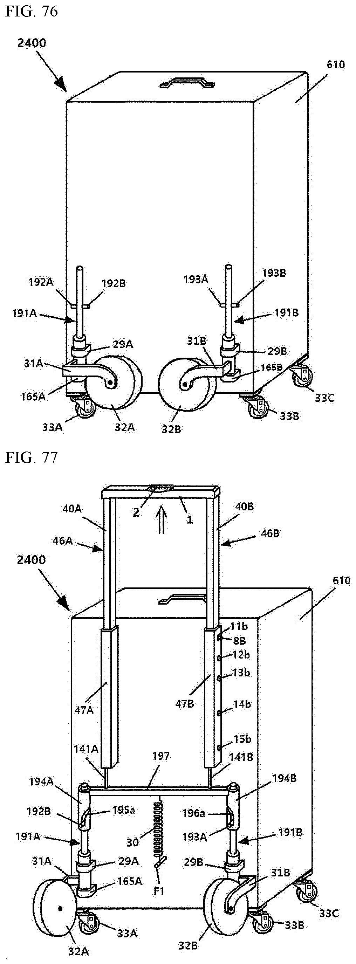

FIG. 76 shows a state in which wheel 32A and wheel 32B are folded toward the center as rod 191A and rod 191B are rotated by a predetermined angle with their longitudinal directions as the axes of rotation from carrier(2400) of FIG. 75.

FIG. 77 shows a state in which movable member 197 having one or more helix tubes 194A and 194B, one or more guide members 47A and 47B, one or more first-stage extender 40A and 40B, handle 1 coupled with one or more first-stage extender 40A, 40B, one or more traction members 141A, 141B, and restoration member 30 are further included in carrier 2400 of FIG. 75.

As shown in FIG. 77, guide member 47A and guide member 47B may be coupled to body 610.

First-stage extender 40A and first-stage extender 40B may be coupled to body 610 to be movable up and down.

First-stage extender 40A and first-stage extender 40B are movable up and down a predetermined distance through the inside of guide member 47A and the inside of guide member 47B.

Handle 1 may be connected to handle extender 46A including first-stage extender 40A and handle extender 46B including first-stage extender 40B.

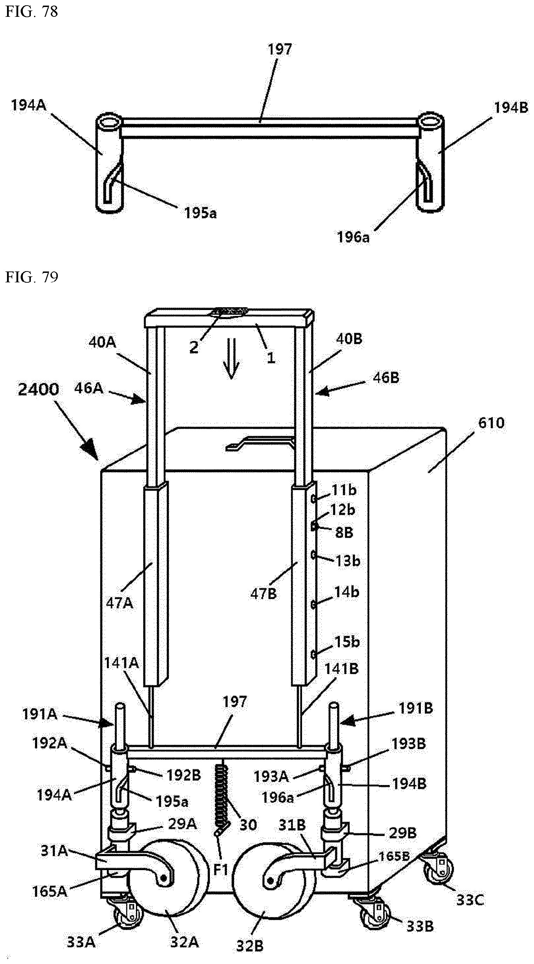

FIG. 78 shows the shape and structure of movable member 197 included in carrier 2400 of FIG. 77 separately: movable member 197 includes at least one helix tube 194A, 194B.

Helix tube 194A is coupled with rod 191A, and helix tube 194B is coupled with rod 191B.

Helix tube 194A is provided with at least one second helix 195a.

(Although not shown in the drawing, a second helix corresponding to second helix 195a formed on helix tube 194A is formed on the opposite side of second helix 195a.)

Similarly, helix tube 194B is provided with at least one second helix 196a.

(Although not shown in the drawing, a second helix corresponding to second helix 196a formed on helix tube 194B is formed on the opposite side of second helix 196a.)

Rod 191A is rotatable with its longitudinal direction as the axis of rotation by a predetermined angle in a state where rod 191A is inserted into helix tube 194A to a predetermined length.

Similarly, rod 191B is rotatable with its longitudinal direction as the axis of rotation by a predetermined angle in a state where rod 191B is inserted into helix tube 194B to a predetermined length.

Second helix coupling portion 192B is inserted into second helix 195a, and similarly, second helix coupling portion 192A is inserted into a second helix formed on the opposite side of second helix 195a such that second helix coupling portion 192B is slidably coupled with second helix 195a, and similarly, second helix coupling portion 192A is slidably coupled with the second helix formed on the opposite side of second helix 195a.

Similarly, second helix coupling portion 193A is inserted into second helix 196a, and similarly, second helix coupling portion 193B is inserted into a second helix opposite to second helix 196a such that second helix coupling portion 193A is slidably coupled with second helix 196a, and similarly, second helix coupling portion 193B is slidably coupled with the second helix opposite to second helix 196a.

The inside of helix tube 194A and the inside of helix tube 194B slide up and down along a predetermined section of rod 191A and a predetermined section of rod 191B as movable member 197 moves up and down and therefore rod 191A and rod 191B are each rotatable by a predetermined angle with its longitudinal direction as the axis of rotation.

To pull movable member 197 a predetermined distance in a direction, traction member 141A is connected between movable member 197 and handle extender 46A, and similarly, traction member 141B is connected between movable member 197 and handle extender 46B.

As in the manner in which the upper side of traction member 141A and the upper side of traction member 141B included in carrier 2000 of FIG. 51 are connected to first-stage extender 40A and first-stage extender 40B, the upper side of traction member 141A included in carrier 2400 of FIG. 77 is connected to first-stage extender 40A through the inside of guide member 47A and through height adjustment protrusion housing passage 145A, and similarly, the upper side of traction member 141B is connected to first-stage extender 40B through the inside of guide member 47B and through height adjustment protrusion housing passage 145B.

Movable member 197 can be pulled upward by a predetermined distance by one or more traction members 141A and 141B.

Restoration member 30 may be coupled to or installed on body 610 of carrier 2400.

Restoration member 30 is connected between movable member 197 and body 610.

(One side of restoration member 30 is connected to movable member 197, and the other side of restoration member 30 is connected to the connection protrusion F1 and thus the other side of restoration member 30 is indirectly connected to body 610.)

The manner in which restoration member 30 is coupled to or installed on body 610 of carrier 2400 is exemplary, and the present invention is not limited thereto.

Movable member 197 moved by being pulled upward by traction members 141A and 141B may be pulled downward by restoration member 30 to be returned.

FIG. 77 exemplarily shows a state in which handle 1 is moved upward and thus movable member 197 is pulled upward by a predetermined distance by one or more traction members 141A and 141B, and restoration member 30 is stretched to a predetermined length, and a pair of wheels 32A and 32B are opened and spread forward.

FIG. 79 exemplarily shows a state in which handle 1 is slightly moved downward from carrier 2400 of FIG. 77, and movable member 197 having helix tube 194A and helix tube 194B is moved downward by the return force of restoration member 30 or by gravity and the return force of restoration member 30, and the pair of wheels 32A and 32B are folded toward the center as rod 191A and rod 191B are each rotated by a predetermined angle with their longitudinal directions as the axes of rotation.

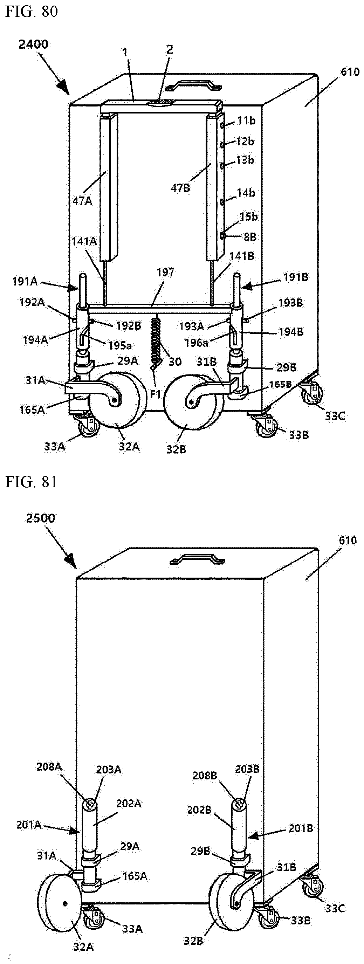

FIG. 80 exemplarily shows a state in which handle 1 is moved downward from carrier 2400 of FIG. 79.

When handle 1 is moved upward high as in FIG. 77 from the state in which movable member 197 is moved downward and the pair of wheels 32A and 32B are folded toward the center as in FIGS. 79 and 80, movable member 197 is pulled upward by a predetermined distance by one or more traction members 141A and 141B, and restoration member 30 is stretched to a predetermined length, and the pair of wheels 32A and 32B are opened and spread forward as rod 191A and rod 191B are each rotated by a predetermined angle with their longitudinal directions as the axes of rotation.

### <Fifteenth embodiment>

FIG. 81 is a perspective view showing a rod rotation apparatus according to the fifteenth embodiment of the present invention and carrier 2500 including the apparatus.

Hereinafter, likewise, description of the content overlapping with the above-described embodiments will be omitted.

One or more rods 201A and 201B may be coupled to body 610 of carrier 2500 so as to be rotatable by a predetermined angle with their longitudinal directions as the axes of rotation.

When the pair of rods 201A and 201B are coupled to body 610 so as to be rotatable with their longitudinal directions as the axes of rotation, rod 201A and rod 201B may be coupled to body 610 in parallel to each other or substantially parallel to each other with a predetermined distance therebetween from left to right, but the present invention is not limited thereto.

Rod 201A includes helix coupling portion tube 202A, and similarly, rod 201B includes helix coupling portion tube 202B.

Helix coupling portion tube 202A has second helix coupling portion 203A, and similarly, helix coupling portion tube 202B has second helix coupling portion 203B.

Second helix coupling portion 203A is provided with helix rod insertion hole 208A, and similarly, second helix coupling portion 203B is provided with helix rod insertion hole 208B.

Wheel 32A may be connected to rod 201A, and similarly, wheel 32B may be connected to rod 201B.

(Wheel bracket 31A may be attached to rod 201A, and wheel 32A may be rotatably coupled to wheel bracket 31A. Similarly, wheel bracket 31B may be attached to rod 201B, and wheel 32B may be rotatably coupled to wheel bracket 31B.)

Carrier 2500 of FIG. 81 shows a state in which the pair of wheels 32A and 32B are opened and spread forward.

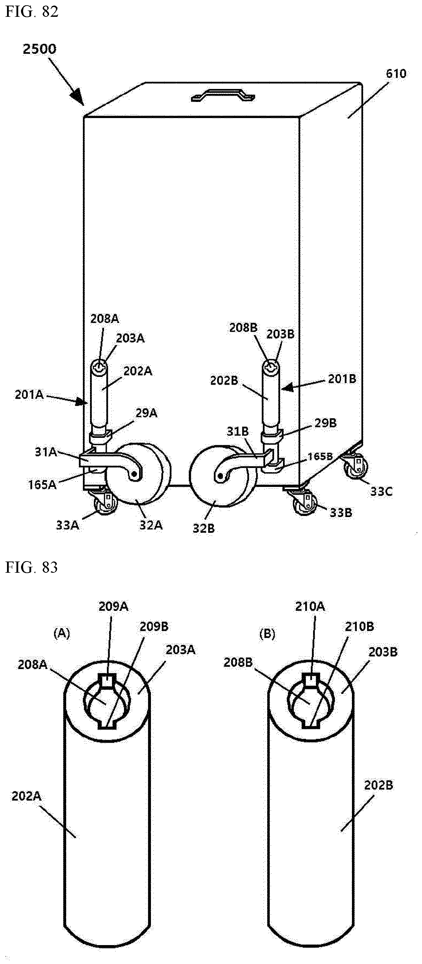

FIG. 82 shows a state in which the pair of wheels 32A and 32B are folded toward the center as rod 201A and rod 201B are each rotated by a predetermined angle with their longitudinal directions as the axes of rotation from carrier 2500 of FIG. 81.

FIGS. 83(A) and 83(B) show separately the enlarged view of helix coupling portion tube 202A and helix coupling portion tube 202B included in rod 201A and rod 201B, respectively.

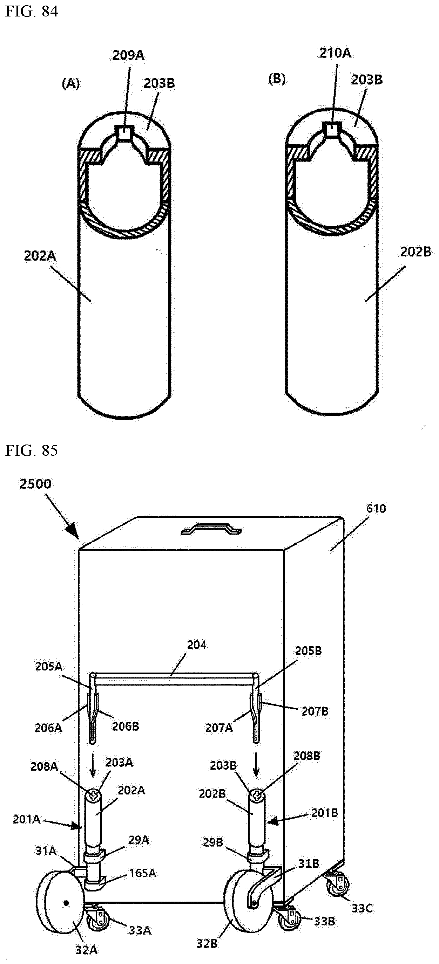

FIGS. 84(A) and 84(B) show a state in which a part of helix coupling portion tube 202A of FIG. 83(A) and a part of helix coupling portion tube 202B of FIG. 83(B) are cut and removed, respectively.

As shown in FIG. 83, helix rod insertion hole 208A includes one or more helix coupling grooves 209A and 209B, and similarly, helix rod insertion hole 208B includes one or more helix coupling grooves 210A and 210B.

FIG. 85 shows a state in which movable member 204 is positioned above rod 201A and rod 201B in carrier 2500 in FIG. 81.

Movable member 204 has at least one helix rod 205A, 205B.

Helix rod 205A is provided with one or more second helixes 206A, 206B.

### Similarly, helix rod 205B is provided with one or more second helixes 207A, 207B

Helix rod 205A is inserted into helix rod insertion hole 208A and thus second helix 206A is inserted into helix coupling groove 209A so as to be slidably movable and therefore second helix 206A is slidably coupled with second helix coupling portion 203A, and similarly, second helix 206B is inserted into helix coupling groove 209B so as to be slidably movable and therefore second helix 206B is slidably coupled with second helix coupling portion 203A.

Similarly, helix rod 205B is inserted into helix rod insertion hole 208B and thus second helix 207A is inserted into helix coupling groove 210B so as to be slidably movable and therefore second helix 207A is slidably coupled with second helix coupling portion 203B, and similarly, second helix 207B is inserted into helix coupling groove 210A so as to be slidably movable and therefore second helix 207B is slidably coupled with second helix coupling portion 203B.

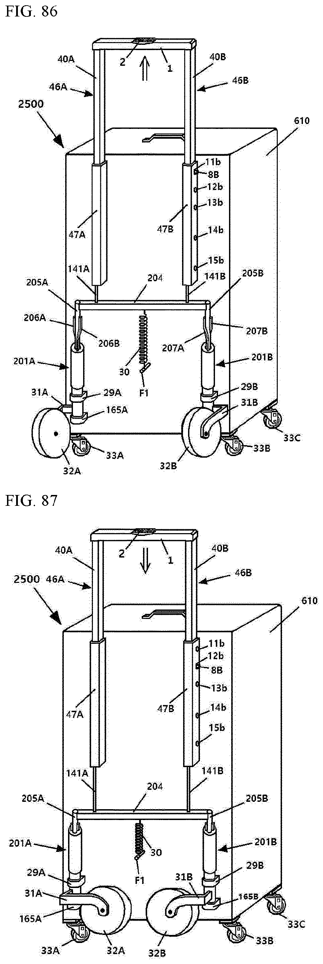

FIG. 86 shows a state in which guide members 47A and 47B, handle extender 46A including first-stage extender 40A, handle extender 46B including first-stage extender 40B, handle 1 coupled to handle extender 46A and handle extender 46B, traction members 141A, 141B, and restoration member (30) are further included in carrier 2500 of FIG. 85.

As shown in FIG. 86, helix rod 205A is inserted into helix rod insertion hole 208A, and similarly, helix rod 205B is inserted into helix rod insertion hole 208B, and guide members 47A and 47B are coupled to body 610, and first-stage extender 40A and 40B are coupled to body 610 so as to be slidable by a predetermined distance.

First-stage extender 40A may slide a predetermined distance in the longitudinal direction thereof or the vertical direction through the inside of guide member 47A, and similarly, first-stage extender 40B may slide a predetermined distance in the longitudinal direction thereof or the vertical direction through the inside of guide member 47B.

Referring to carrier 2500 of FIG. 86, traction members 141A and 141B are connected between movable member 204 and handle extender 46A and 46B to pull movable member 204 a predetermined distance in a predetermined direction.

The lower side of traction member 141A included in carrier 2500 of FIG. 86 is connected to movable member 204, and similarly, the lower side of traction member 141B is connected to movable member 204.

As in the manner in which the upper side of traction member 141A is connected to first-stage extender 40A, and similarly, the upper side of traction member 141B is connected to first-stage extender 40B in carrier 2000 of FIG. 51, the upper side of traction member 141A included in carrier 2500 of FIG. 86 is connected to first-stage extender 40A through the inside of guide member 47A and through height adjustment protrusion housing passageway 145A, and similarly, the upper side of traction member 141B is connected to first-stage extender 40B through the inside of guide member 47B and through height adjustment protrusion housing passageway 145B.

Movable member 204 can be pulled upward by a predetermined distance by one or more traction members 141A and 141B.

Restoration member 30 may be coupled to or installed on body 610 of carrier 2500.

Restoration member 30 is connected between movable member 204 and body 610 to return movable member 204 moved by being pulled upward by traction members 141A and 141B downward.

(Restoration member 30 is connected between movable member 204 and connection protrusion F1.)

The manner in which restoration member 30 is coupled to or installed on body 610 of carrier 2500 is exemplary, and the present invention is not limited thereto.

Carrier 2500 of FIG. 86 shows a state in which movable member 204 is pulled upward by a predetermined distance by traction members 141A and 141B as handle 1 is moved upward in a state where helix rod 205A is inserted into helix rod insertion hole 208A to a predetermined depth, and similarly, helix rod 205B is inserted into helix rod insertion hole 208B to a predetermined depth, and the pair of wheels 32A and 32B are opened and spread forward.

FIG. 87 exemplarily shows a state in which movable member 204 is moved downward by the return force of restoration member 30 or by gravity and the return force of restoration member 30 as handle 1 is slightly moved downward from carrier 2500 of FIG. 86, and the pair of wheels 32A and 32B are folded toward the center as rod 201A and rod 201B are each rotated by a predetermined angle with their longitudinal directions as the axes of rotation.

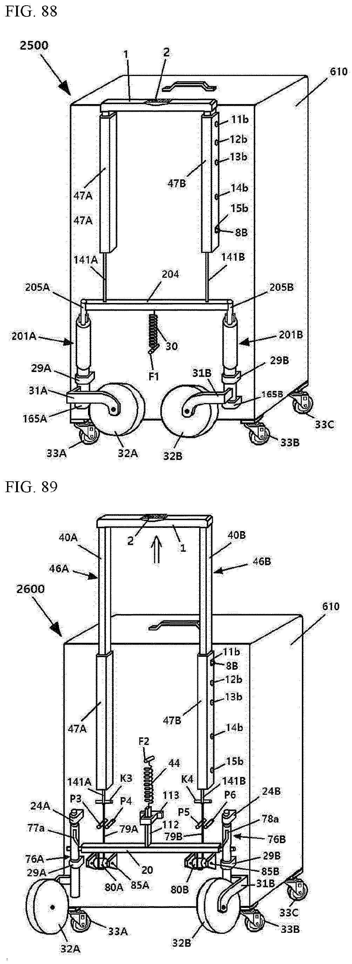

FIG. 88 exemplarily shows a state in which handle 1 is moved downward from carrier 2500 of FIG. 87.

When handle 1 is moved upward high as shown in FIG. 86 from the state in which movable member 204 is moved downward and restoration member 30 is contracted to a predetermined length and the pair of wheels 32A and 32B are folded toward the center as in carrier 2500 of FIG. 87 or FIG. 88, movable member 204 is moved by being pulled upward a predetermined distance by traction members 141A and 141B, and restoration member 30 is stretched to a predetermined length, and the pair of wheels 32A and 32B are opened and spread forward as rod 201A and rod 201B are each rotated by a predetermined angle with their longitudinal directions as the axes of rotation.

### <Sixteenth embodiment>

FIG. 89 is a perspective view showing a rod rotation apparatus according to the sixteenth embodiment of the present invention and carrier 2600 including the apparatus.

Hereinafter, likewise, description of the content overlapping with the above-described embodiments will be omitted.

Carrier 2600 of FIG. 89 is similar to carrier 1500 of FIG. 21, but the upper portion of traction member 141A and the upper portion of traction member 141B are connected to handle extender 46A and handle extender 46B.

Referring to carrier 2600 of FIG. 89, movable member 20 and handle extender 46A are connected by traction member 141A; traction member 141A included in carrier 2600 of FIG. 89 includes second direction-changing member 79A.

Still referring to carrier 2600 of FIG. 89, movable member 20 and handle extender 46B are connected by traction member 141B; traction member 141B included in carrier 2600 of FIG. 89 includes second direction-changing member 79B.

One side of second direction-changing member 79A is connected to movable member 20, and similarly, one side of second direction-changing member 79B is connected to movable member 20.

As in the manner in which the upper side of traction member 141A is connected to first-stage extender 40A and, similarly, the upper side of traction member 141B is connected to first-stage extender 40B in carrier 2000 of FIG. 51, the upper side of traction member 141A included in carrier 2600 of FIG. 89 is connected to first-stage extender 40A through inside of guide member 47A and through height adjustment protrusion housing passageway 145A, and similarly, the upper side of traction member 141B is connected to first-stage extender 40B through inside of guide member 47B and through height adjustment protrusion housing passageway 145B.

Second direction-changing member 79A and second direction-changing member 79B may each be, for example, a line of predetermined length such as a rope or a cable, or may be in the shape of a strip of a predetermined length which is thin and has a predetermined width, but the present invention is not limited thereto.

First direction-changing members 80A and 80B may be coupled to or installed on body 610 of carrier 2600 of FIG. 89.

In the same manner as second direction-changing member 79 moves a predetermined distance via first direction-changing member 80 in carrier 1500 of FIG. 21, second direction-changing member 79A may move a predetermined distance via first direction-changing member 80A, and similarly, second direction-changing member 79B may move a predetermined distance via first direction-changing member 80B.

It is preferable that first direction-changing member 80A and first direction-changing member 80B are coupled to body 610 so as to be rotatable with their shafts 85A and 85B as rotation axes for smooth movement of second direction-changing member 79A and second direction-changing member 79B, but the present invention is not limited thereto.

The manner in which second direction-changing members 80A and 80B are coupled to or installed on body 610 is illustrative, and the present embodiment is not limited thereto.

Traction member 141A included in carrier 2600 may move a predetermined distance via first direction-changing member 80A, and similarly, traction member 141B included in carrier 2600 may move a predetermined distance through via first direction-changing member 80B.

(Second direction-changing member 79A included in traction member 141A may move a predetermined distance via first direction-changing member 80A, and similarly, second direction-changing member 79B included in traction member 141B may move a predetermined distance via first direction-changing member 80B.)

Movable member 20 may be pulled a predetermined distance in a predetermined direction by one or more traction members 141A and 141B.

(Movable member 20 may be pulled downward by a predetermined distance by one or more traction members 141A and 141B.)

Restoration member 44 may be coupled to or installed on body 610.

To return movable member 20 which is pulled downward by traction members 141A and 141B upward, one side of restoration member 44 is indirectly connected to movable member 20 with balance bar 112 interposed therebetween, and the other side is indirectly connected to body 610 with connection protrusion F2 interposed therebetween.

The manner in which restoration member 44 is coupled to or installed on body 610 is exemplary, and the present invention is not limited thereto.

Restoration member 44 is an elastic member or a tension spring, but the present invention is not limited thereto.

Movable member 20 may be moved by being pulled upward by restoration member 44.

(Movable member 20 may be returned upward by the return force of restoration member 44.)

The manner in which the return force of restoration member 44 is applied to movable member 20 is exemplary, and the present invention is not limited thereto.

Traction member 141A may be provided with first projection K3, and similarly, traction member 141B may be provided with first projection K4.

Body 610 may be provided with second projections P3 and P4 and second projections P5 and P6.

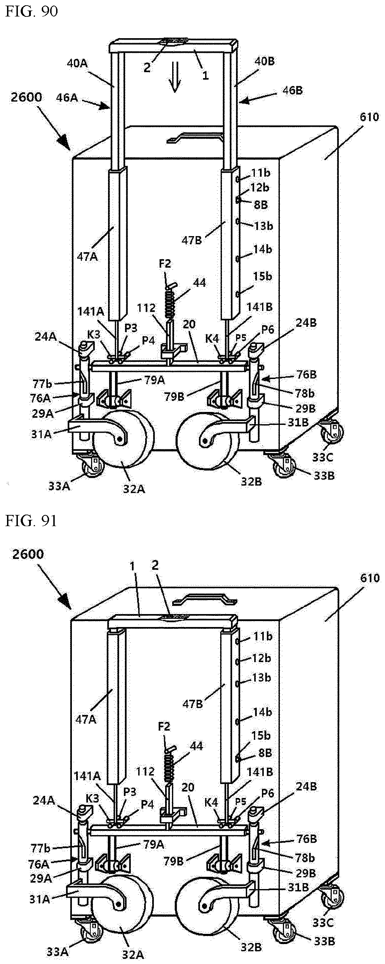

When handle 1 is slightly moved downward as shown in FIG. 90 from the state in which handle 1 is moved upward and the pair of wheels 32A and 32B are opened and spread forward as in carrier 2600 of FIG. 89, movable member 20 is moved upward by the return force of restoration member 44, and the pair of wheels 32A and 32B are folded toward the center as rod 76A and rod 76B are rotated by a predetermined angle with their longitudinal directions as the axes of rotation.

FIG. 91 shows a state in which handle 1 is moved downward from carrier 2600 of FIG. 90.

When traction member 141A and traction member 141B are moved downward as in carrier 2600 of FIG. 90 or 91, first projection K3 is caught by second projections P3 and P4, and similarly, first projection K4 is caught by second projections P5 and P6 and therefore traction member 141A and traction member 141B can be prevented from descending further downward.

When handle 1 is moved upward high as shown in FIG. 89 from the state in which movable member 20 is moved upward and restoration member 44 is contracted by a predetermined length and the pair of wheels 32A and 32B are folded toward the center as in carrier 2600 of FIG. 90 or FIG. 91, movable member 20 is pulled downward by a predetermined distance by traction members 141A and 141B, and restoration member 44 is stretched a predetermined length, and the pair of wheels 32A and 32B are opened and spread forward as rod 76A and rod 76B are each rotated by a predetermined angle with their longitudinal directions as the axes of rotation.

### <Seventeenth embodiment>

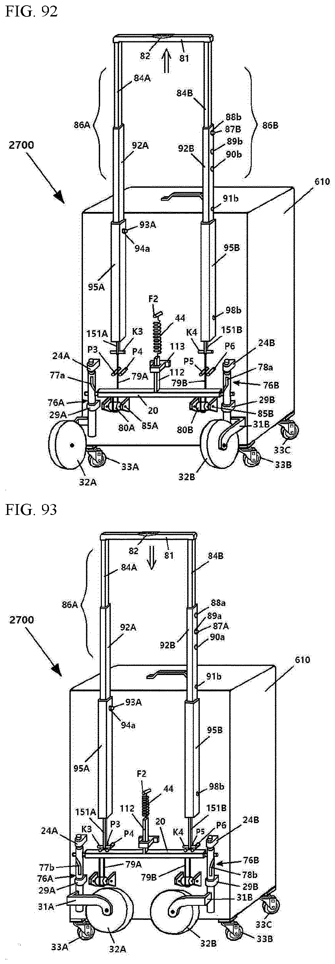

FIG 92 is a perspective view showing a rod rotation apparatus according to the seventeenth embodiment of the present invention and carrier 2700 including the apparatus.

Hereinafter, likewise, the description overlapping with the embodiments described above may be omitted

Carrier 2700 of FIG. 92 is similar to carrier 2600 of FIG. 89, but handle extender 86A and handle extender 86B of carrier 2700 of FIG. 92 each have a two-stage structure in a telescopic manner like carrier 2100 of FIG. 55.

Referring to carrier 2700 of FIG. 92, movable member 20 and handle extender 86A are connected by traction member 159A as shown in FIG. 56A, but traction member 159A included in carrier 2700 includes second direction-changing member 79A.

Similarly, movable member 20 and handle extender 86B of carrier 2700 in FIG. 92 are connected by traction member 159B as shown in FIG. 56B, but traction member 159B included in carrier 2700 includes second direction-changing member 79B.

(Referring to carrier 2700 of FIG. 92, movable member 20 and handle extender 86A may be connected by traction member 159A' as shown in FIG. 63(A), and traction member 159A' may include second direction-changing member 79A.)

(Referring to carrier 2700 of FIG. 92, movable member 20 and handle extender 86B may be connected by traction member 159B' as shown in FIG. 63(B), and traction member 159B' may include second direction-changing member 79B.)

Movable member 20 and first-stage member 151A are connected by second direction-changing member 79A, and similarly, movable member 20 and first-stage member 151B are connected by second direction-changing member 79B.

The upper portion of traction member 159A included in carrier 2700 of FIG. 92 may be connected to second-stage extender 84A through the inside of guide member 95A, the inside of first-stage extender 92A, and height adjustment protrusion housing passageways 157A, 158A as in FIG. 58.

Similarly, the upper portion of traction member 159B included in carrier 2700 of FIG. 92 may be connected to second-stage extender 84B through the inside of guide member 95B, the inside of first-stage extender 92B, and height adjustment protrusion housing passageways 157B and 158B as in FIG. 58.

Traction member 159A included in carrier 2700 may move a predetermined distance via first direction-changing member 80A, and similarly, traction member 159B included in carrier 2700 may move a predetermined distance via first direction-changing member 80B.

(Second direction-changing member 79A included in traction member 159A can move a predetermined distance via first direction-changing member 80A, and similarly, second direction-changing member 79B included in traction member 159B can move a predetermined distance via first direction-changing member 80B.)

Movable member 20 can be pulled a predetermined distance in predetermined direction by one or more traction members 159A, 159B.

Movable member 20 can be pulled downward by a predetermined distance by traction member 159A including second direction-changing member 79A, and similarly, movable member 20 can be pulled downward by a predetermined distance by traction member 159B including second direction-changing member 79B.

Movable member 20 which is pulled downward a predetermined distance by traction member 159A including second direction-changing member 79A and by traction member 159B including second direction-changing member 79B can be returned upward by restoration member 44.

FIG. 92 shows a state in which handle 81 is moved up, and movable member 20 is pulled downward by a predetermined distance by traction member 159A including second direction-changing member 79A and by traction member 159B including second direction-changing member 79B and therefore restoration member 44 is stretched a predetermined length, and the pair of wheels 32A and 32B are opened and spread forward.

FIG. 93 shows a state in which handle 81 is slightly moved downward from carrier 2700 of FIG. 92 and thus movable member 20 is moved upward by the return force of restoration member 44, and the pair of wheels 32A and 32B are folded toward the center as rod 76A and rod 76B are each rotated by a predetermined angle with their longitudinal directions as the axes of rotation.

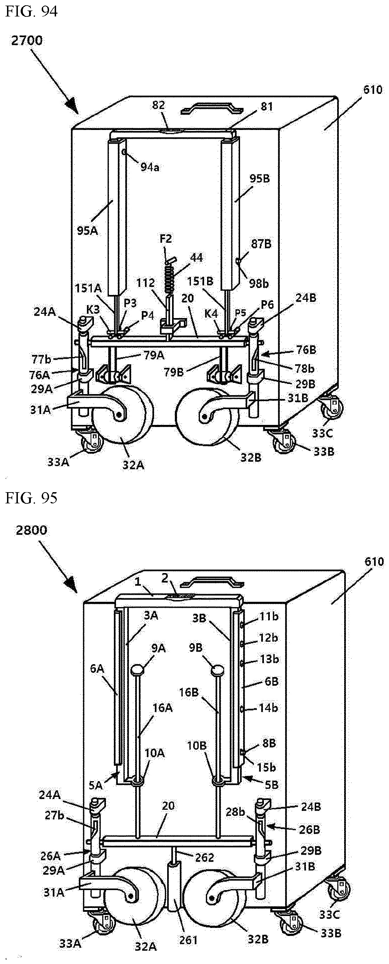

FIG. 94 shows a state in which handle 81 is moved downward from carrier 2700 of FIG. 93.

When handle 81 is moved high in the upward direction as shown in FIG. 92 from the state in which movable member 20 is moved upward and the pair of wheels 32A and 32B are folded toward the center as in carrier 2700 of FIG. 93 or 94, movable member 20 is pulled downward by a predetermined distance by traction member 159A including second direction-changing member 79A and by traction member 159B including second direction-changing member 79B and therefore restoration member 44 is stretched by a predetermined length, and the pair of wheels 32A and 32B are opened and spread forward as rod 76A and rod 76B are each rotated by a predetermined angle with their longitudinal directions as the axes of rotation.

### <Eighteenth embodiment>

FIG. 95 is a perspective view showing a rod rotation apparatus according to the eighteenth embodiment of the present invention and carrier 2800 including the apparatus.

Hereinafter, likewise, description of the content overlapping with the above-described embodiments will be omitted.

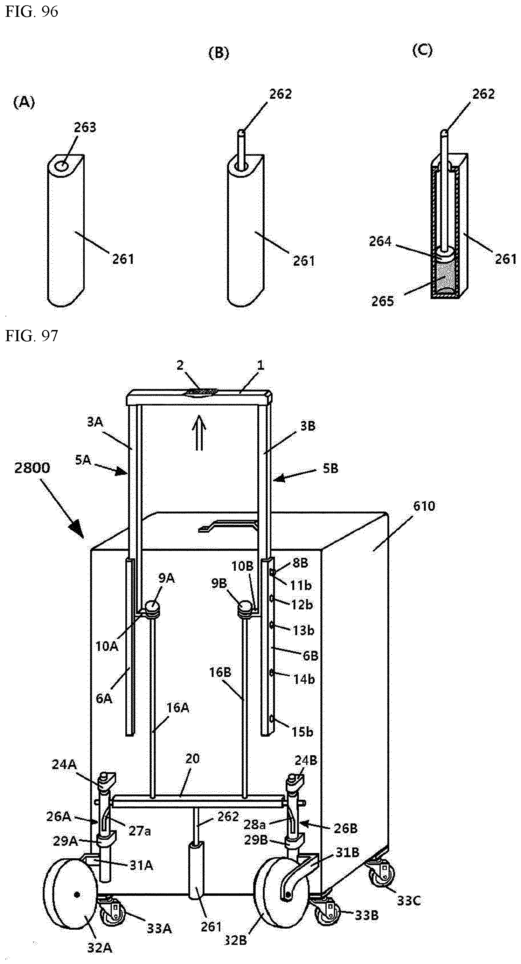

Carrier 2800 of FIGS. 95, 97, and 99 is the same as carrier 1200 of FIGS. 7, 10, and 11, but restoration member 30 included in carrier 1200 is made of an elastic member, while restoration member 265 included in carrier 2800 is made of a material positioned inside cylinder 261 to which piston 264 is coupled as shown in FIG. 96.

The material positioned inside cylinder 261 to which piston 264 is coupled may be made of, for example, gas or liquid, or a mixture of gas and liquid.

FIG. 96 (A) illustrates the shape of cylinder 261 coupled to body 610 of carrier 2800 separately.

Piston rod moving hole 263 is formed on the upper portion of cylinder 261 so that piston rod 262 may move a predetermined distance toward the inside and the outside of piston rod moving hole 263.

FIG. 96 (B) shows a state in which piston rod 262 protrudes a predetermined length above piston rod moving hole 263.

FIG. 96 (C) exemplarily shows a state in which a part of cylinder 261 of FIG. 96 (B) is cut and removed, and piston 264 is positioned inside cylinder 261, and piston rod 262 coupled with piston 264 protrudes a predetermined length out of piston rod moving hole 263, and restoration member 265 is positioned inside cylinder 261 under piston 264.

(In reality, when a part of cylinder 261 is cut off and removed as shown in FIG. 96C, restoration member 265 may flow out if it is a liquid or come out if it is a gas.)

The manner in which restoration member 265 is coupled to or installed on body 610 with restoration member 265 positioned inside cylinder 261 to which piston 264 is coupled is exemplary, and the present invention is not limited thereto.

Referring to carrier 2800 of FIG. 95, as restoration member 30 included in carrier 1200 of FIG. 7 is in a contracted state, restoration member 265 positioned inside cylinder 261 is in a contracted state and therefore movable member 20 connected with piston rod 262 is pulled downward.

Movable member 20 may be returned downward by restoration member 265 imparting a return force to movable member 20 in the downward direction.

Carrier 2800 of FIG. 97 shows a state in which handle 1 is moved upward from carrier 2800 of FIG. 95 and movable member 20 is pulled upward by a predetermined distance by traction members 16A and 16B and therefore the pair of wheels 32A and 32B are opened and spread forward as rod 26A and rod 26B are each rotated by a predetermined angle with their longitudinal directions as the axes of rotation.

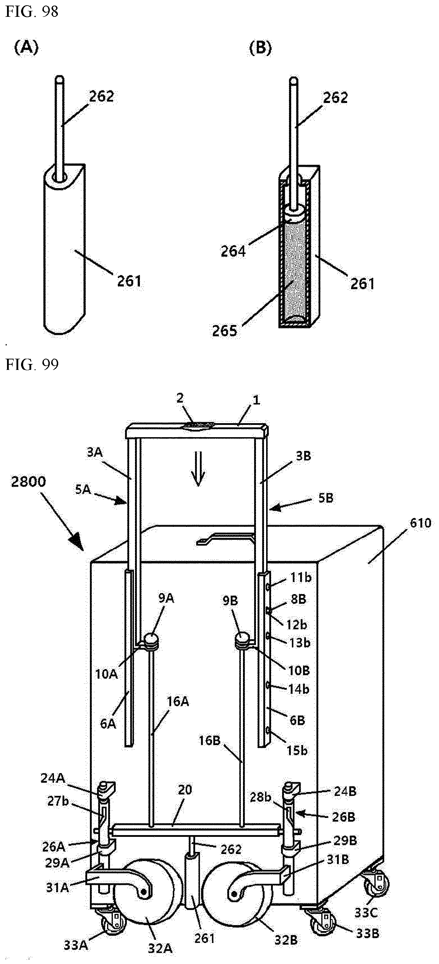

FIG. 98 (A) shows a state in which piston rod 262 exits a predetermined length above the top of cylinder 261 when movable member 20 is moved upward as in carrier 2800 of FIG. 97.

FIG. 98 (B) shows a state in which a part of cylinder 261 is cut off and removed in FIG. 98 (A).

As restoration member 30 is tensioned when movable member 20 is moved upward as in carrier 1200 of FIG. 10, restoration member 265 is in a tensioned state inside cylinder 261 when movable member 20 is moved upward as in carrier 2800 of FIG. 97.

FIG. 99 shows a state in which handle 1 is slightly moved downward from carrier 2800 of FIG. 97, and movable member 20 is moved downward by the return force of restoration member 265 or by gravity and the return force of restoration member 265, and the pair of wheels 32A and 32B are folded toward the center as rod 26A and rod 26B are each rotated by a predetermined angle with their longitudinal directions as the axes of rotation.

### <Ninth embodiment>

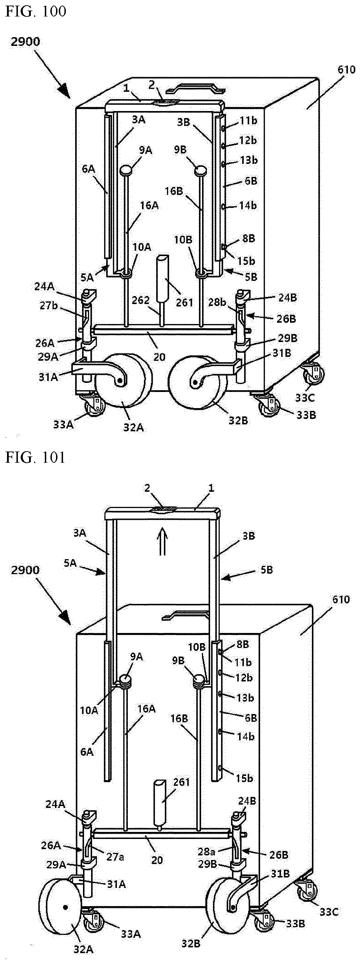

FIG. 100 is a perspective view showing a rod rotation apparatus according to the nineteenth embodiment of the present invention and carrier 2900 including the apparatus.

Hereinafter, likewise, description of the content overlapping with the above-described embodiments will be omitted.

Carrier 2900 of FIGS. 100, 101, and 102 is the same as carrier 2800 of FIGS. 95, 97, and 99, but the positional state of cylinder 261 and piston rod 262 is different.

Cylinder 261 included in carrier 2900 may be positioned above movable member 20, and piston rod 262 may protrude a predetermined length downward of cylinder 261.

Moreover, cylinder 261 and piston rod 262 included in carrier 2900 are upside down as compared with those included in carrier 2800.

In carrier 1800 of FIG. 42, restoration member 134 made of an elastic member(compression spring) is expanded as shown in FIG. 43 (C) to push movable member 20 downward. Similarly, restoration member 265 included in carrier 2900 of FIG. 100 pushes movable member 20 downward by expanding inside cylinder 261.

(Restoration member 265 included in carrier 2900 imparts a return force to movable member 20 in the downward direction such that movable member 20 can be returned downward.)

When handle 81 is moved upward as in FIG. 39 from carrier 1800 of FIG. 42, restoration member 134 is compressed as in FIG. 43B. Similarly, when handle 1 is moved upward as in carrier 2900 of FIG. 101 from carrier 2900 of FIG. 100, restoration member 265 is in a compressed state inside cylinder 261.

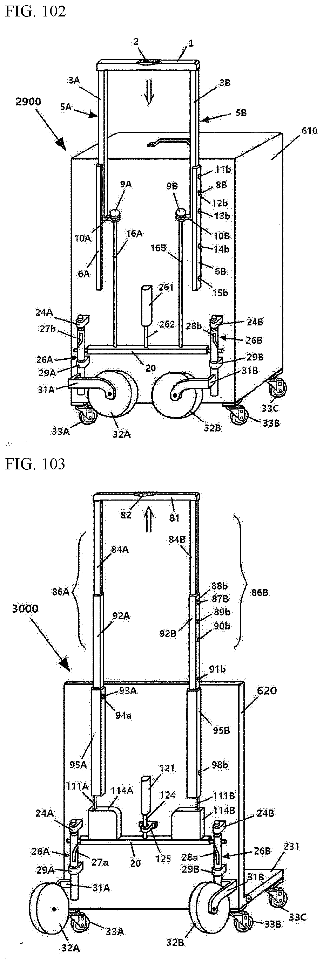

FIG. 102 shows a state in which handle 1 is slightly moved downward from carrier 2900 of FIG. 101, and movable member 20 is moved downward by the return force of restoration member 265 positioned inside cylinder 261 or by gravity and the return force of restoration member 265, and the pair of wheels 32A and 32B are folded toward the center as rod 26A and rod 26B are each rotated by a predetermined angle with their longitudinal directions as the axes of rotation.

### <Twentieth embodiment>

FIG. 103 is a perspective view showing a rod rotation apparatus according to the twentieth embodiment of the present invention and carrier 3000 including the apparatus.

Hereinafter, likewise, description of the content overlapping with the above-described embodiments will be omitted.

Carrier 3000 of FIG. 103 is the same as carrier 1800 of FIG. 39, but the shape of body 620 is different.

The shape of body 620 is exemplary, and the present invention is not limited thereto.

Ledge 231 may be coupled to body 620, and body 620 and ledge 231 may form an English alphabet capital letter L as a whole, but the present invention is not limited thereto.

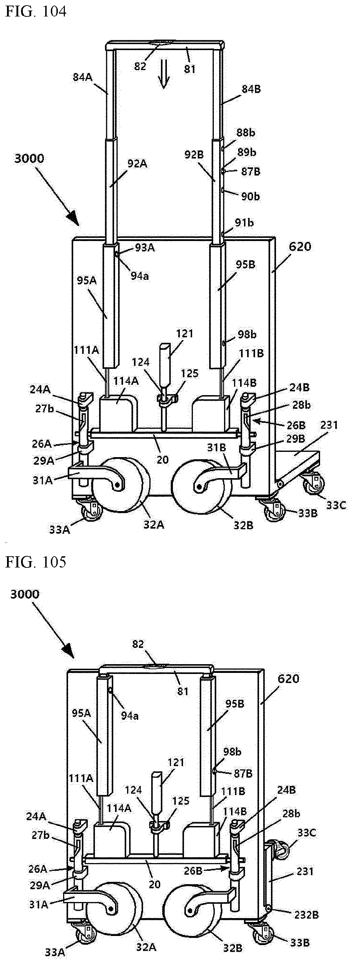

FIG. 104 shows a state in which handle 81 is slightly moved downward from carrier 3000 of FIG. 103 and the pair of wheels 32A and 32B are folded toward the center.

FIG. 105 shows a state in which handle 81 is moved downward from carrier 3000 of FIG. 104, and ledge 231 is flipped upward about hinge axis 232B to be in close contact with body 620 or positioned near body 620.

### <Twenty first Embodiment>

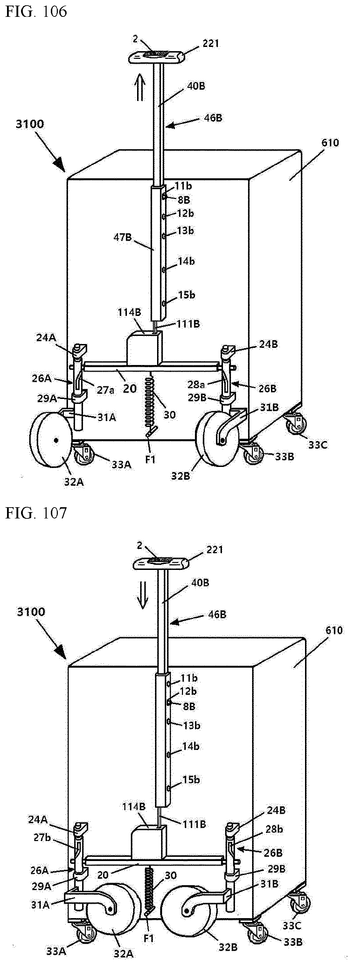

FIG. 106 is a perspective view showing a rod rotation apparatus according to the twenty first embodiment of the present invention and carrier 3100 including the apparatus.

Hereinafter, likewise, description of the content overlapping with the above-described embodiments will be omitted.

Carrier 3100 of FIG. 106 is similar to carrier 1700 of FIG. 33, but one guide member 47B is coupled to body 610, and one first-stage extender 40B is coupled to body 610 so as to be movable up and down a predetermined distance along the inside of guide member 47B.

It is preferable that guide member 47B is positioned at the center of the left and right of body 610 and is coupled to body 610 and its longitudinal direction is vertical, but the present invention is not limited thereto.

Handle 221 may be coupled to handle extender 46B including first-stage extender 40B.

Preferably, handle 221 is coupled to the top of handle extender 46B, but the present invention is not limited thereto.

FIG. 107 shows a state in which handle 221 is slightly moved downward from carrier 3100 of FIG. 106, and the pair of wheels 32A and 32B are folded toward the center as rod 26A and rod 26B are each rotated by a predetermined angle with their longitudinal directions as the axes of rotation.

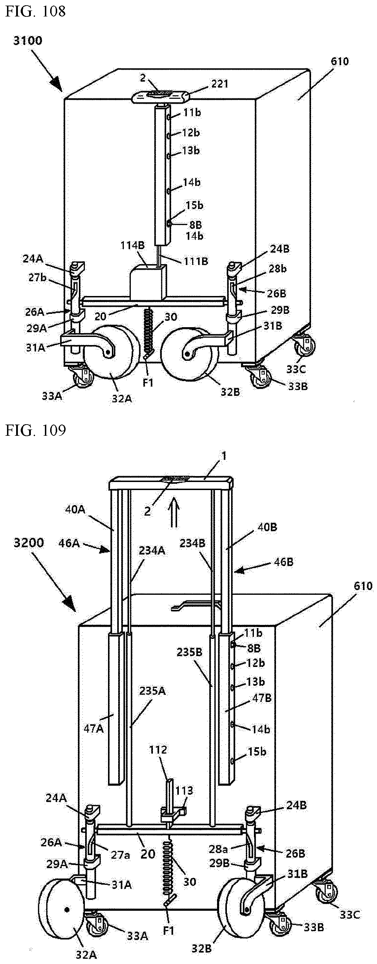

FIG. 108 illustrates a state in which handle 221 is moved downward from carrier 3100 of FIG. 107.

### <Twenty second embodiment>

FIG. 109 is a perspective view showing a rod rotation apparatus according to the twenty second embodiment of the present invention and carrier 3200 including the apparatus.

Hereinafter, likewise, description of the content overlapping with the above-described embodiments will be omitted.

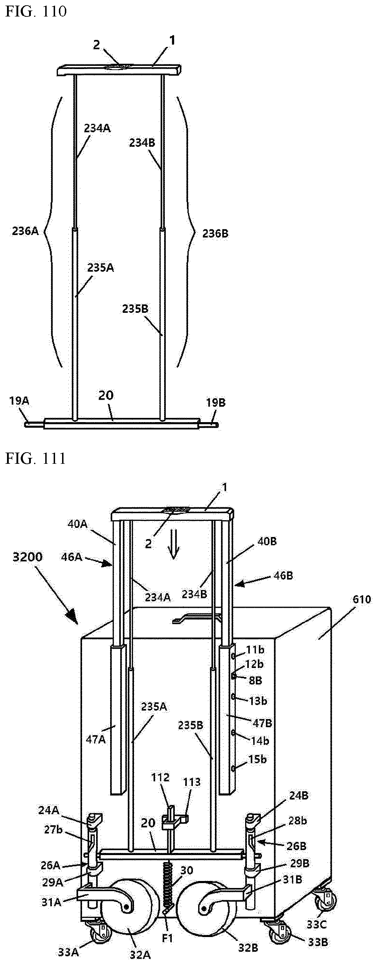

Traction members 236A and 236B are connected between movable member 20 and handle 1 as shown in FIG. 110 to pull movable member 20 included in carrier 3200 a predetermined distance in a predetermined direction.

(Movable member 20 can be pulled upward by a predetermined distance by one or more traction members 236A, 236B.)

Traction member 236A consists of first-stage member 235A and second-stage member 234A thereon, and thus traction member 236A has a two-stage structure.

Similarly, traction member 236B consists of first-stage member 235B and second-stage member 234B thereon, and thus traction member 236B has a two-stage structure.

Referring to carrier 3200 of FIG. 109, traction member 236A is positioned outside guide member 47A and handle extender 46A, but is positioned near guide member 47A and handle extender 46A.

Similarly, traction member 236B is positioned outside guide member 47B and handle extender 46B, but is positioned near guide member 47B and handle extender 46B.

Although not shown in the drawing, handle extender 46A and handle extender 46B may each have a structure of two or more stages. Similarly, traction member 236A and traction member 236B may each have a structure of three or more stages.

FIG. 111 exemplarily shows a state in which handle 1 is slightly moved downward from carrier 3200 of FIG. 109, and movable member 20 is moved downward by the return force of restoration member 30 or by gravity and the return force of restoration member 30, and the pair of wheels 32A and 32B are folded toward the center as rod 26A and rod 26B are each rotated by a predetermined angle with their longitudinal directions as the axes of rotation.

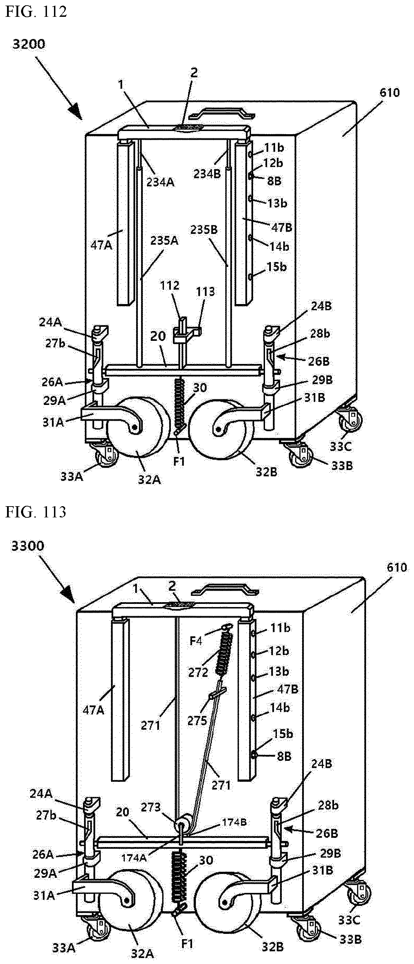

FIG. 112 exemplarily shows a state in which handle 1 is moved downward from carrier 3200 of FIG. 111, and traction member 236A and traction member 236B are each contracted to a predetermined length in the longitudinal direction or the vertical direction.

When handle 1 is moved up as shown in FIG. 109 from the state in which handle 1 is moved down as shown in FIG. 112, contracted traction member 236A and contracted traction member 236B are each extended or stretched, and movable member 20 is moved by being pulled upward by a predetermined distance, and restoration member 30 is stretched a predetermined length, and the pair of wheels 32A and 32B are opened and spread forward as rod 26A and rod 26B are each rotated by a predetermined angle with their longitudinal directions as the axes of rotation.

Referring to carrier 3200, the distance between the top of traction members 236A, 236B and movable member 20 may be increased or decreased.

(Referring to carrier 3200, the distance between the top of traction members 236A, 236B and the bottom of traction members 236A, 236B may be increased or decreased.)

When handle 1 is moved upward as in FIG. 109 from the state in which handle 1 is moved downward as in FIG. 112, contracted traction member 236A is extended or stretched, and the distance between the top of traction member 236A and movable member 20 or the distance between the top of traction member 236A and the bottom of traction member 236A is increased; conversely, when handle 1 is moved downward as shown in FIG. 112 from the state in which handle 1 is moved upward as shown in FIG. 109, traction member 236A is contracted and thus the distance between the top of traction member 236A and movable member 20 or the distance between the top of traction member 236A and the bottom of traction member 236A is decreased.

Similarly, when handle 1 is moved upward as in FIG. 109 from the state in which handle 1 is moved downward as in FIG. 112, contracted traction member 236B is extended or stretched and thus the distance between the top of traction member 236B and movable member 20 or the distance between the top of traction member 236B and the bottom of traction member 236B is increased; conversely, when handle 1 is moved downward as shown in FIG. 112 from the state in which handle 1 is moved upward as shown in FIG. 109, traction member 236B is contracted and thus the distance between the top of traction member 236B and movable member 20 or the distance between the top of traction member 236B and the bottom of traction member 236B is decreased.

### <Twenty-third embodiment>

FIG. 113 is a perspective view showing a rod rotation apparatus according to the twenty-third embodiment of the present invention and carrier 3300 including the apparatus.

Hereinafter, likewise, description of the content overlapping with the above-described embodiments will be omitted.

Upper structure 273 may be coupled to movable member 20.

Upper structure 273 may be coupled to movable member 20 by one or more arms 274A, 274B.

Preferably, upper structure 273 is positioned above movable member 20, but the present invention is not limited thereto.

Traction member 271 may move a predetermined distance via upper structure 273.

(Traction member 271 may move a predetermined distance via the lower part of upper structure 273.)

Preferably, upper structure 273 is rotatable like a roller so that traction member 271 may move more smoothly when moving via the lower part of upper structure 273, but the present invention is not limited thereto.

Movable member 20 and handle 1 are connected by traction member 271.

The top of traction member 271 is connected to handle 1, and a part below the top of traction member 271 is connected to upper structure 273, and thus a part below the top of traction member 271 is indirectly connected to movable member 20.

Traction member retracting spring 272 may be coupled to or installed on body 610.

The top of traction member 271 is connected to handle 1, and the lower portion of traction member 271 is connected to one side of traction member retracting spring 272 via upper structure 273, and the other side of traction member retracting spring 272 is connected to body 610.

(The other side of traction member retracting spring 272 is connected to body 610 with connection protrusion F4 interposed therebetween.)

The manner in which traction member retracting spring 272 is coupled to or installed on body 610 is exemplary, and the present invention is not limited thereto.

The manner in which traction member retracting spring 272 is coupled with traction member 271 is exemplary, and the present invention is not limited thereto.

Traction member retracting spring 272 may be a tension spring, but the present invention is not limited thereto.

Movable member 20 can be pulled a predetermined distance in a predetermined direction by traction member 271.

(Movable member 20 can be pulled upward by a predetermined distance by traction member 271.)

Referring to carrier 3300, the distance between the top of traction member 271 and movable member 20 may be increased or decreased.

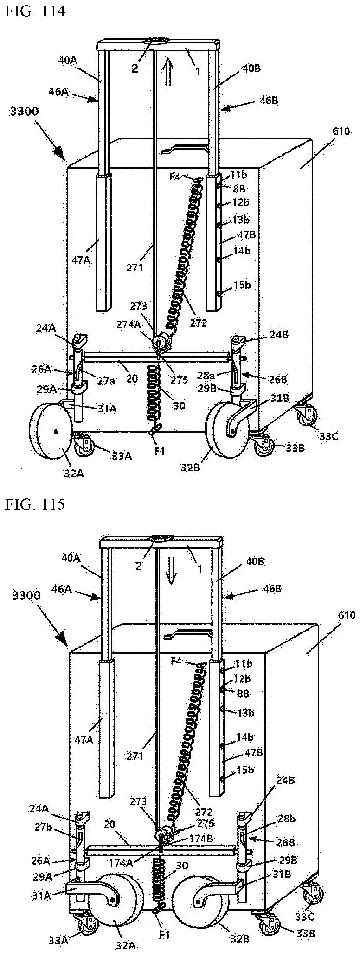

Referring to carrier 3300, when handle 1 is moved up as shown in FIG. 114 from the state in which handle 1 is moved down as shown in FIG. 113, the top of traction member 271 is moved upward following handle 1 and therefore the distance between the upper portion of traction member 271 and movable member 20 is increased; conversely when handle 1 is moved downward as shown in FIG. 113 from the state in which handle 1 is moved upward as shown in FIG. 114, the top of traction member 271 is moved downward and therefore the distance between the top of traction member 271 and movable member 20 is decreased, and a portion or one side of traction member 271 may be moved a predetermined distance via upper structure 273 by traction member retracting spring 272 in a predetermined direction.

When handle 1 is moved up as shown in FIG. 114 from the state in which handle 1 is moved downward and movable member 20 is moved downward as shown in FIG. 113, the top of traction member 271 is moved a predetermined distance upward following handle 1, and stopper 275 formed on traction member 271 is caught by arms 274A and 274B and therefore movable member 20 is moved by being pulled upward by a predetermined distance, and traction member retracting spring 272 is stretched a predetermined length.

When handle 1 is moved down as shown in FIG. 113 from the state in which handle 1 is moved upward and movable member 20 is moved upward as shown in FIG.114, traction member retracting spring 272 is contracted, and one side or the lower part of traction member 271 is pulled toward traction member retracting spring 272 or toward connection protrusion F4 by a predetermined distance, and movable member 20 is moved downward by the return force of restoration member 30 or by gravity and the return force of restoration member 30.

It is preferable to make the retracting force of traction member retracting spring 272 weaker than the return force of restoration member 30, but the present invention is not limited thereto.

FIG. 115 exemplarily shows a state in which handle 1 is slightly moved downward from carrier of FIG. 114 and thus movable member 20 is returned downward by the return force of restoration member 30 or by gravity and the return force of restoration member 30, and the pair of wheels 32A, 32B are folded toward the center.

### <Twenty-fourth embodiment>

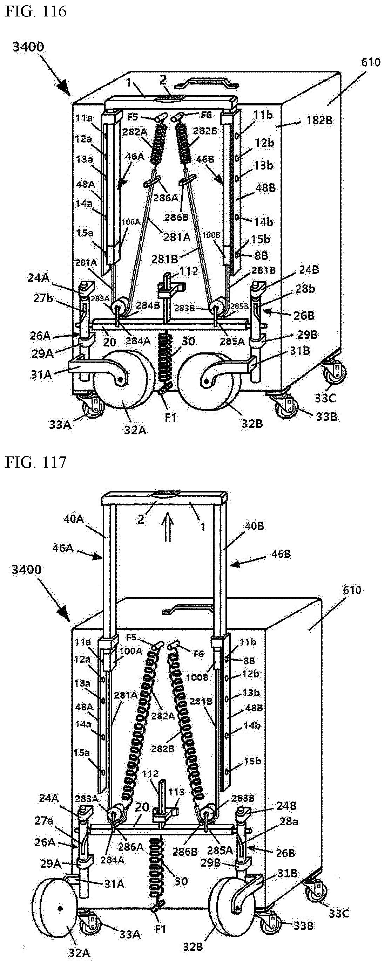

FIG. 116 is a perspective view showing a rod rotation apparatus according to the twenty-fourth embodiment of the present invention and carrier 3400 including the apparatus.

Hereinafter, likewise, description of the content overlapping with the above-described embodiments will be omitted.

Referring to carrier 3400, upper structure 283A and upper structure 283B may be positioned above movable member 20 and coupled with movable member 20.

Upper structure 283A may be coupled to movable member 20 by one or more arms 284A, 284B.

Similarly, upper structure 283B may be coupled to movable member 20 by one or more arms 285A, 285B.

Preferably, upper structure 283A and upper structure 283B are positioned above movable member 20, but the present invention is not limited thereto.

Traction member 281A may move a distance via upper structure 283A.

(Traction member 281A may move a distance via the lower part of upper structure 283A.)

Similarly, traction member 281B may move a predetermined distance via upper structure 283B.

(Traction member 281B may move a distance via the lower part of upper structure 283B.)

It is preferable to allow upper structure 283A to be rotatable like a roller so that traction member 281A may move more smoothly when moving a predetermined distance via the lower part of upper structure 283A, but the present invention is not limited thereto.

Similarly, it is preferable to allow upper structure 283B to be rotatable like a roller so that traction member 281B may move more smoothly when moving a predetermined distance via the lower part of upper structure 283B, but the present invention is not limited thereto.

Movable member 20 and handle extender 46A are connected by traction member 281A.

The top of traction member 281A is connected to handle extender 46A, and a part below the top of traction member 281A is connected to upper structure 283A and thus a part below the top of traction member 281A is indirectly connected to movable member 20.

Similarly, the top of traction member 281A is connected to handle extender 46A, and the lower part of traction member 281A is connected to one side of traction member retracting spring 282A via upper structure 283A, and the other side of traction member retracting spring 282A is connected to body 610 with connection protrusion F5 interposed therebetween.

Similarly, movable member 20 and handle extender 46B are connected by traction member 281B.

The top of traction member 281B is connected to handle extender 46B, and a part below the top of traction member 281B is connected to upper structure 283B and thus a part below the top of traction member 281B is indirectly connected to movable member 20.

Traction member retracting spring 282A and traction member retracting spring 282B may be coupled to or installed on body 610.

The top of traction member 281B is connected to handle extender 46B, and the lower part of traction member 281B is connected to one side of traction member retracting spring 282B via upper structure 283B, and the other side of traction member retracting spring 282B is connected to body 610 with connection protrusion F6 interposed therebetween.

The manner in which traction member retracting spring 282A and traction member retracting spring 282B are coupled to or installed on body 610 is exemplary, and the present invention is not limited thereto.

The manner in which traction member retracting spring 282A is coupled with traction member 281A is exemplary, and the present invention is not limited thereto.

Similarly, the manner in which traction member retracting spring 282B is coupled with traction member 281B is exemplary, and the present invention is not limited thereto.

Traction member retracting springs 282A, 282B may be tension springs, but the present invention is not limited thereto.

Movable member 20 may be pulled a predetermined distance in a predetermined direction by traction member 281A.

(Movable member 20 may be pulled upward by a predetermined distance by traction member 281A.)

Similarly, movable member 20 may be pulled a predetermined distance in a predetermined direction by traction member 281B.

(Movable member 20 may be pulled upward by a predetermined distance by traction member 281B.)

Referring to carrier 3400, the distance between the top of traction members 281A, 281B and movable member 20 may be increased or decreased.

Referring to carrier 3400, when handle 1 is moved up as shown in FIG. 117 from the state in which handle 1 is moved down as shown in FIG. 116, the top of traction member 281A and the top of traction member 281B are moved upward following handle extender 46A and handle extender 46B and therefore the distance between the top of traction member 281A and movable member 20 is increased, and similarly, the distance between the top of traction member 281B and movable member 20 is increased.

Still referring to carrier 3400, when handle 1 is moved downward as shown in FIG. 116 from the state in which handle 1 is moved upward as shown in FIG. 117, the top of traction member 281A is moved downward, and similarly, the top of traction member 281B is moved downward and thus the distance between the top of traction member 281A and movable member 20 is decreased, and similarly, the distance between the top of traction member 281B and movable member 20 is decreased, and a portion or one side of traction member 281A may be moved a predetermined distance in a predetermined direction by traction member retracting spring 282A via upper structure 283A, and similarly, a portion or one side of traction member 281B may be moved a predetermined distance in a predetermined direction by traction member retracting spring 282B via upper structure 283B.

When handle 1 is moved up as in FIG. 117 from the state in which handle 1 is moved downward and movable member 20 is moved downward as shown in FIG. 116, the top of traction member 281A moves upward following handle extender 46A, and stopper 286A formed on traction member 281A is caught by arms 284A and 284B and therefore movable member 20 is moved by being pulled upward by a predetermined distance, and traction member retracting spring 282A is stretched by a predetermined length.

Similarly, when handle 1 is moved up as in FIG. 117 from the state in which handle 1 is moved downward and movable member 20 is moved downward as shown in FIG. 116, the top of traction member 281B moves upward following handle extender 46B, and stopper 286B formed on traction member 281B is caught by arms 285A and 285B and therefore movable member 20 is moved by being pulled upward by a predetermined distance, and traction member retracting spring 282B is stretched by a predetermined length.

When handle 1 is moved down as in FIG. 116 from the state in which handle 1 is moved upward and movable member 20 is moved upward as in FIG. 117, traction member retracting spring 282A and traction member retracting spring 282B are each contracted, and the lower part or one side of traction member 281A is moved by being pulled a predetermined distance toward traction member retracting spring 282A or toward connection protrusion F5, and similarly, the lower part or one side of traction member 281B is moved by being pulled a predetermined distance toward traction member retracting spring 282B or toward connection protrusion F6, and movable member 20 is moved downward by a predetermined distance by the return force of restoration member 30 or by gravity and the return force of restoration member 30.

It is preferable to make the retracting force of traction member retracting springs 282A, 282B weaker than the return force of restoration member 30, but the present invention is not limited thereto.

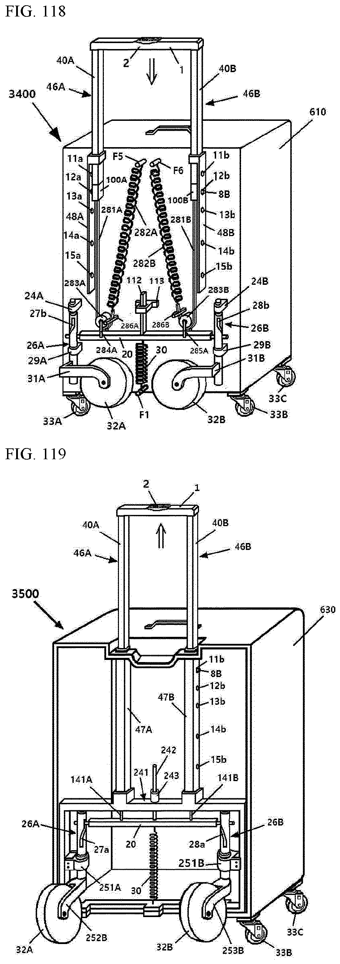

FIG. 118 exemplarily shows the state in which handle 1 is slightly moved downward from carrier of FIG. 117, and movable member 20 is returned downward by the return force of restoration member 30 or by gravity and the return force of restoration member 30, and the pair of wheels 32A, 32B are folded toward the center.

### <Twenty-fifth embodiment>

FIG. 119 is a perspective view showing a rod rotation apparatus according to the twenty-fifth embodiment of the present invention and carrier 3300 including the apparatus.

Hereinafter, likewise, description of the content overlapping with the above-described embodiments will be omitted.

Carrier 3500 of FIG. 119 is similar to carrier 2000 of FIG. 51, but rods 26A and 26B are each coupled to frame 241 included in body 630.

Carrier 3500 of FIG. 119 is similar to carrier 2000 of FIG. 51, but rods 26A and 26B are coupled to frame 241.

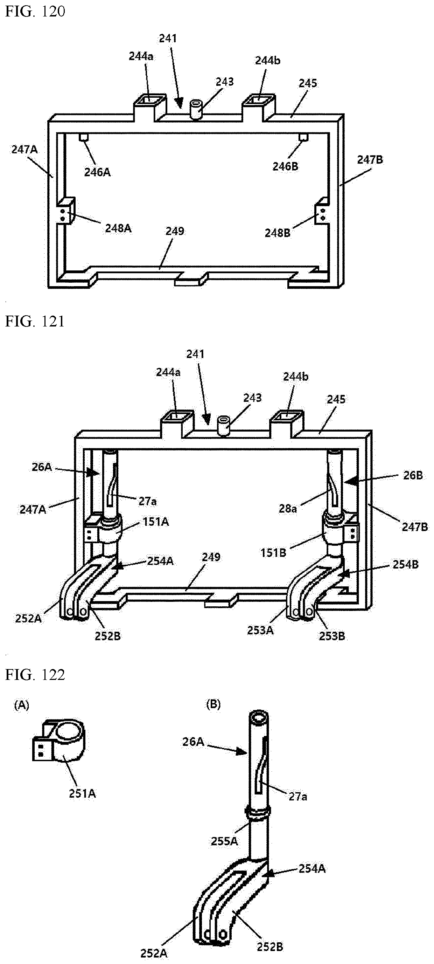

FIG. 120 shows the shape and structure of frame 241 separately.

Rods 26A and 26B may each be coupled to frame 241 so as to be rotatable with their longitudinal directions as the axes of rotation.

Rods 26A and 26B may each be coupled to body 630 so as to be rotatable with their longitudinal directions as the axes of rotation.

(Rod 26A and 26B may each be rotatably coupled to frame 241 included in body 630 with their longitudinal directions as the axes of rotation. Or rod 26A and rod 26B may each be rotatably coupled to frame 241 coupled to body 630 with their longitudinal directions as the axes of rotation such that rod 26A and rod 26B may be indirectly coupled to body 630.)

Frame 241 may include upper crosspiece 245, left column 247A, right column 247B, and lower crosspiece 249, but this is merely exemplary, and the present invention is not limited to the above configuration.

Upper crosspiece 245 is formed with guide member fitting holes 244a and 244b and sleeve 243.

Guide member 47A and guide member 47B are respectively inserted into guide member fitting hole 244a and guide member fitting hole 244b such that guide member 47A and guide member 47B may be combined with frame 241.

Balance bar 242 formed to extend upward from movable member 20 by a predetermined length is slidable up and down by a predetermined distance in the longitudinal direction through the inside of sleeve 243.

Upper crossbar 245 is formed with rod rotation axis protrusions 246A and 246B protruded downward from the lower part of upper crosspiece 245 by a predetermined length.

Rod rotation axis protrusion 246A is inserted into the upper inside of rod 26A such that the upper portion of rod 26A may be rotated a predetermined angle about rod rotation axis protrusion 246A.

Similarly, rod rotation axis protrusion 246B is inserted into the upper inside of rod 26B such that the upper portion of rod 26B may be rotated a predetermined angle about rod rotation axis protrusion 246B.

Left column 247A has sleeve bracket coupling protrusion 248A protruded to the right by a predetermined length, and right column 247B has sleeve bracket coupling protrusion 248B protruded to the left by a predetermined length.

Sleeve bracket 251A is coupled with sleeve bracket coupling protrusion 248A, and similarly, sleeve bracket 251B is coupled with sleeve bracket coupling protrusion 248B.

A portion of rod 26A is positioned inside sleeve bracket 251A and such that rod 26A may be rotated a predetermined angle with its longitudinal direction as the axis of rotation.

Similarly, a portion of rod 26B is positioned inside sleeve bracket 251B such that rod 26B may be rotated a predetermined angle with its longitudinal direction as the axis of rotation.

A part of lower crosspiece 249 is backed away by a predetermined distance to accommodate wheels 32A and 32B when they are folded toward the center.

The shape and structure of frame 241 is exemplary, and the present invention is not limited thereto.

FIG. 121 shows a state in which rod 26A and rod 26B are coupled to frame 241.

The manner in which rods 26A and 26B are each coupled to frame 241 or coupled to frame 241 included in body 630 so as to be rotatable by a predetermined angle with their longitudinal directions as the axes of rotation is exemplary, and the present invention is not limited thereto.

Wheel bracket 254A may be attached to rod 26A, and similarly, wheel bracket 254B may be attached to rod 26B.

Wheel bracket 254A includes first prong 252A and second prong 252B.

Wheel bracket 254B includes first prong 253B and second prong 253A.

Wheels 32A and 32B may be connected to rods 26A and 26B, respectively.

Wheel 32A may be rotatably coupled between first prong 252A and second prong 252B.

Similarly, wheel 32B may be rotatably coupled between first prong 253B and second prong 253A.

FIG. 122 (A) shows the shape of sleeve bracket 251A coupled with sleeve bracket coupling protrusion 248A separately.

FIG. 122 (B) separately shows the shape of rod 26A coupled with left column 247A; wheel bracket 254A is attached to rod 26A.

Rod 26B is formed with circumferential protrusion 255A.

When a portion of the under side of circumferential protrusion 255A of rod 26A is positioned inside sleeve bracket 251A, circumferential protrusion 255A is caught at the upper portion of sleeve bracket 251A, thereby reventing rod 26A from further descending.

Rod 26B is likewise formed with a circumferential protrusion.

Referring to carrier 3500 of FIG. 119, traction members 141A and 141B are connected between movable member 20 and handle extender 46A and 46B.

As in the manner in which the upper side of traction member 141A and the upper side of traction member 141B included in carrier 2000 of FIG. 51 are connected to first-stage extender 40A and first-stage extender 40B, the upper side of traction member 141A included in carrier 3500 of FIG. 119 is connected to first-stage extender 40A through the inside of guide member 47A and through height adjustment protrusion housing passage 145A, and similarly, the upper side of traction member 141B is connected to first-stage extender 40B through the inside of guide member 47B and through height adjustment protrusion housing passage 145A.

Movable member 20 may be pulled a predetermined distance in a predetermined direction by one or more traction members 141A and 141B.

(Movable member 20 may be pulled upward by a predetermined distance by one or more traction members 141A and 141B.)

Restoration member 30 may be coupled to or installed on body 630 or frame 241.

One side of restoration member 30 may be connected to movable member 20, and the other side may be connected to body 630 or lower crosspiece 249.

The manner in which restoration member 30 is coupled to or installed on body 630 or frame 241 is exemplary, and the present invention is not limited thereto.

Carrier 3500 in FIG. 119 shows a state in which handle 1 is moved upward and the pair of wheels 32A and 32B are opened and spread forward.

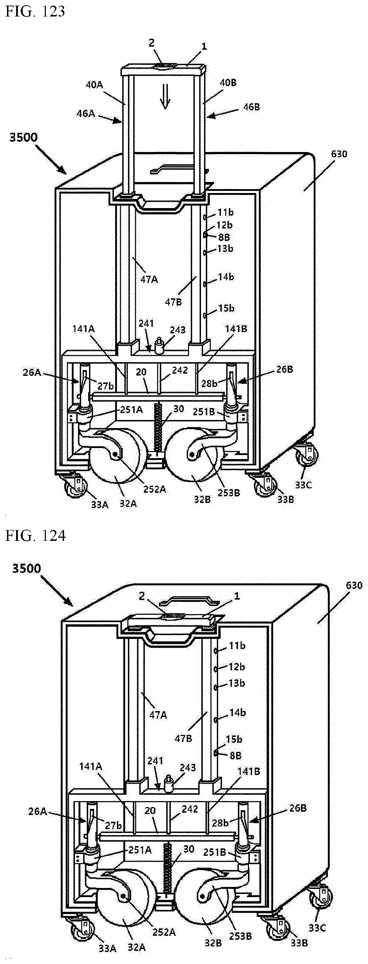

FIG. 123 shows a state in which handle 1 is slightly moved downward from carrier 3500 of FIG. 119, and movable member 20 is moved downward by the return force of restoration member 30 or by gravity and the return force of restoration member 30, and the pair of wheels 32A and 32B are folded toward the center as rod 26A and rod 26B are each rotated by a predetermined angle with their longitudinal directions as the axes of rotation.

FIG. 124 illustrates a state in which handle 1 is moved downward from carrier 3500 of FIG. 123.

When handle 1 is moved high in the upward direction as shown in FIG. 119 from the state in which movable member 20 is moved downward and the pair of wheels 32A and 32B are folded toward the center as in FIG. 123 or 124, movable member 20 is moved by being pulled upward by a predetermined distance by traction members 141A and 141B, and the pair of wheels 32A and 32B are opened and spread forward as rod 26A and rod 26B are each rotated by a predetermined angle with their longitudinal directions as the axes of rotation.

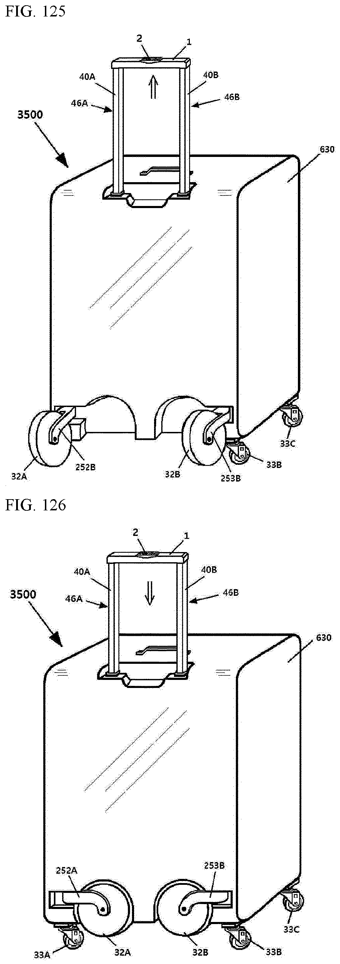

FIGS. 125 to 127 exemplarily show a state in which rods 26A and 26B, guide members 47A and 47B, frame 241, etc. included in carrier 3500 of FIGS. 119, 123, and 124 are covered by the front surface of body 630.

### <Twenty sixth embodiment>

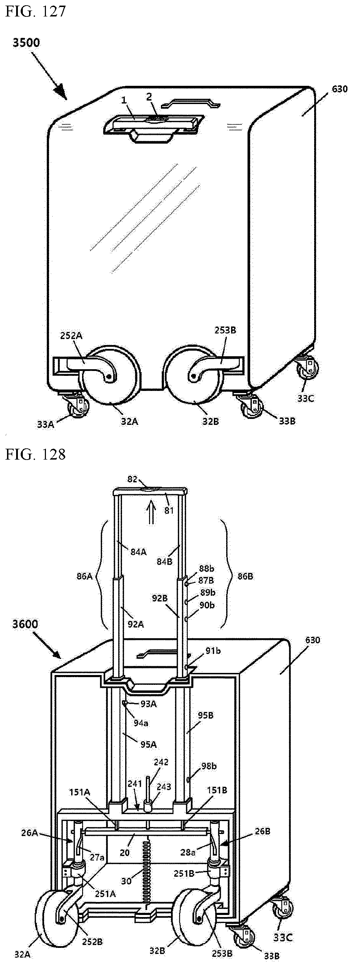

FIG. 128 is a perspective view showing a rod rotation apparatus according to the twenty sixth embodiment of the present invention and carrier 3400 including the apparatus.

Hereinafter, likewise, description of the content overlapping with the above-described embodiments will be omitted.

Carrier 3600 in FIG. 128 is similar to carrier 3500 in FIG. 119, but handle extender 86A and handle extender 86B each have a two-stage structure in a telescopic manner.

Referring to carrier 3400 of FIG. 128, traction member 159A as shown in FIG. 56 (A) is connected between movable member 20 and handle extender 86A, and similarly, traction member 159B as shown in FIG. 56 (B) is connected between movable member 20 and handle extender 86B.

(Referring to carrier 3400 of FIG. 122, movable member 20 and handle extender 86A may be connected by traction member 159A ' as shown in FIG. 63 (A), and similarly, movable member 20 and handle extender 86B may be connected by traction member 159B ' as shown in FIG. 63 (B).)

The upper side of traction member 159A included in carrier 3600 of FIG. 128 may be connected to second-stage extender 84A through the inside of guide member 95A, the inside of first-stage extender 92A, and height adjustment protrusion housing passages 157A and 158A as shown in FIG. 58.

Similarly, the upper side of traction member 159B included in carrier 3600 of FIG. 128 may be connected to second-stage extender 84B through the inside of guide member 95B, the inside of first-stage extender 92B, and height adjustment protrusion housing passages 157B and 158B as shown in FIG. 58.

Movable member 20 may be pulled a predetermined distance in a predetermined direction by one or more traction members 159A, 159B.

(Movable member 20 may be pulled upward by a predetermined distance by one or more traction members 159A, 159B.)

Carrier 3600 of FIG. 128 shows a state in which handle 81 is moved upward and the pair of wheels 32A and 32B are opened and spread forward.

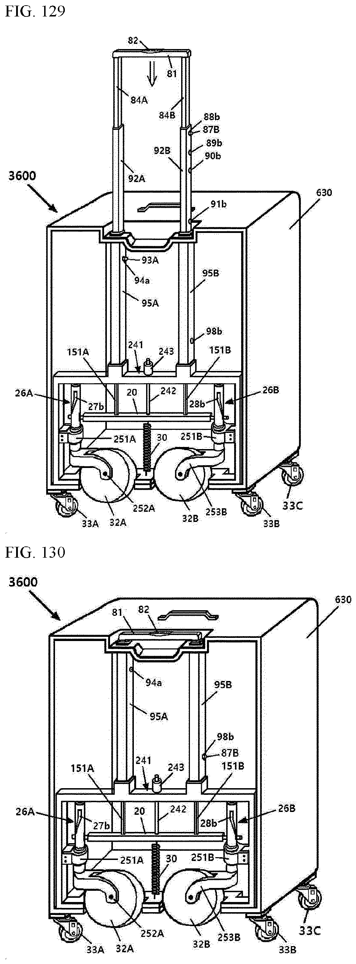

FIG. 129 shows a state in which handle 81 is slightly moved downward from carrier 3600 of FIG. 128 and movable member 20 is moved down by the return force of restoration member 30 or by gravity and the return force of restoration member 30, and the pair of wheels 32A and 32B are folded toward the center as rod 26A and rod 26B are each rotated by a predetermined angle with their longitudinal directions as the axes of rotation.

FIG. 130 illustrates a state in which handle 81 is moved downward from carrier 3400 of FIG. 129.

When handle 81 is moved upward high as shown in FIG. 128 from the state in which movable member 20 is moved down and the pair of wheels 32A and 32B are folded toward the center as shown in FIG. 129 or 130, movable member 20 is moved by being pulled upward by a predetermined distance by traction members 159A, 159B, and the pair of wheels 32A and 32B are opened and spread forward as rod 26A and rod 26B are each rotated by a predetermined angle with their longitudinal directions as the axes of rotation.

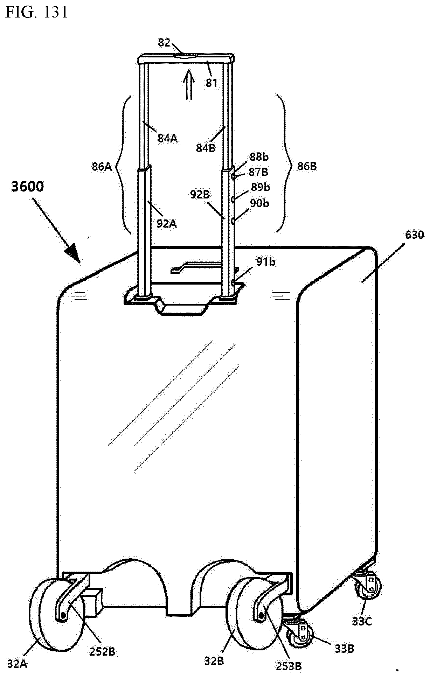

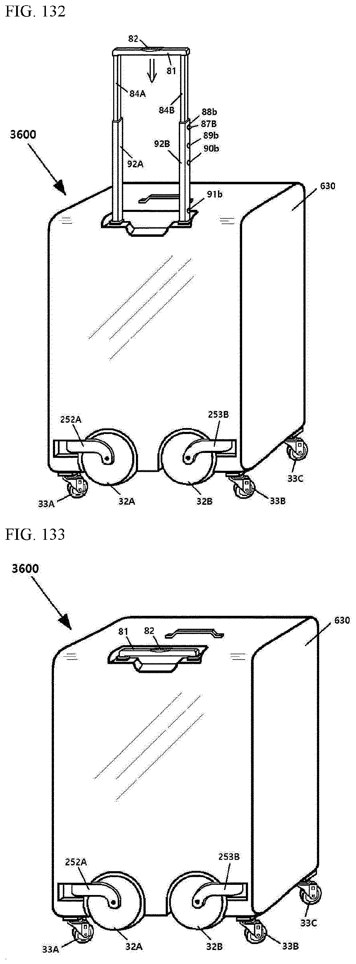

FIGS. 131 to 133 exemplarily show a state in which rods 26A and 26B, guide members 95A and 95B, frame 241, etc. included in carrier 3600 of FIGS. 128 to 130 are covered by the front surface of body 630.

Referring to the rod rotation apparatus according to the first to twenty sixth embodiments of the present invention and carriers 1100 to 3600 including the apparatus described above, the distance between movable members 20, 20A, 20B, 20C, 20D; 54; 161A, 161B; 197; 204 and first-stage extenders 3A, 3B; 40A, 40B; 92A, 92B may increase or decrease.

Referring to rod rotation apparatus according to the first to twenty sixth embodiments of the present invention and carriers 1100 to 3600 including the apparatus described above, the distance between movable members 20, 20A, 20B, 20C, 20D; 54; 161A, 161B; 197; 204 and first-stage extenders 3A, 3B; 40A, 40B; 92A, 92B may be increased as first-stage extenders 3A, 3B; 40A, 40B; 92A, 92B are moved upward; on the contrary, the distance between movable members 20, 20A, 20B, 20C, 20D; 54; 161A, 161B; 197; 204 and first-stage extenders 3A, 3B; 40A, 40B; 92A, 92B may be decreased as first-stage extenders 3A, 3B; 40A, 40B; 92A, 92B are moved downward from the state moved upward, but the present invention is not limited thereto.

Referring to the rod rotation apparatus according to the first to twenty sixth embodiments of the present invention and carriers 1100 to 3600 including the apparatus described above, first-stage extender 3A, 3B; 40A, 40B; 92A, 92B may be movable by a predetermined distance in the upward direction independently of movable member 20, 20A, 20B, 20C, 20D; 54; 161A, 161B; 197; 204, but the present invention is not limited thereto.

Referring to rod rotation apparatus according to the first to twenty sixth embodiments of the present invention and carriers 1100 to 3600 including the apparatus described above, first-stage extenders 3A, 3B; 40A, 40B; 92A, 92B may be movable upward of 5 cm or more, or 10 cm or more, or 20 cm or more independently of movable members 20, 20A, 20B, 20C, 20D; 54; 161A, 161B; 197; 204, but the present invention is not limited thereto.

Referring to the rod rotation apparatus according to the first to 26th embodiments of the present invention and carriers 1100 to 3600 including the apparatus described above, movable members 20, 20A, 20B, 20C, 20D; 54; 161A, 161B; 197; 204 may not move even if first-stage extenders 3A, 3B; 40A, 40B; 92A, 92B are moved to a predetermined height in the upward direction, but when first extenders 3A, 3B; 40A, 40B; 92A, 92B are moved higher than the predetermined height in the upward direction, movable members 20, 20A, 20B, 20C, 20D; 54; 161A, 161B; 197; 204 may be moved by being pulled a predetermined distance upward or downward by traction members 16A, 16B; 45; 69; 83; 101; 111A, 111B; 141A, 141B ; 159A, 159B; 159A ', 159B'; 236A, 236B; 271; 281A, 281B, but the present invention is not limited thereto.

Referring to rod rotation apparatus according to the third to sixth embodiments, the twenty-second embodiment, and the twenty-third embodiments of the present invention and carriers 1300 to 1600, 3200, and 3300 including the apparatus described above, traction members 45, 69, 83, 101, 236A, 236B, 271 are connected between movable members 20, 54 and handles 1, 81, but movable members 20, 54 and first-stage extenders 40A, 40B; 92A, 92B are formed separately from each other, but this is exemplary, and the present invention is not limited thereto.

In the above-described embodiments of the present invention, although not shown in the drawings, swivel casters may be coupled to rods 26A, 26B; 55A, 55B; 76A, 76B; 164A, 164B; 191A, 191B; 201A, 201B, respectively, instead of wheel brackets 31A, 31B,

The present invention is not limited to the above-described embodiments, and it is possible to implement various modifications within the scope of the claims, the detailed description of the invention, and the accompanying drawings, and this also falls within the scope of the present invention.

### < Description of major reference numerals>

first helixes : 27a, 27b, 28a, 28b; 56A, 56B, 57A, 57B; 77a, 77b, 78a, 78b
second helixes : 195a, 196a; 206A, 206B, 207A, 207B
first helix coupling portions : 19A, 19B; 22A, 22B, 23A, 23B; 59A, 59B, 60A, 60B; 162A, 162B, 163A, 163B
second helix coupling portions: 192A, 192B, 193A, 193B; 203A, 203B
rods: 26A, 26B; 55A, 55B; 76A, 76B; 164A, 164B; 191A, 191B; 201A,
movable members: 20, 20A, 20B, 20C, 20D; 54; 161A, 161B; 197; 204
first-stage extenders: 3A, 3B; 40A, 40B; 92A, 92B
second-stage extenders: 84A, 84B
handle extenders: 5A, 5B; 46A, 46B; 86A, 86B
handles: 1, 81, 221
huide members: 6A, 6B; 48A, 48B; 47A, 47B; 95A, 95B
height adjustment holes: 11b, 12b, 13b, 14b, 15b; 88b, 89b, 90b, 91b; 94a, 98b
height adjustment protrusions: 8A, 8B; 87A, 87B; 93A, 93B
traction members: 16A, 16B; 45; 69; 83; 101; 111A, 111B; 141A, 141B; 159A, 159B; 159A', 159B'; 236A, 236B; 271; 281A, 281B
first-stage members: 43; 67; 71; 151A, 151B; 151A', 151B'; 235A, 235B
second-stage members: 38; 66; 70; 152A, 152B; 152A', 152B'; 234A, 234B
third-stage member: 65
traction member housings: 102; 114A, 114B
restoration members: 30; 44; 44A, 44B; 134; 175A, 175B; 265
wheels: 32A, 32B
first direction-changing members: 80; 80A, 80B
second direction-changing members: 79; 79A, 79B
cylinder: 261
piston: 264
height adjustment protrusion housings: 100A, 100B; 126A, 126B; 133A, 133B; 142A, 142B; 154A, 154B; 155A, 155B
height adjustment protrusion housing passages: 131A, 131B, 145A, 145B, 157A, 157B, 158A, 158B
traction member upper protrusions: 146A, 146B; 153A, 153A
height adjustment protrusion moving buttons: 129A, 129B; 160A, 160B
frame: 241
bodies: 600, 610, 620, 630
ledge: 231
caster wheels: 33A, 33B, 33C
upper structure: 273, 283A, 283B
traction member retracting spring: 272; 282A, 282B

## Claims

1. A rod rotation apparatus comprising:
a rod having at least one first helix or at least one second helix coupling portion;
a movable member having at least one first helix coupling portion or at least one second helix coupled with the at least one first helix or the at least one second helix coupling portion;
a body to which rod is rotatably coupled by a predetermined angle about its longitudinal direction;
a guide member coupled to the body;
a handle extender comprising one or more stages, including a first-stage extender movable up and down a predetermined distance along the guide member or along the inside of the guide member;
a handle coupled to the top of the handle extender;
a traction member connected between the movable member and the handle or between the movable member and the handle extender;
and a restoration member coupled to or installed on the body;
wherein the distance between the movable member and the first-stage extender may be increased as the first-stage extender is moved upward; the distance between the movable member and the first-stage extender may be decreased as the first-stage extender is moved downward from the upwardly moved state; when the handle is moved upward by a predetermined distance or more, the movable member is moved a predetermined distance by being pulled in the upward or downward direction by the traction member such that the rod is rotated a predetermined angle in one direction about its longitudinal direction; when the handle is moved downward from the upwardly moved state, the movable member is returned downward or upward by the return force of the restoration member or, by gravity and the return force of the restoration member such that the rod is rotated by a predetermined angle about its longitudinal direction in the opposite direction of the one direction.

2. The apparatus of claim 1, wherein a first direction-changing member is coupled to or installed on the body; the traction member is moved a predetermined distance via the first direction-changing member when the movable member is moved by being pulled a predetermined distance downward by the traction member or when the movable member is returned upward by the return force of the restoration member.

3. A rod rotation apparatus comprising:
a rod having at least one first helix or at least one second helix coupling portion;
a movable member having at least one first helix coupling portion or at least one second helix coupled with the at least one first helix or the at least one second helix coupling portion;
a body to which the rod is rotatably coupled by a predetermined angle about its longitudinal direction;
a guide member coupled to the body;
a handle extender comprising one or more stages, including a first-stage extender movable up and down a predetermined distance along the guide member or along the inside of the guide member;
a handle coupled to the top of the handle extender;
and a traction member connected between the movable member and the handle or between the movable member and the handle extender;
wherein the rod rotates by a predetermined angle in one direction or in the opposite direction of the one direction about the longitudinal direction of the rod as the movable member is moved upward or downward;
the distance between the movable member and the first-stage extender may be increased as the first-stage extender is moved upward; the distance between the movable member and the first-stage extender may be decreased as the first-stage extender is moved downward from the upwardly moved state; when the handle is moved a predetermined distance or more in the upward direction, the movable member is pulled upward or downward by a predetermined distance by the traction member; when the handle is moved downward from the upwardly moved state, the distance between the top of the traction member and the movable member is decreased or the distance between the top of the traction member and the bottom of the first-stage extender is increased.

4. The apparatus of claim 3, wherein a traction member housing is attached to the movable member; the top of the traction member is connected to the handle or the handle extender; when the handle is moved downward from the upwardly moved state, the distance between the top of the traction member and the movable member is decreased, and the lower part of the traction member can be rewound a predetermined length within the traction member housing.

5. The apparatus of claim 3, wherein an upper structure is coupled to the movable member; a traction member retracting spring is coupled to or installed on the body; the top of the traction member is connected to the handle or the handle extender; when the handle is moved downward from the upwardly moved state, the distance between the top of the traction member and the movable member is decreased, and a part or one side of the traction member may be moved a predetermined distance by the traction member retracting spring via the upper structure.

6. The apparatus of claim 3, wherein the bottom of the traction member is connected to the movable member, and the top of the traction member is connected to the handle; when the handle is moved downward from the upwardly moved state, the distance between the top of the traction member and the bottom of the traction member is decreased.

7. The apparatus of claim 6, wherein the movable member and the first-stage extender are formed separately from each other.

8. The apparatus of claim 7, wherein the traction member is folded in two or more stages including a first-stage member and a second-stage member.

9. The apparatus of claim 3, wherein the traction member is connected between the movable member and the first-stage extender; the handle extender is formed in one stage including the first-stage extender; a height adjustment protrusion housing with a height adjustment protrusion housing passage is attached to the first-stage extender; the traction member is provided with a traction member upper protrusion; when the handle is moved downward from the upwardly moved state, the inside of the height adjustment protrusion housing passage is moved downward along the traction member, and the distance between the top of the traction member and the bottom of the first-stage extender increases such that the distance between the traction member upper protrusion and the height adjustment protrusion housing is increased.

10. The apparatus of claim 3, wherein a restoration member is coupled to or installed on the body; when the handle is moved upward a predetermined distance or more, the movable member is moved by being pulled a predetermined distance upward by the traction member such that the rod is rotated by a predetermined angle in one direction about its longitudinal direction; when the handle is moved downward from the upwardly moved state, the movable member is returned downward by the return force of the restoration member or by gravity and the return force of the restoration member such that the rod is rotated a predetermined angle in the direction opposite to the one direction about its longitudinal direction.

11. The apparatus of claim 3, wherein a restoration member and a first direction-changing member are coupled to or installed on the body;
when the handle is moved upward a predetermined distance or more, the movable member is moved by being pulled a predetermined distance downward via the first direction-changing member by the traction member such that the rod is rotated a predetermined angle in one direction about its longitudinal direction;
when the handle is moved downward from the upwardly moved state, the movable member is returned upward via the first direction-changing member by the return force of the restoration member such that the rod is rotated a predetermined angle in the direction opposite to the one direction about its longitudinal direction.

12. The apparatus of any one of claims 1, 10, and 11, wherein the restoration member is an elastic member or a material positioned inside a cylinder to which a piston is coupled.

13. A rod rotation apparatus comprising:
a rod having at least one first helix or at least one second helix coupling portion;
a movable member having at least one first helix coupling portion or at least one second helix coupled with the at least one first helix or the at least one second helix coupling portion;
a handle extender comprising one or more stages, including a first-stage extender to which a height adjustment protrusion housing with a height adjustment protrusion housing passage is attached;
and a traction member that can pull the movable member a predetermined distance in a predetermined direction;
wherein the traction member is connected between the movable member and the handle extender through the height adjustment protrusion housing passage.

14. The apparatus of claim 13, wherein the traction member may move a predetermined distance through the height adjustment protrusion housing passage, or the inside of the height adjustment protrusion housing passage may move a predetermined distance along the traction member.

15. The apparatus of claim 13, wherein the handle extender includes a second-stage extender, and the second-stage extender is positioned on the first-stage extender such that the first-stage extender and the second-stage extender are telescopically connected and thus the handle extender is foldable in two stages;
the traction member is connected between the movable member and the second-stage extender through the height adjustment protrusion housing passageway formed in the height adjustment protrusion housing attached to the first-stage extender and through the inside of the first-stage extender.

16. The apparatus of claim 13, wherein the handle extender includes a second-stage extender to which a height adjustment protrusion housing with a height adjustment protrusion housing passage is attached;
the second-stage extender is positioned on the first-stage extender, and the first-stage extender and the second-stage extender are telescopically connected such that the handle extender is foldable in two stages;
the traction member is connected between the movable member and the second-stage extender through the height adjustment protrusion housing passageway formed in the height adjustment protrusion housing attached to the first-stage extender and through the height adjustment protrusion housing passageway formed in the height adjustment protrusion housing attached to the second-stage extender.

17. The apparatus of claim 9 or 13, wherein a height adjustment protrusion is coupled to the height adjustment protrusion housing attached to the first-stage extender.

18. The apparatus of claim 17, wherein a height adjustment protrusion moving button is further coupled to the height adjustment protrusion housing attached to the first-stage extender.

19. A rod rotation apparatus comprising:
a rod having at least one first helix or at least one second helix coupling portion;
a movable member having at least one first helix coupling portion or at least one second helix coupled with the at least one first helix or the at least one second helix coupling portion;
a handle extender comprising first-stage extender and second-stage extender; and
a traction member connected between the movable member and the handle extender to pull the movable member by a predetermined distance in a predetermined direction;
wherein the second-stage extender is positioned on the first-stage extender such that the first-stage extender and the second-stage extender are telescopically connected such that the handle extender is foldable in two stages;
and the traction member is connected between the movable member and the second-stage extender through the inside of the first-stage extender.

20. The apparatus of any one of claims 1, 3, 13, and 19, wherein when the rod is rotated by a predetermined angle in one direction about its longitudinal direction or when rotated by a predetermined angle in the opposite direction of the one direction as the movable member is moved upward or downward, each rotation angle is 80 to 100 degrees.

21. The apparatus of any one of claims 1, 3, 13, and 19, wherein at least one wheel is connected to the rod.

22. The apparatus of claim 13 or 19, wherein further comprising a body, and the rod is coupled to the body so as to be able to rotate a predetermined angle about its longitudinal direction.

23. The apparatus of claim 22, wherein further comprising a guide member coupled to the body,
and the first-stage extender is movable up and down a predetermined distance along the guide member or along the inside of the guide member.

24. The apparatus of any one of claims 1, 3, and 23, wherein the body may be any one of a bag, a suitcase, a trunk, a piece of luggage, and a golf bag, or a ledge is coupled to the body so that the body and the ledge may form an uppercase L shape of the English alphabet as a whole.

25. The apparatus of claim 24, wherein a plurality of caster wheels are attached to the bottom surface of the body.

26. The apparatus of any one of claims 1, 3, and 23, wherein another rod having at least one first helix or at least one second helix coupling portion is further coupled to the body so as to be rotatable by a predetermined angle about its longitudinal direction,
and the other side of the movable member has at least one first helix coupling portion or at least one second helix coupled with the at least one first helix or the at least one second helix formed on the other rod,
and the rod and the other rod are connected to each other by the movable member, and the rod and the other rod are each rotated by a predetermined angle about their longitudinal directions as the movable member is moved upward or downward.

27. The apparatus of any one of claims 1, 3, 13, and 19, wherein the first helix and the second helix are formed as grooves or slits or embossed.
